(19) **Europäisches Patentamt**
**European Patent Office**
**Office européen des brevets**

(11) **EP 4 471 671 B1**

(12) **EUROPEAN PATENT SPECIFICATION**

(45) Date of publication and mention
of the grant of the patent:
**22.04.2026 Bulletin 2026/17**

(21) Application number: **24179340.5**

(22) Date of filing: **31.05.2024**

(51) International Patent Classification (IPC):
*G06N 3/0495* $^{(2023.01)}$    *G06N 3/048* $^{(2023.01)}$
*G06N 3/0464* $^{(2023.01)}$    *G06N 3/082* $^{(2023.01)}$

(52) Cooperative Patent Classification (CPC):
**G06N 3/082; G06N 3/0464; G06N 3/048;
G06N 3/0495**

(54) **COMPUTER IMPLEMENTED METHOD AND PROCESSING SYSTEM FOR COMPRESSING A
NEURAL NETWORK**

COMPUTERIMPLEMENTIERTES VERFAHREN UND VERARBEITUNGSSYSTEM ZUR
KOMPRIMIERUNG EINES NEURONALEN NETZES

PROCÉDÉ MIS EN OEUVRE PAR ORDINATEUR ET SYSTÈME DE TRAITEMENT POUR
COMPRESSER UN RÉSEAU NEURONAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.05.2023 GB 202308120**

(43) Date of publication of application:
**04.12.2024 Bulletin 2024/49**

(73) Proprietor: **Imagination Technologies Limited
Kings Langley, Hertfordshire WD4 8LZ (GB)**

(72) Inventors:
• **Demirci, Gunduz Vehbi
Kings Langley, WD4 8LZ (GB)**

• **Dikici, Cagatay
Kings Langley, WD4 8LZ (GB)**

(74) Representative: **Slingsby Partners LLP
1 Kingsway
London WC2B 6AN (GB)**

(56) References cited:
• **MENGDI WANG ET AL: "Graph-Adaptive Pruning
for Efficient Inference of Convolutional Neural
Networks", ARXIV.ORG, CORNELL UNIVERSITY
LIBRARY, 201 OLIN LIBRARY CORNELL
UNIVERSITY ITHACA, NY 14853, 21 November
2018 (2018-11-21), XP080937384**

**Description**

CROSS-REFERENCE TO RELATED APPLICATION

This application claims priority from UK patent application GB 2308120.1 filed on 31 May 2023.

TECHNICAL FIELD

The present disclosure is directed to methods of, and processing systems for, compressing a neural network.

BACKGROUND

A neural network (NN) is a form of artificial network comprising a plurality of layers (e.g. "interconnected layers") that can be used for machine learning applications. In particular, a neural network can be used to perform signal processing applications, including, but not limited to, image processing.

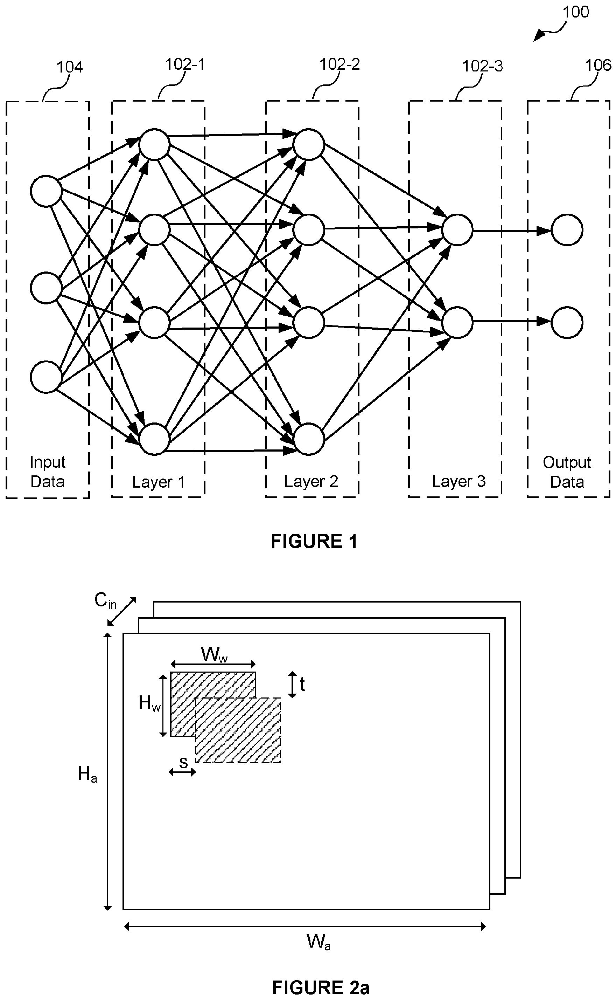

Figure 1 illustrates an example neural network 100 that comprises a plurality of layers 102-1, 102-2, 102-3. The plurality of layers 102-1, 102-2, 102-3 are arranged in a sequence. Each layer 102-1, 102-2, 102-3 receives a set of input activation values. The set of input activation values received by a layer may be referred to as input activation data of that layer. Each layer 102-1, 102-2, 102-3 processes its respective received input activation data by performing an operation in accordance with that layer to produce output data. The output data is either provided to a subsequent layer as the input activation data of that layer (e.g. the output data is "output activation data") or is output as the final output data of the neural network. For example, in the neural network 100, the first layer 102-1 receives the input activation data 104 originally input to the neural network 100 and processes that input activation data by performing a first operation in accordance with the first layer 102-1 to produce output activation data. The output activation data of the first layer 102-1 becomes the input activation data to the second, subsequent, layer 102-2 which processes that input activation data by performing a second operation in accordance with the second layer 102-2 to produce output activation data. The output activation data of the second layer 102-2 becomes the input activation data to the third, subsequent, layer 102-3 which processes that input activation data by performing a third operation in accordance with the third layer 102-3 to produce output data. The output data of the third layer 102-3 is output as the output data 106 of the neural network.

Each layer of a neural network may be one of a plurality of different types. The type of operation that is performed on the input activation data of a layer depends on the type of layer. Fully-connected layers (sometimes referred to as dense layers or linear layers), convolution layers, add layers, flatten layers, pooling layers and activation layers (such as rectified linear activation unit (ReLu) layers) are example types of neural network layer. It will be evident to a person of skill in the art that this is not an exhaustive list of example neural network layer types.

Certain types of neural network layer perform operations on the sets of input activation values received by those layers using sets of coefficients associated with those layers. Fully-connected layers and convolution layers are examples of layer types that use sets of coefficients in this way.

In a fully-connected layer, a fully-connected operation can be performed by performing matrix multiplication between a coefficient matrix comprising a set of coefficients of that fully-connected layer and an input matrix comprising a set of input activation values received by that fully-connected layer. The purpose of a fully-connected layer is to cause a dimensional change between the activation data set input to that layer and the activation data set output from that layer. A coefficient matrix comprising the set of coefficients of that fully-connected layer may have dimensions $C_{out} \times C_{in}$. That is, the number of rows of the matrix may be representative of the number of output channels ("$C_{out}$") of that fully-connected layer and the number of columns of the matrix may be representative of the number of input channels ("$C_{in}$") of that fully-connected layer. In a fully-connected layer, a matrix multiplication $WX = Y$ can be performed where: $W$ is the coefficient matrix comprising a set of coefficients and having dimensions $C_{out} \times C_{in}$; $X$ is the input matrix comprising a set of input activation values and having dimensions $M \times N$, where $C_{in} = M$; and $Y$ is an output matrix comprising a set of output values and having dimensions $C_{out} \times N$. Alternatively, a coefficient matrix comprising the set of coefficients of that fully-connected layer may have dimensions $C_{in} \times C_{out}$. That is, the number of rows of the matrix may be representative of the number of input channels ("$C_{in}$") of that fully-connected layer and the number of columns of the matrix may be representative of the number of output channels ("$C_{out}$") of that fully-connected layer. In this alternative, in a fully-connected layer, a matrix multiplication $XW = Y$ can be performed where: $X$ is the input matrix comprising a set of input activation values and having dimensions $M \times N$; $W$ is the coefficient matrix comprising a set of coefficients and having dimensions $C_{in} \times C_{out}$, where $C_{in} = N$; and $Y$ is an output matrix comprising a set of output values and having dimensions $M \times C_{out}$. A matrix multiplication involves performing a number of element-wise multiplications between coefficients of the coefficient matrix and activation values of the input matrix. The results of said element-wise multiplications can be summed (e.g. accumulated) so as to form the output data values of the output matrix. It will be evident to a person of skill in the art that other types of neural network layer also perform matrix multiplication using a coefficient matrix comprising a set of coefficients.

In a convolution layer, a convolution operation is performed using a set of input activation values received by that convolution layer and a set of coefficients of that convolution layer. Figure 2a shows the data structure used in an example convolution layer. In Figure 2a, the input activation data of a convolution layer may have the dimensions $C_{in} \times H_a \times W_a$. In other words, the input activation data may be arranged as $C_{in}$ input channels, where each input channel has a spatial dimension $H_a \times W_a$ - where $H_a$ and $W_a$ are, respectively, height and width dimensions. In Figure 2a, the input activation data is shown comprising three input channels (i.e. $C_{in}$ = 3). The set of coefficients of a convolution layer can be arranged in one or more input channels and one or more output channels. An output channel may alternatively be referred to as a filter. In Figure 2a, the set of coefficients have dimensions $C_{out} \times C_{in} \times H_w \times W_w$. The number of input channels in the set of coefficients of a convolution layer corresponds to (e.g. is equal to) the number of input channels in the input activation data with which that set of coefficients is to be convolved (e.g. in the example shown in Figure 2a, $C_{in}$ = 3). Each input channel of each filter of the set of coefficients input to a convolution layer has a spatial dimension $H_w \times W_w$ - where $H_w$ and $W_w$ are, respectively, height and width dimensions. Each input channel of each filter comprises a respective subset of the set of coefficients of the convolution layer. Each coefficient is included in (e.g. comprised by, or part of) one input channel and one filter. The $C_{out}$ dimension (e.g. number of output channels, or the number of filters) is not shown in Figure 2a - but denotes the number of channels that will be generated in the output data by performing a convolution operation using the set of coefficients.

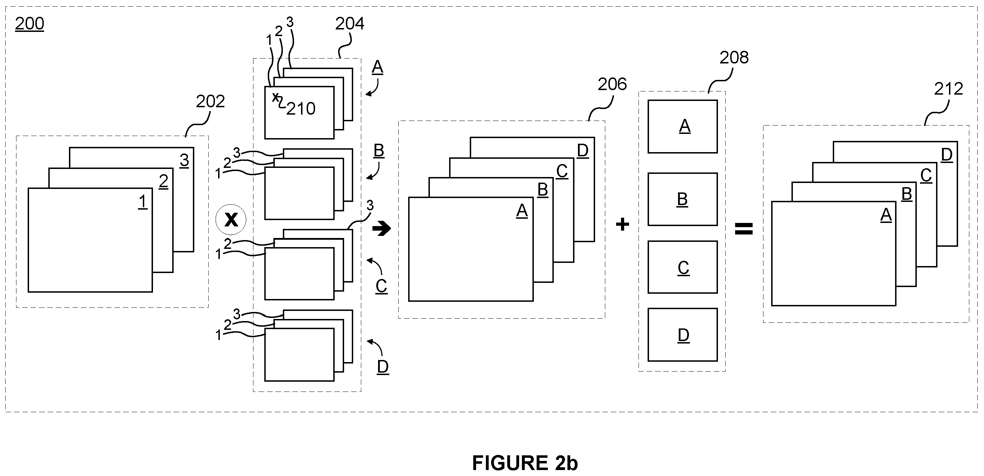

Figure 2b schematically illustrates an example convolution layer 200. In Figure 2b, convolution layer 200 is arranged to perform a convolution operation using input activation data 202 and set of coefficients 204. Figure 2b also illustrates the use of biases (e.g. "offset biases") 208 within convolution layer 200 - which is optional. In Figure 2b, activation data 202 input to layer 200 is arranged in three input channels 1, 2, 3. The number of input channels in the set of coefficients 204 corresponds to (e.g. is equal to) the number of input channels in the activation data 202 with which that set of coefficients 204 is to be convolved. Hence, the set of coefficients 204 is arranged in three input channels 1, 2, 3. The set of coefficients 204 is also arranged in four filters (e.g. output channels) A, B, C, D. The number of filters in the set of coefficients 204 corresponds to (e.g. is equal to) the number of channels in output data 206. Each filter A, B, C, D in the set of coefficients 204 is responsible for forming a respective channel A, B, C, D of output data 206. Each coefficient is included in (e.g. comprised by, or part of) one input channel and one filter. For example, coefficient 210 is included in input channel 1 and filter A. In convolution layer 200, the input activation data 202 is convolved with the set of coefficients 204 so as to generate output data 206 having four data channels A, B, C, D. More specifically, the first input channel of the input activation data 202 is convolved with the first input channel of each filter in the set of coefficients 204. For example, returning to Figure 2a, the first input channel of the input activation data 202, having spatial dimensions $H_a \times W_a$, may be convolved with the first input channel of each filter in the set of coefficients 204, having spatial dimensions $H_w \times W_w$, across a number of steps in direction $s$ and $t$. Returning to Figure 2b, in an analogous way, the second input channel of the input activation data 202 is convolved with the second input channel of each filter in the set of coefficients 204, and the third input channel of the input activation data 202 is convolved with the third input channel of each filter in the set of coefficients 204. Convolving each input channel of the input activation data with each input channel of each filter involves performing a number of element-wise multiplications between the activation values of each input channel of the input activation data and the coefficients of each input channel of each filter. The results of said element-wise multiplications can be summed (e.g. accumulated) so as to form the output data values for each channel of output data 206. If convolution layer 200 were not configured to use biases, output data 206 would be the output of that convolution layer. In Figure 2b, the output data 206 is intermediate output data to be combined with biases 208. Each of the four filters (e.g. output channels) A, B, C, D of the set of coefficients 204 input to convolution layer 200 are associated with a respective bias A, B, C, D. In the convolution layer 200, biases A, B, C, D are summed with the respective data channels A, B, C, D of intermediate data 206 so as to generate output data 212 having four data channels A, B, C, D. In this case, output data 212 is the output of that convolution layer 200.

The sets of coefficients used by certain layers (e.g. fully-connected and/or convolution layers) of a typical neural network often comprise large numbers of coefficients. A layer having a large set of coefficients can place a large computational demand on the processing elements of a neural network accelerator implementing that layer. This is because that layer can require those processing elements to perform a large number of multiply and accumulate operations to generate the output of that layer. In addition, when implementing a neural network at a neural network accelerator, the sets of coefficients are typically stored in an "off-chip" memory. The neural network accelerator can implement a layer of the neural network by reading in the set of coefficients of that layer at run-time. A large amount of memory bandwidth can be required in order to read in a large set of coefficients from an off-chip memory. The memory bandwidth required to read in a set of coefficients can be termed the "weight bandwidth". It is desirable to decrease the processing demand and weight bandwidth required to implement a neural network at a neural network accelerator. "Graph-adaptive pruning for efficient inference of convolutional neural networks" (21 November 2018, ARXIV.ORG, CORNELL UNIVERSITY LIBRARY, ITHACA, NY 14853, arXiv: 1811.08589v1) by Wang *et al.* proposes a graph-adaptive pruning (GAP) method for efficient inference of convolutional neural networks (CNNs).

SUMMARY

This Summary is provided to introduce a selection of concepts in a simplified form that are further described below in the Detailed Description.

According to a first aspect of the present invention there is provided a computer implemented method comprising: receiving a neural network comprising a plurality of layers; forming a graph that represents the flow of data through the plurality layers of the neural network, the graph comprising:a plurality of vertices, each vertex of the plurality of vertices being representative of an output channel of a layer of the plurality of layers of the neural network; and one or more edges, each edge of the one or more edges representing the potential flow of non-zero data between respective output channels represented by a respective pair of vertices; wherein the method further comprises: identifying, by traversing the graph, one or more redundant channels comprised by the plurality of layers of the neural network, wherein a redundant channel is a channel, comprised by a layer of the plurality of layers of the neural network, that can be removed from the neural network without changing the output of the neural network; outputting a compressed neural network in which the identified one or more redundant channels are not present in the compressed neural network; and storing the compressed neural network for subsequent implementation; wherein:each edge of the one or more edges can be an outgoing edge of a first vertex and/or an incoming edge of a second vertex;an incoming edge of a vertex is representative of the potential flow of non-zero data into the output channel represented by that vertex; an outgoing edge of a vertex is representative of the potential flow of non-zero data from the output channel represented by that vertex; and said traversing the graph comprises assessing each vertex of the plurality of vertices in sequence, in dependence on any incoming and/ or outgoing edges of that vertex, to determine whether the output channel represented by that vertex can be removed from the neural network without changing the output of the neural network.

The graph may comprise: a plurality of vertex subsets, each vertex subset of the plurality of vertex subsets being representative of a respective layer of the plurality of layers of the neural network, each vertex subset of the plurality of vertex subsets comprising one or more vertices, each vertex of the one or more vertices being representative of an output channel of the respective layer of the neural network; and the one or more edges, each edge of the one or more edges: connecting two vertices, said two vertices being comprised by different vertex subsets of the graph; and being representative of the potential flow of non-zero data between the respective channels of the respective layers of the neural network represented by those vertices.

A vertex subset of the plurality of vertex subsets may be representative of a fully-connected layer of the plurality of layers of the neural network, each vertex of the one or more vertices comprised by that vertex subset may be representative of a respective output channel of that fully-connected layer, and forming the graph may comprise: determining a matrix representative of a set of coefficients of the fully-connected layer, the matrix comprising one or more elements representative of non-zero coefficients and one or more elements representative of zero coefficients; for each of the one or more elements representative of a non-zero coefficient: identifying: an output channel of the fully-connected layer comprising that non-zero coefficient; an input channel of the fully-connected layer comprising that non-zero coefficient; and an output channel of a preceding layer of the plurality of layers of the neural network corresponding to the identified input channel of the fully-connected layer; and connecting, using an edge, a vertex in the vertex subset representative of the identified output channel of the fully-connected layer to a vertex in a different vertex subset of the plurality of vertex subsets representative of the identified output channel of the preceding layer.

A vertex subset of the plurality of vertex subsets may be representative of a convolution layer of the plurality of layers of the neural network, each vertex of the one or more vertices comprised by that vertex subset may be representative of a respective output channel of that convolution layer, and forming the graph may comprise: determining a matrix representative of a set of coefficients of the convolution layer, the matrix comprising one or more elements representative of non-zero values and one or more elements representative of zero values; for each of the one or more elements representative of a non-zero value: identifying: an output channel of the convolution layer; an input channel of the convolution layer; and an output channel of a preceding layer of the plurality of layers of the neural network corresponding to the identified input channel of the convolution layer; and connecting, using an edge, a vertex in the vertex subset representative of the identified output channel of the convolution layer to a vertex in a different vertex subset of the plurality of vertex subsets representative of the identified output channel of the preceding layer.

The convolution layer may comprise a set of coefficients arranged in one or more filters, each of the one or more filters arranged in one or more channels, each channel of each filter comprising a respective subset of the set of coefficients of the convolution layer, and determining the matrix may comprise: for each channel of each filter: determining whether that channel of that filter comprises a non-zero coefficient; and in response to determining that that channel of that filter comprises at least one non-zero coefficient, representing that channel of that filter with an element representative of a non-zero value in the matrix; or in response to determining that that channel of that filter comprises exclusively zero coefficients, representing that channel of that filter with an element representative of a zero value in the matrix.

A vertex subset of the plurality of vertex subsets may further comprise a bias vertex representative of one or more biases of a layer of the plurality of layers of the neural network subsequent to the layer of the plurality of layers of the neural network that that vertex subset is representative of, said bias vertex being connected, by one or more edges, to one or more vertices of the vertex subset representative of that subsequent layer, each of said edges representing a non-zero bias of the one or more biases represented by the bias vertex being associated with a respective output channel of the one or more output channels represented by the vertex subset representative of that subsequent layer.

A vertex subset of the plurality of vertex subsets may be representative of an add layer of the plurality of layers of the neural network, said vertex subset comprising a number of vertices equal to the number of channels in each of a plurality of activation data sets that that add layer is configured to sum, each of said plurality of activation data sets having the same number of channels, each vertex comprised by that vertex subset being representative of a respective summation operation performed between a set of respective channels of the plurality of activation data sets such that each vertex comprised by that vertex subset is representative of a respective output channel of the add layer; and each vertex comprised by that vertex subset may be connected, by respective edges, to vertices in different vertex subsets, said vertices being representative of output channels of preceding layers of the plurality of layers of the neural network, said output channels corresponding to the channels of the set of respective channels of the plurality of activation data sets between which the summation operation represented by that vertex is performed.

A vertex subset of the plurality of vertex subsets may be representative of a flatten layer of the plurality of layers of the neural network, said vertex subset comprising n groups of vertices, n being equal to the number of channels of data of an activation data set on which the flatten layer is configured to perform a flatten operation, each group of vertices comprising m vertices, m being equal to the number of values in each channel of data of said activation data set, each vertex comprised by said vertex subset being representative of a respective output channel of the flatten layer; and each vertex comprised by each group of vertices in that vertex subset may be connected, by a respective edge, to a vertex in a different vertex subset, said vertex representative of an output channel of a preceding layer of the plurality of layers of the neural network, said output channel corresponding to the channel of the activation data set on which the part of the flatten operation represented by that group of vertices is performed.

The neural network may comprise a pooling layer or an activation layer, and the plurality of vertex subsets may not include a vertex subset representative of that layer of the neural network.

The plurality of vertex subsets may be arranged in a sequence representative of the sequence in which the plurality of layers of the neural network are arranged, and identifying the one or more redundant channels may comprise: assigning each of the incoming edges of the vertices of the vertex subset representative of the sequentially last layer of the plurality of layers of the neural network a first state; traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and: if yes, assigning each of the incoming edges of that vertex the first state; and if not, not assigning each of the incoming edges of that vertex the first state; subsequently, traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and: if yes, assigning each of the outgoing edges of that vertex the first state; and if not, causing each of the outgoing edges of that vertex to not be assigned the first state; and subsequently, identifying one or more vertices that do not have any outgoing edges assigned the first state, said one or more identified vertices representing the one or more redundant channels comprised by the plurality of layers of the neural network.

The graph may further comprise one or more output edges representative of an output from the plurality of layers of the neural network, the one or more output edges extending from the respective one or more vertices of the vertex subset representative of the sequentially last layer of the plurality of layers of the neural network; and identifying the one or more redundant channels may comprise: assigning each of the output edges the first state; and traversing the sequence of vertex subsets, from the vertex subset representative of the sequentially last layer of the plurality of layers of the neural network, to the vertex subset representative of the sequentially first layer of the plurality of layers of the neural network.

The plurality of vertex subsets may be arranged in a sequence representative of the sequence in which the plurality of layers of the neural network are arranged, and identifying the one or more redundant channels may comprise: assigning each of the incoming edges of the one or more vertices comprised by the vertex subset representative of the sequentially first layer of the plurality of layers of the neural network a first state; traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and: if yes, assigning each of the outgoing edges of that vertex the first state; and if not, not assigning each of the outgoing edges of that vertex the first state; subsequently, traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and: if yes, assigning each of the incoming edges of that vertex with first state; and if not, causing each of the incoming edges of that vertex to not be assigned the first state; and subsequently, identifying one or more vertices that do not have any outgoing edges assigned with first state, said one or more identified vertices representing the one or more redundant channels comprised by the plurality of layers of the neural network.

The graph may further comprise an input vertex subset representative of an input to the plurality of layers of the neural network, the input vertex subset comprising one or more input vertices, each input vertex of the one or more input vertices being representative of a channel of the input to the plurality of layers of the neural network; and identifying the one or more redundant channels may comprise: assigning each of the incoming edges of the one or more input vertices comprised by the input vertex subset the first state; and traversing the sequence of vertex subsets, from the input vertex subset, to the vertex subset representative of the sequentially penultimate layer of the plurality of layers of the neural network.

The plurality of vertex subsets may be arranged in a sequence representative of the sequence in which the plurality of layers of the neural network are arranged, and identifying the one or more redundant channels may comprise: assigning each of the incoming edges of the vertices of the vertex subset representative of the sequentially last layer of the plurality of layers of the neural network a first state; traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and: if yes, assigning each of the incoming edges of that vertex the first state; and if not, not assigning each of the incoming edges of that vertex the first state; and subsequently, identifying one or more vertices that do not have any outgoing edges assigned the first state, said one or more identified vertices representing the one or more redundant channels comprised by the plurality of layers of the neural network.

The plurality of vertex subsets may be arranged in a sequence representative of the sequence in which the plurality of layers of the neural network are arranged, and identifying the one or more redundant channels may comprise: assigning each of the incoming edges of the one or more vertices comprised by the vertex subset representative of the sequentially first layer of the plurality of layers of the neural network a first state; traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and: if yes, assigning each of the outgoing edges of that vertex the first state; and if not, not assigning each of the outgoing edges of that vertex the first state; and subsequently, identifying one or more vertices that do not have any outgoing edges assigned the first state, said one or more identified vertices representing the one or more redundant channels comprised by the plurality of layers of the neural network.

An edge can be an outgoing edge of a first vertex and/or an incoming edge of a second vertex; an incoming edge of a vertex is representative of the potential flow of non-zero data into the output channel represented by that vertex; and an outgoing edge of a vertex is representative of the potential flow of non-zero data from the output channel represented by that vertex.

The one or more output channels of the sequentially last layer of the plurality of layers of the neural network may not be identified as being redundant channels.

An output channel of an add layer of the plurality of layers of the neural network may only be identified as a redundant channel when the vertex representative of that output channel does not have any outgoing edges assigned the first state and all of the vertices representative of output channels from preceding layers that are connected to that vertex by edges also do not have any outgoing edges assigned the first state.

An output channel of a flatten layer of the plurality of layers of the neural network may only be identified as a redundant channel when all of the m vertices comprised by the group of vertices comprising the vertex representative of that output channel do not have any outgoing edges assigned the first state.

The method may further comprise outputting a computer readable description of the compressed neural network that, when implemented at a system for implementing a neural network, causes the compressed neural network to be executed. The method may further comprise configuring hardware logic to implement the compressed neural network, wherein the hardware logic comprises a neural network accelerator. The method may further comprise using the compressed neural network to perform image processing.

According to a second aspect of the present invention there is provided processing system for compressing a neural network, the processing system comprising at least one processor configured to: receive a neural network comprising a plurality of layers; form a graph that represents the flow of data through the plurality layers of the neural network, the graph comprising:a plurality of vertices, each vertex of the plurality of vertices being representative of an output channel of a layer of the plurality of layers of the neural network; and one or more edges, each edge of the one or more edges representing the potential flow of non-zero data between respective output channels represented by a respective pair of vertices; wherein the at least one processor is further configured to:identify, by traversing the graph, one or more redundant channels comprised by the plurality of layers of the neural network, wherein a redundant channel is a channel, comprised by a layer of the plurality of layers of the neural network, that can be removed from the neural network without changing the output of the neural network; output a compressed neural network in which the identified one or more redundant channels are not present in the compressed neural network; and write the compressed neural network into memory for subsequent implementation; wherein:each edge of the one or more edges can be an outgoing edge of a first vertex and/or an incoming edge of a second vertex;an incoming edge of a vertex is representative of the potential flow of non-zero data into the output channel represented by that vertex;an outgoing edge of a vertex is representative of the potential flow of non-zero data from the output channel represented by that vertex; and said traversing the graph comprises assessing each vertex of the plurality of vertices in sequence, in dependence on any incoming and/ or outgoing edges of that vertex, to determine whether the output channel represented by that vertex can be removed from the neural network without changing the output of the neural network.

The processing system may further comprise a memory, and the at least one processor may be further configured to write the compressed neural network into the memory for subsequent implementation.

The at least one processor may be further configured to configure hardware logic to implement the compressed neural network. The hardware logic may comprise a neural network accelerator.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows an example neural network.
Figure 2a shows the data structure used in an example convolution layer.
Figure 2b shows an example convolution layer.
Figure 2c shows a pair of example convolution layers.
Figure 3 shows an example system for implementing a neural network.
Figure 4 shows a processing system for compressing a neural network.
Figure 5 shows a method of compressing a neural network.
Figure 6a shows an example matrix representative of a set of coefficients of a fully-connected layer.
Figure 6b shows an example matrix representative of a set of coefficients of a fully-connected layer.
Figure 7a is representative of a sequence of fully-connected or convolution layers.
Figure 7b shows a graph representative of the flow of data through the plurality of layers represented in Figure 7a.
Figure 8a is representative of a plurality of layers including a flatten layer.
Figure 8b shows a graph representative of the flow of data through the plurality of layers represented in Figure 8a.

Figure 9a is representative of a plurality of layers including an add layer.

Figure 9b shows a graph representative of the flow of data through the plurality of layers represented in Figure 9a.

Figure 10a is representative of a plurality of layers including a convolution layer that is configured to use biases.

Figure 10b shows how biases of a layer can be represented in a graph representative of the flow of data through a plurality of layers.

Figure 11a is representative of a plurality of layers including a pooling layer or an activation layer.

Figure 11b shows a first graph representative of the flow of data through the plurality of layers represented in Figure 11a.

Figure 11c shows a second, alternative, graph representative of the flow of data through the plurality of layers represented in Figure 11a.

Figures 12a-i show, in a preferred approach, how a graph representative of the flow of data through a plurality of layers of a neural network can be traversed so as to identify one or more redundant channels comprised by the plurality of layers.

Figures 13a-g show, in a first less preferred approach, how a graph representative of the flow of data through a plurality of layers of a neural network can be traversed so as to identify one or more redundant channels comprised by the plurality of layers.

Figures 14a-g show, in a second less preferred approach, how a graph representative of the flow of data through a plurality of layers of a neural network can be traversed so as to identify one or more redundant channels comprised by the plurality of layers.

Figure 15a is representative of a neural network comprising a sequence of fully-connected or convolution layers.

Figure 15b is representative of a compressed neural network comprising a sequence of fully-connected or convolution layers in which one or more redundant channels are not present.

Figure 16 shows a computer system in which a processing system is implemented; and

Figure 17 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

## DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Neural networks can be used to perform image processing. Examples of image processing techniques that can be performed by a neural network include: image super-resolution processing, semantic image segmentation processing, object detection and image classification. For example, in image super-resolution processing applications, image data representing one or more lower-resolution images may be input to the neural network, and the output of that neural network may be image data representing one or more higher-resolution images. In another example, in image classification applications, image data representing one or more images may be input to the neural network, and the output of that neural network may be data indicative of a probability (or set of probabilities) that each of those images belongs to a particular classification (or set of classifications). It will be appreciated that the principles described herein are not limited to use in compressing neural networks for performing image processing. For example, the principles described herein could be used in compressing neural networks for performing speech recognition/-speech-to-text applications, or any other suitable types of applications. The skilled person would understand how to configure a neural network to perform any of the processing techniques mentioned in this paragraph, and so for conciseness these techniques will not be discussed in any further detail.

A neural network can be defined by a software model. For example, that software model may define the sequence of layers of the neural network (e.g. the number of layers, the order of the layers, and the connectivity between those layers), and define each of the layers in that sequence in terms of the operation it is configured to perform (and, optionally, the set of coefficients it will use). In general, a neural network may be implemented in hardware, software, or any combination thereof.

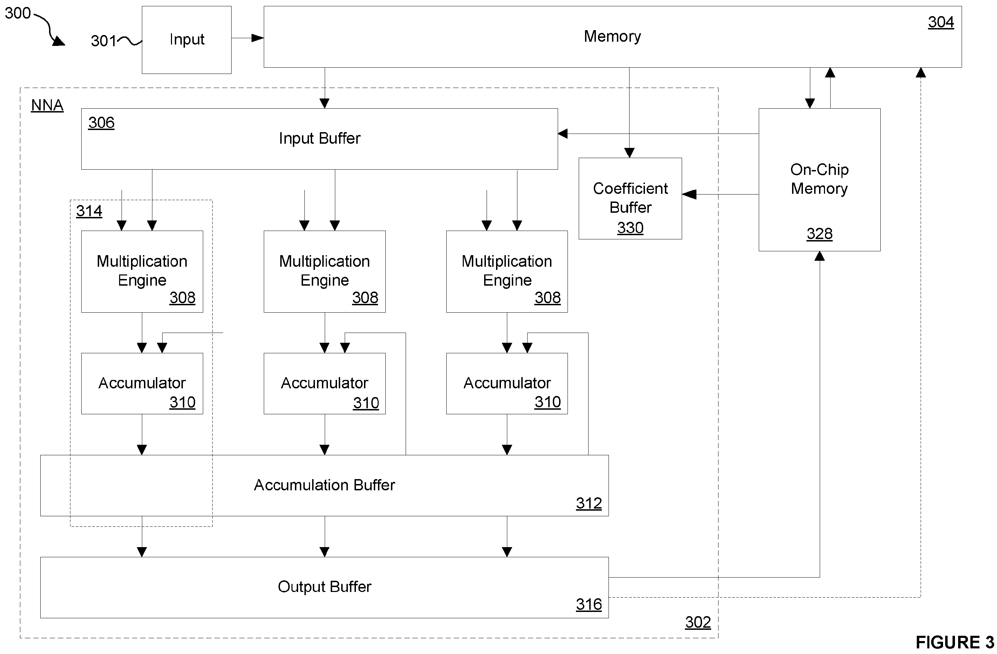

Figure 3 shows an example system 300 for implementing a neural network in hardware. System 300 comprises hardware components (e.g. hardware logic, such as processing elements implemented in hardware) and software components (e.g. firmware, and the procedures and tasks for execution at the hardware logic). System 300 comprises hardware logic for implementing a neural network. That hardware logic comprises a neural network accelerator (NNA) 302. Put another way, system 300 may comprise a hardware neural network accelerator (NNA). That is, system 300 may comprise a neural network accelerator (NNA) implemented in hardware. Neural network accelerator (NNA) 302 can be configured to execute the operations to be performed by the layers of a neural network. Neural network accelerator (NNA) 302 comprises a plurality of configurable resources that enable different types of neural network layer to be implemented, such as fully-connected layers and convolution layers. In other words, implementing a neural network may comprise configuring the hardware logic comprised by system 300 to process data input to that system in accordance with the layers of that neural network.

A neural network accelerator (NNA) is a hardware accelerator that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs comprise one or more hardware accelerators designed to accelerate one or more neural network operations. Therefore a graphics processing unit (GPU) with one or more hardware accelerators designed to accelerate one or more neural network operations can be understood to be an NNA.

In further detail, system 300 comprises input 301 for receiving input data. The input data received at input 301 includes input activation data. For example, when the neural network being implemented is configured to perform image processing, the input activation data may include image data representing one or more images. For example, for an RGB image, the image data may be in the format $C_{in} \times H_a \times W_a$, where $H_a$ and $W_a$ are the pixel dimensions of the image across three input colour channels $C_{in}$ (i.e. R, G and B). The input data received at input 301 also includes the sets of coefficients of each layer of the neural network that uses a set of coefficients. The sets of coefficients may also be referred to as weights.

The input data received at input 301 may be written to a memory 304 comprised by system 300. Memory 304 may be accessible to the neural network accelerator (NNA) 302. Memory 304 may be a system memory accessible to the neural network accelerator (NNA) 302 over a data bus. Neural network accelerator (NNA) 302 may be implemented on a chip (e.g. semiconductor die and/or integrated circuit package) and memory 304 may not be physically located on the same chip (e.g. semiconductor die and/or integrated circuit package) as neural network accelerator (NNA) 302. As such, memory 304 may be referred to as "off-chip memory" and/or "external memory". Memory 304 may be coupled to an input buffer 306 at the neural network accelerator (NNA) 302 so as to provide input activation data to the neural network accelerator (NNA) 302. Memory 304 may be coupled to a coefficient buffer 330 at the neural network accelerator (NNA) 302 so as to provide sets of coefficients to the neural network accelerator (NNA) 302.

Input buffer 306 may be arranged to store input activation data required by the neural network accelerator (NNA) 302. Coefficient buffer 330 may be arranged to store sets of coefficients required by the neural network accelerator (NNA) 302. The input buffer 306 may include some or all of the input activation data relating to the one or more operations being performed at the neural network accelerator (NNA) 302 on a given cycle - as will be described herein. The coefficient buffer 330 may include some or all of the sets of coefficients relating to one or more operations being processed at the neural network accelerator (NNA) 302 on a given cycle - as will be described herein. The various buffers of the neural network accelerator (NNA) 302 shown in Figure 3 may be implemented in any suitable manner - e.g. as any number of data stores which are local to the neural network accelerator (NNA) 302 (e.g. on the same semiconductor die and/or provided within the same integrated circuit package) or accessible to the neural network accelerator (NNA) 302 over a data bus or other interconnect.

In Figure 3, system 300 also comprises a memory 328 for storing at least some of the sets of coefficients and/or input activation data required by the neural network being implemented at the neural network accelerator (NNA) 302. Neural network accelerator (NNA) 302 may be implemented on a chip (e.g. semiconductor die and/or integrated circuit package) and memory 328 may be physically located on the same chip (e.g. semiconductor die and/or integrated circuit package) as neural network accelerator (NNA) 302. As such, memory 328 may be referred to as "on-chip memory" and/or "local memory". Data stored in the on-chip memory 328 may be accessed by the neural network accelerator (NNA) 302 without consuming memory bandwidth to the off-chip memory 304. That said, on-chip memory 328 may not have sufficient storage space so as to simultaneously store all of the input data required to implement a neural network. Thus, subsets of the input data may be periodically written into the on-chip memory 328 from off-chip memory 304. The coefficient buffer 330 may be configured to receive sets of coefficients from the on-chip memory 328 so as to reduce the bandwidth between the off-chip memory 304 and the coefficient buffer 330. The input buffer 306 may be configured to receive input activation data from the on-chip memory 328 so as to reduce the bandwidth between the off-chip memory 304 and the input buffer 306.

In Figure 3, neural network accelerator (NNA) 302 includes input buffer 306, coefficient buffer 330, a plurality of multiplication engines 308, a plurality of accumulators 310, an accumulation buffer 312, and an output buffer 316. Each multiplication engine 308, together with its respective accumulator 310 and its share of the resources of the accumulation buffer 312, represents a processing element 314 of the neural network accelerator (NNA) 302. Three processing elements 314 are shown in Figure 3 but in general there may be any number.

Each processing element 314 may receive a set of input activation values from input buffer 306 and a set of coefficients from a coefficient buffer 330. Processing elements 314 can be used to implement certain types of neural network layer, such as fully-connected and/or convolution layers, by operating on the sets of input activation values and the sets of coefficients. The processing elements 314 of neural network accelerator (NNA) 302 may be independent processing subsystems of the neural network accelerator (NNA) 302 which can operate in parallel. Each processing element 314 includes a multiplication engine 308 configured to perform multiplications between sets of coefficients and input activation values. In examples, a multiplication engine 308 may be configured to perform a fully-connected operation (e.g. when implementing a fully-connected layer) or a convolution operation (e.g. when implementing a convolution layer) between sets of coefficients and input activation values. A multiplication engine 308 can perform these operations by virtue of each multiplication engine 308 comprising a plurality of multipliers, each of which is configured to multiply a coefficient and a corresponding input activation value to produce a multiplication output value. The multipliers may be, for example, followed by an adder tree arranged to calculate the sum of the multiplication outputs in the manner prescribed by the operation to be performed by that layer. In some examples, these multiply-accumulate calculations may be pipelined.

As described herein, neural networks are typically described as comprising a number of layers. A large number of multiply-accumulate calculations must typically be performed at a neural network accelerator (NNA) 302 in order to execute the operation to be performed by certain types of layer of a neural network - such as fully-connected and/or convolution layers. This is because the input activation data and set of coefficients of those types of layer are often very large. Since it may take more than one pass of a multiplication engine 308 to generate a complete output for an operation (e.g. because a multiplication engine 308 may only receive and process a portion of the set of coefficients and input activation values) the neural network accelerator (NNA) may comprise a plurality of accumulators 310. Each accumulator 310 receives the output of a multiplication engine 308 and adds that output to the previous output of the multiplication engine 308 that relates to the same operation. Depending on the implementation of the neural network accelerator (NNA) 302, a multiplication engine 308 may not process the same operation in consecutive cycles and an accumulation buffer 312 may therefore be provided to store partially accumulated outputs for a given operation. The appropriate partial result may be provided by the accumulation buffer 312 to the accumulator 310 at each cycle.

The accumulation buffer 312 may be coupled to an output buffer 316, to allow the output buffer 316 to receive output activation data of the intermediate layers of a neural network operating at the neural network accelerator (NNA) 302, as well as the output data of the final layer (e.g. the layer performing the final operation of a network implemented at the neural network accelerator (NNA) 302). The output buffer 316 may be coupled to on-chip memory 328 and/or off-chip memory 304, to which the output data (e.g. output activation data to be input to a subsequent layer as input activation data, or final output data to be output by the neural network) stored in the output buffer 316 can be written.

In general, neural network accelerator (NNA) 302 may also comprise any other suitable processing logic for implementing different types of neural network layer. For example, neural network accelerator (NNA) 302 may comprise: processing logic (e.g. reduction logic) for implementing pooling layers that perform operations such as max-pooling or average-pooling on sets of activation data; processing logic (e.g. activation logic) for implementing activation layers that apply activation functions such as sigmoid functions or step functions to sets of activation data; processing logic (e.g. addition logic) for implementing add layers that sum sets of data output by two or more other layers; and/or processing logic for implementing flatten layers that reduce the dimensionality of sets of data. The skilled person would understand how to provide suitable processing logic for implementing these types of neural network layer. Such processing logic is not shown in Figure 3 for simplicity. It will be evident to a person of skill in the art that this is not an exhaustive list of other suitable processing logic that may be comprised by a neural network accelerator (NNA) 302.

As described herein, the sets of coefficients used by certain layers (e.g. fully-connected and/or convolution layers) of a typical neural network often comprise large numbers of coefficients. A neural network accelerator, e.g. neural network accelerator 302, can implement a layer of the neural network by reading in the input activation values and set of coefficients of that layer at run-time - e.g. either directly from off-chip memory 304, or via on-chip memory 328, as described herein with reference to Figure 3. A large amount of memory bandwidth can be required in order to read in a large set of coefficients from memory. The memory bandwidth required to read in a set of coefficients can be termed the "weight bandwidth". The memory bandwidth required to read in a set of activation values can be termed the "activation bandwidth". Further, the time taken to read a large set of coefficients in from a memory can also affect the time taken for a neural network to execute the operation to be performed by that layer. This can affect the inference time (e.g. latency) of the neural network. Large sets of coefficients can also place a large computational demand on the processing elements of the neural network accelerator implementing that neural network, such as processing elements 314 of neural network accelerator (NNA) 302 described herein. That is, a layer having a large set of coefficients may require those processing elements to perform a large number of multiply and accumulate operations.

What's more, the inventors have observed that, often, a large proportion of the coefficients of the sets of coefficients of the layers (e.g. fully-connected or convolution layers) of a typical neural network are equal to zero (e.g. "zero coefficients" or "0s"). This is especially true in trained neural networks, as often the training process can drive a large proportion of the coefficients towards zero. Performing an element-wise multiplication between an input activation value and a zero coefficient will inevitably result in a zero output value - regardless of the value of the input activation value.

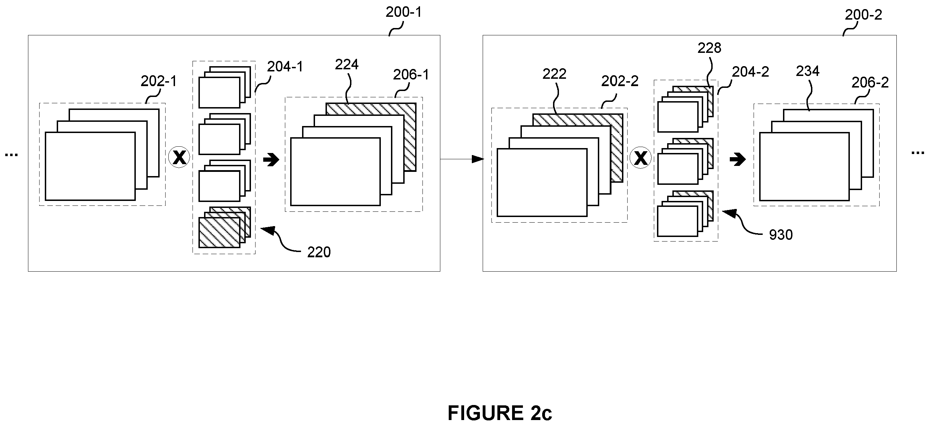

In fact, the inventors have observed that, a number of channels (e.g. input or output channels) comprised by the sets of coefficients of one or more layers (e.g. fully-connected or convolution layers) of a neural network may comprise exclusively zero coefficients (e.g. may not comprise any non-zero coefficients). This may be a result of a training process performed on that neural network. These channels can be referred to as redundant channels. This is because a channel comprising exclusively zero coefficients could be removed from the neural network without changing the output of that neural network - as all of the element-wise multiplications performed using the zero coefficients comprised by that channel result in a zero output value. These redundant channels comprising exclusively zero coefficients can also cause other channels comprised by other (e.g. neighbouring, or adjacent) layers of the neural network to be redundant channels that could be removed from the neural network without changing the output of that neural network. This can be understood further with reference to Figure 2c.

Figure 2c shows a pair of example convolution layers - a first convolution layer 200-1 and a second, subsequent, convolution layer 200-2. For simplicity, the convolution layers shown in Figure 2c are not configured to use biases. First convolution layer 200-1 is arranged to perform a convolution operation using input activation data 202-1 and set of coefficients 204-1 so as to generate output activation data 206-1 - as will be understood with reference to the description of Figures 2a and 2b herein. In Figure 2c, the output activation data 206-1 generated by the first convolution layer 200-1 is the input activation data 202-2 received by second convolution layer 200-2. Convolution layer 200-2 is arranged to perform a convolution operation using input activation data 202-2 and set of coefficients 204-2 so as to generate output activation data 206-2 - as will be understood with reference to the description of Figures 2a and 2b herein.

In an example, the fourth input channel 228 (shown in cross-hatching) of the set of coefficients 204-2 of the second convolution layer 200-2 may comprise exclusively zero coefficients. This may be a result of a training process performed on the neural network. As such, input channel 228 is a redundant channel. This is because all of the element-wise multiplications performed using the zero coefficients comprised by channel 228 result in zero output values. It follows that the fourth channel 222 (shown in cross-hatching) of the input activation data 202-2 of the second convolution layer 200-2 is also a redundant channel. This is because, when convolving channel 222 with input channel 228, even if channel 222 comprises a plurality of non-zero values, those non-zero values will all be multiplied by zero coefficients of the exclusively zero coefficients of input channel 228. As described above, the output activation data 206-1 generated by the first convolution layer 200-1 is the input activation data 202-2 received by second convolution layer 200-2. As such, the fourth channel 224 (shown in cross-hatching) of the output activation data 206-1 generated by the first convolution layer 200-1 is a redundant channel. As described herein, each output channel (e.g. filter) in the set of coefficients 204-1 of the first convolution layer 200-1 is responsible for forming a respective channel of output activation data 206-1. In this example, the fourth output channel (e.g. filter) 220 (shown in cross-hatching) of the set of coefficients 204-1 is responsible for forming the fourth channel 224 of the output activation data 206-1. As such, it follows that the fourth channel (e.g. filter) 220 is also a redundant channel. This is regardless of the number and/or magnitude of non-zero coefficient values comprised by the fourth output channel (e.g. filter) 220. This is because, no matter how many non-zero activation values are present in the channel 222/224 that the filter 220 is responsible for forming, those non-zero values will all be multiplied by zero coefficients of the exclusively zero coefficients of input channel 228 in the second convolution layer 200-2. Thus, each of channels 220, 222/224 and 228 could be removed from convolution layers 220-1 and 200-2 without changing the output of that neural network.

Briefly, in another example, were the fourth output channel (e.g. filter) 220 (shown in cross-hatching) of the set of coefficients 204-1 to comprise exclusively zero coefficients, that would also cause each of channels 220, 222/224 and 228 to be redundant channels (regardless of the number of non-zero coefficients comprised by channel 228), as would be understood by the skilled person by applying equivalent logic to that applied in the preceding paragraph.

Figure 2c shows a pair of example convolution layers so as to illustrate how a redundant channel in one layer can cause a channel in another layer to be redundant. It is to be understood that this principle does not only apply to pairs of convolution layers. In some examples: a redundant channel in a fully-connected layer can cause a channel in another fully-connected layer to be redundant; a redundant channel in a convolution layer can cause a channel in a pooling or activation layer to be redundant; under certain circumstances, a redundant channel in a convolution layer can cause a channel in an add layer to be redundant; under certain circumstances, a redundant channel in a convolution layer can cause a plurality of channels in a flatten layer to be redundant. It will be evident to a person of skill in the art that this is not an exhaustive list of scenarios in which a redundant channel in one layer can cause a channel in another layer to be redundant.

It is undesirable to incur the weight bandwidth, inference time (e.g. latency) and computational demand drawbacks incurred by performing operations using redundant coefficient channels comprising exclusively zero coefficient values, only for all of the element-wise multiplications performed using those coefficient values to inevitably result in a zero output value. That is, a redundant channel incurs weight bandwidth, inference time (e.g. latency) and computational demand "costs" during processing, yet does not affect the output of the neural network. It is also undesirable to incur the activation bandwidth "cost" of reading a channel of activation values in from memory, only for that activation channel to be operated on by a redundant coefficient channel such that all of the element-wise multiplications performed using the activation values of that activation channel and the zero coefficients of that coefficient channel inevitably result in a zero output value - and thereby do not affect the output of the neural network. It is also undesirable to incur the inference time (e.g. latency), computational demand, activation bandwidth and optionally weight bandwidth "cost" of performing the operations of a channel of a layer (e.g. a fully-connected layer, convolution layer, add layer, flatten layer, pooling layer, activation layer, or any other suitable type of layer), only for the channel of output activation data that that channel is responsible for forming to subsequently be operated on (e.g. convolved with or multiplied by) exclusively by a redundant channel comprising exclusively zero values in a subsequent layer of a neural network.

Described herein are methods of, and processing systems for, compressing a neural network in order to address one or more of the problems described in the preceding paragraphs.

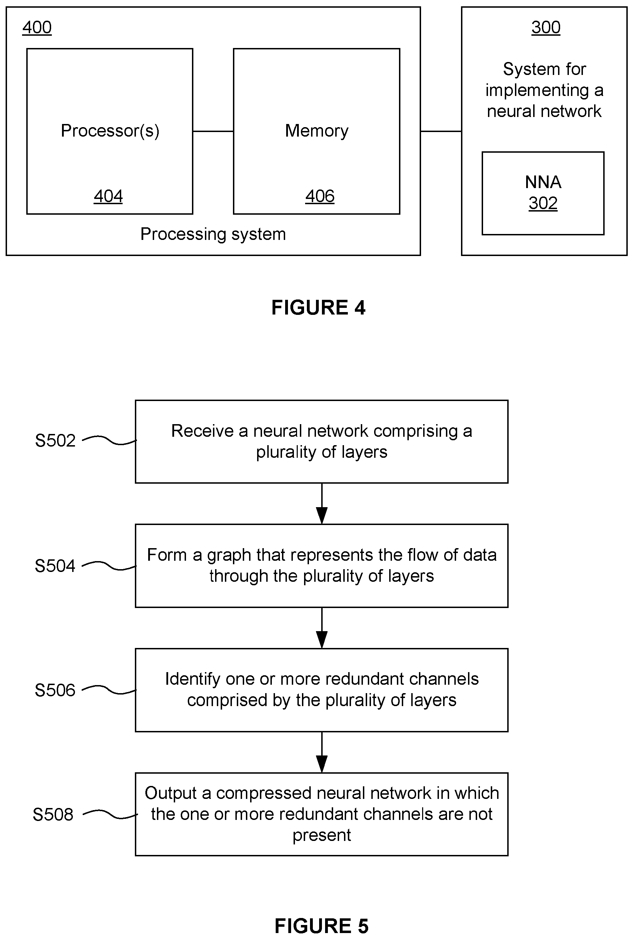

Figure 4 shows a processing system 400 for compressing a neural network in accordance with the principles described herein. Processing system 400 comprises at least one processor 404 and a memory 406.

The at least one processor 404 may be implemented in hardware, software, or any combination thereof. The at least one processor 404 may be a microprocessor, a controller or any other suitable type of processor for processing computer executable instructions. The at least one processor 404 can be configured to perform a method of compressing a neural network in accordance with the principles described herein (e.g. the method as will be described herein with reference to Figure 5).

Memory 406 is accessible to the at least one processor 404. Memory 406 may be a system memory accessible to the at least one processor 404 over a data bus. The at least one processor 404 may be implemented on a chip (e.g. semiconductor die and/or integrated circuit package) and memory 406 may not be physically located on the same chip (e.g. semiconductor die and/or integrated circuit package) as the at least one processor 404. As such, memory 406 may be referred to as "off-chip memory" and/or "external memory". Alternatively, the at least one processor 404 may be implemented on a chip (e.g. semiconductor die and/or integrated circuit package) and memory 406 may be physically located on the same chip (e.g. semiconductor die and/or integrated circuit package) as the at least one processor 404. As such, memory 406 may be referred to as "on-chip memory" and/or "local memory". Alternatively again, memory 406 shown in Figure 4 may represent any combination of "on-chip" and "off-chip" memories - e.g. one or more "on-chip" memories and one or more "off-chip" memories arranged in a memory hierarchy.

Memory 406 may store computer executable instructions for performing a method of compressing a neural network in accordance with the principles described herein (e.g. the method as will be described herein with reference to Figure 5). Memory 406 may store a neural network received at the processing system 400 for compressing (e.g. a software model defining that neural network, as described herein). Memory 406 may store a compressed neural network output as a result of the at least one processor executing the computer executable instructions stored by the memory 406. Memory 406 may store that compressed neural network for subsequent implementation (e.g. at a system for implementing a neural network).

Processing system 400 can be used to configure a system 300 for implementing a neural network. The system 300 shown in Figure 4 may have the same properties as the system 300 described with reference to Figure 3. That is, system 300 may comprise hardware logic for implementing a neural network, said hardware logic comprising a neural network accelerator (NNA) 302. The at least one processor 404 may configure the hardware logic to implement a compressed neural network output as a result of the at least one processor performing a method of compressing a neural network in accordance with the principles described herein (e.g. the method as will be described herein with reference to Figure 5).

Figure 5 shows a method of compressing a neural network. The method of compressing a neural network shown in Figure 5 is a computer-implemented method. The processing system 400 for compressing a neural network shown in Figure 4 may be configured to perform the method of compressing a neural network shown in Figure 5.

In step S502, a neural network comprising a plurality of layers is received. The received neural network may comprise any number of layers - e.g. 2 layers, 5 layers, 15 layers, 100 layers, or any other suitable number of layers. The received neural network may be defined by a software model. For example, that software model may define the sequence (e.g. series) of layers of the plurality of layers of the received neural network (e.g. the number of layers, the order of the layers, and the connectivity between those layers), and define each of the layers in that sequence in terms of the operation it is configured to perform (and, optionally, the set of coefficients it will use). The plurality of layers of the received neural network may comprise at least one of any one or more of: a fully-connected layer, a convolution layer, an add layer, a flatten layer, a pooling layer, an activation layer, and/or any other suitable type of layer. It is to be understood that the received neural network need not include all of these types of layers. That is, the received neural network may not include a fully-connected layer, a convolution layer, an add layer, a flatten layer, a pooling layer and/or an activation layer. By way of example, the received neural network may comprise four convolution layers, one pooling layer, one flatten layer and two fully-connected layers - or any other suitable number and combination of suitable layer types. The neural network (e.g. the software model defining that neural network) may be received at processing system 400 shown in Figure 4, and stored in memory 406.

The received neural network may be a trained neural network. That is, as would be understood by the skilled person, the received neural network may have previously been trained by iteratively: processing training data in a forward pass; assessing the accuracy of the output of that forward pass; and updating the sets of coefficients of the layers in a backward pass. As described herein, the training process can often drive a large proportion of the coefficients of the sets of coefficients used the fully-connected and/or convolution layers of a neural network towards zero.

In step S504, a graph is formed that represents the flow of data (e.g. the potential flow of non-zero data) through the plurality of layers of the neural network. The graph may alternatively be described as representing the input-output dependencies between the plurality layers of the neural network. The graph may be a multi-partite graph. The graph comprises a plurality of vertices. Each vertex of the plurality of vertices is representative of an output channel of a layer of the plurality of layers of the neural network. The graph also comprises one or more edges. Each edge of the one or more edges represents the potential flow of non-zero data between respective output channels represented by a respective pair of vertices. An edge may alternatively be described as representing the input-output dependency between respective output channels represented by a respective pair of vertices. The at least one processor 404 shown in Figure 4 can be configured to perform step S504.

In further detail, the graph may comprise a plurality of vertex subsets. Each vertex subset of the plurality of vertex subsets may be representative of a respective layer of the plurality of layers of the neural network. Each vertex subset of the plurality of vertex subsets may comprise one or more vertices. Each vertex of the one or more vertices can be representative of an output channel of the respective layer of the neural network. Each edge of the one or more edges may connect two vertices, said two vertices being comprised by different vertex subsets of the graph. Each edge of the one or more edges is representative of the flow of data (e.g. the potential flow of non-zero data) between the respective channels of the respective layers of the neural network represented by those vertices.

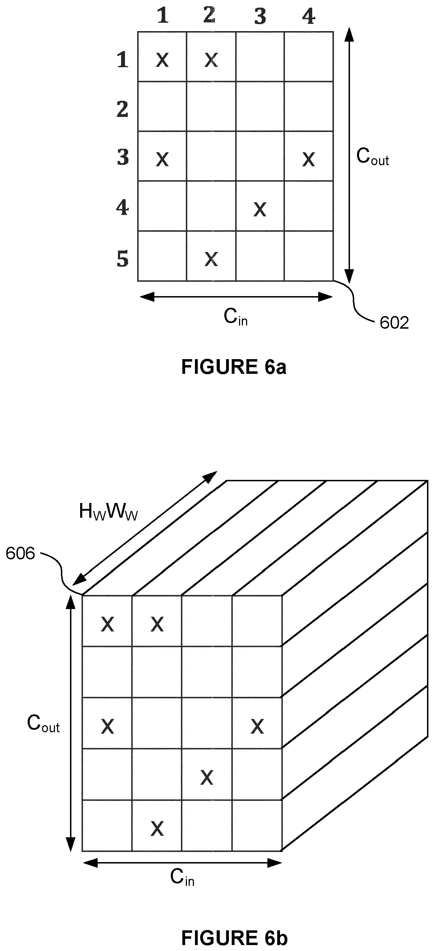

As described herein, the plurality of layers of the received neural network may comprise at least one of any one or more of: a fully-connected layer, a convolution layer, an add layer, a flatten layer, a pooling layer, an activation layer, and/or any other suitable type of layer. Different types of neural network layer can be represented in the graph in different ways. Examples of different types of neural network layer and how they can be represented are described herein with reference to Figures 6 to 11.

The plurality of layers of the received neural network may comprise a fully-connected layer. A vertex subset of the plurality of vertex subsets comprised by the graph may be representative of that fully-connected layer of the plurality of layers of the neural network. Each vertex of the one or more vertices comprised by that vertex subset may be representative of a respective output channel of that fully-connected layer. As described herein, in a fully-connected layer, a fully-connected operation can be performed by performing matrix multiplication between a coefficient matrix comprising a set of coefficients of that fully-connected layer and an input matrix comprising a set of input activation values received by that fully-connected layer. The purpose of a fully-connected layer is to cause a dimensional change between the activation data set input to that layer and the activation data set output from that layer.

To represent a fully-connected layer in the graph, a matrix representative of a set of coefficients of that fully-connected layer may be determined. The determined matrix may comprise the set of coefficients of the fully-connected layer. The determined matrix may be the coefficient matrix of the fully-connected layer. The matrix may comprise one or more elements representative of non-zero coefficients and one or more elements representative of zero coefficients. This step can be understood further with reference to Figure 6a.

Figure 6a shows an example matrix 602 representative of a set of coefficients of a fully-connected layer. The example matrix 602 comprises a plurality of elements representative of non-zero coefficients and a plurality of elements representative of zero coefficients. In Figure 6a, elements of the matrix 602 representative of non-zero coefficients are marked with an "x", whilst elements of the matrix 602 representative of zero coefficients are not marked. For example, the elements positioned in row 1, column 1 and row 1, column 2 of matrix 602 are representative of non-zero coefficients, whilst the other elements positioned in row 1 of matrix 602 are representative of zero coefficients. A zero coefficient is a coefficient that has a value that is equal to zero. A non-zero coefficient is a coefficient that has a value that is not equal to zero.

As described herein, in a fully-connected layer, a matrix multiplication $WX = Y$ can be performed where $W$ is the coefficient matrix comprising a set of coefficients and having dimensions $C_{out} \times C_{in}$. Thus, as shown in Figure 6a, each row of the determined matrix may be representative of a respective output channel ("$C_{out}$") of that fully-connected layer and each column of the determined matrix may be representative of a respective input channel ("$C_{in}$") of that fully-connected layer. That is, matrix 602 shown in Figure 6a is representative of a set of coefficients of a fully-connected layer having five output channels and four input channels. Alternatively, in a fully-connected layer, a matrix multiplication $XW = Y$ can be performed where $W$ is the coefficient matrix comprising a set of coefficients and having dimensions $C_{in} \times C_{out}$. In this alternative, not shown in the Figures, each row of the determined matrix may be representative of a respective input channel ("$C_{in}$") of that fully-connected layer and each column of the determined matrix may be representative of a respective output channel ("$C_{out}$") of that fully-connected layer.

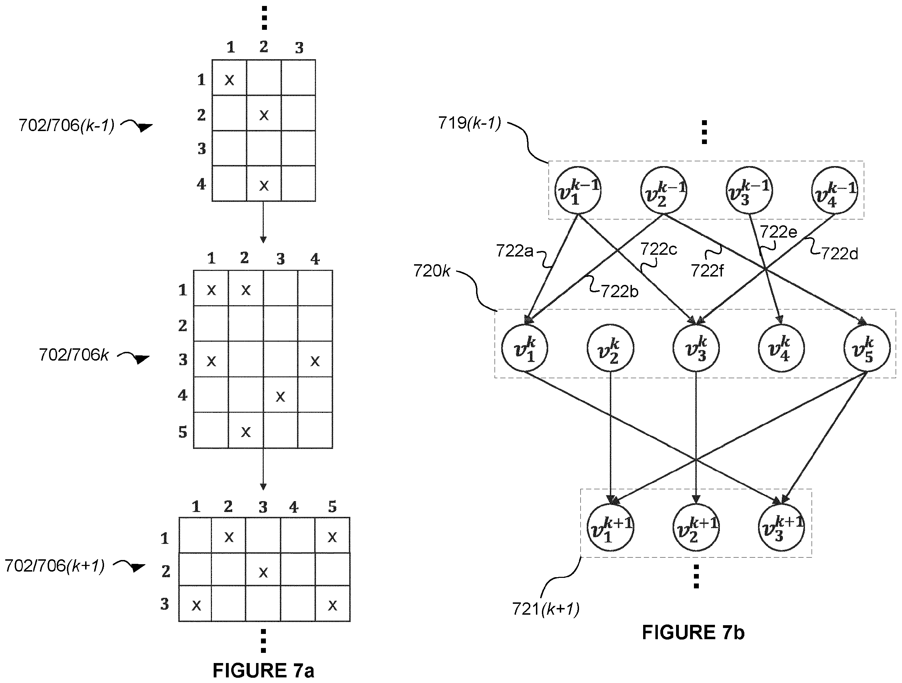

For each of the one or more elements of the determined matrix representative of a non-zero coefficient the following can be identified: an output channel of the fully-connected layer comprising that non-zero coefficient; an input channel of the fully-connected layer comprising that non-zero coefficient; and an output channel of a preceding layer of the plurality of layers of the neural network corresponding to (e.g. being, or being responsible for forming, activation data that will be operated on by) the identified input channel of the fully-connected layer. It is to be understood that the preceding layer may be the same type of layer (e.g. a fully-connected layer, in this example) or a different type of layer (e.g. a convolution layer, an add layer, a flatten layer, a pooling layer, an activation layer, and/or any other suitable type of layer). For each of the one or more elements of the determined matrix representative of a non-zero coefficient, an edge can then be used to connect a vertex in the vertex subset representative of the identified output channel of the fully-connected layer to a vertex in a different vertex subset of the plurality of vertex subsets representative of the identified output channel of the preceding layer. This step can be understood further with reference to Figures 7a and 7b.

Figure 7a can be representative of a sequence of fully-connected layers. In Figure 7a, three matrices 702 are shown that are representative of a sequence of three fully-connected layers - layers *(k-1)*, *k* and *(k+1)*. In Figure 7a, layer *(k-1)* is a preceding layer of the neural network, relative to layer *k*. The activation data set output by layer *(k-1)* may be the activation data set input to layer *k*. In Figure 7a, layer *k* is a preceding layer of the neural network, relative to layer *(k+1)*. The activation data set output by layer *k* may be the activation data set input to layer *(k+1)*. It is to be understood that further layers may exist prior to layer *(k-1)* and/or subsequent to layer *(k+1)*, as shown by ellipses ("...") in Figure 7a. It is also to be understood that further layers that are not able to change the number of channels between the input activation data set they receive and the output activation data set they generate, such as pooling layers and/or activation layers, may exist between fully-connected layer *(k-1)* and fully-connected layer *k*, and/or fully-connected layer *k* and fully-connected layer *(k+1)* - as will be described in further detail herein.

Matrix 702k has the same properties as matrix 602 as described with reference to Figure 6a. In Figure 7a, matrix 702k is representative of the set of coefficients of a fully-connected layer *k* having four input channels and five output channels. Matrix 702*(k-1)* can be determined for a fully-connected layer *(k-1)* using the principles described herein with reference to Figure 6a. In Figure 7a, matrix 702*(k-1)* is representative of the set of coefficients of a fully-connected layer *(k-1)* having three input channels and four output channels (corresponding to the four input channels of layer *k*). Matrix 702 *(k+1)* can be determined for a fully-connected layer *(k+1)* using the principles described herein with reference to Figure 6a. In Figure 7a, matrix 702*(k+1)* is representative of the set of coefficients of a fully-connected layer *(k+1)* having five input channels (corresponding to the five output channels of layer *k*) and three output channels.

Figure 7b shows a graph representative of the flow of data through the plurality of layers represented in Figure 7a. The graph comprises three vertex subsets 719 *(k-1)*, 720*k* and 721*(k+1)*, representative of layers *(k-1)*, *k* and *(k+1)*, respectively.

For example, in further detail, vertex subset 720*k* is representative of layer *k* shown in Figure 7a. Vertex subset 720*k* comprises five vertices, $v_1^k$ to $v_5^k$, each vertex representative of a respective one of the five output channels of layer *k*. That is, vertex $v_1^k$ is representative of the first output channel of layer *k*, vertex $v_2^k$ is representative of the second output channel of layer *k*, vertex $v_3^k$ is representative of the third output channel of layer *k*, vertex $v_4^k$ is representative of the fourth output channel of layer *k*, and vertex $v_5^k$ is representative of the fifth output channel of layer *k*. Vertex subset 719*(k-1)* is representative of layer *(k-1)* shown in Figure 7a. Vertex subset 719*(k-1)* comprises four vertices, $v_1^{k-1}$ to $v_4^{k-1}$, each vertex representative of a respective one of the four output channels of layer *(k-1)*. That is, vertex $v_1^{k-1}$ is representative of the first output channel of layer *(k-1)*, vertex $v_2^{k-1}$ is representative of the second output channel of layer *(k-1)*, vertex $v_3^{k-1}$ is representative of the third output channel of layer *(k-1)*,

and vertex $v_4^{k-1}$ is representative of the fourth output channel of layer *(k-1)*.

As described herein, matrix 702*k* includes an element positioned in row 1, column 1 (marked with an "x") that is representative of a non-zero coefficient. It can be identified that that non-zero coefficient is comprised by the first output channel of layer *k* (e.g. because the element representative of that non-zero coefficient is positioned in row 1 of matrix 702*k*). It can also be identified that that non-zero coefficient is comprised by the first input channel of layer *k* (e.g. because the element representative of that non-zero coefficient is positioned in column 1 of matrix 702k). The first output channel of the preceding layer *(k-1)* can be identified as corresponding to (e.g. being responsible for forming activation data that will be operated on by) that identified first input channel of layer *k*. Thus, as shown in Figure 7b, an edge 722a can be used to connect the vertex $v_1^k$ in the vertex subset 720k representative of the identified first output channel of layer *k* to the vertex $v_1^{k-1}$ in the vertex subset 719 *(k-1)* representative of the identified first output channel of the preceding layer *(k-1)*. In this way, edge 722a represents an input-output dependency between the first output channel of the preceding layer *(k-1)* and the first output channel of layer *k*. In particular, edge 722a represents the potential flow of non-zero data between the first output channel of the preceding layer *(k-1)* and the first output channel of layer *k*. An edge representative of the potential flow of non-zero data between two channels can subsequently be assessed (e.g. by traversing the graph as is described in further detail herein) to determine whether non-zero data actually flows between those channels when the neural network is performed. Put another way, the absence of an edge between two vertices represents that there is no input-output dependency between the channels represented by those vertices - that is, that no non-zero data flows between those channels when the neural network is performed. Edge 722a may be referred to as an outgoing edge relative to vertex $v_1^{k-1}$, as it is representative of the potential flow of non-zero data from the output channel represented by that vertex $v_1^{k-1}$. Edge 722a may be referred to as an incoming edge relative to vertex $v_1^k$, as it is representative of the potential flow of non-zero data into the output channel represented by that vertex $v_1^k$.

Analogous "identifying" and "edge forming" processes - not described in detail herein for conciseness - can be performed for each of the other five elements (marked with an "x") representative of non-zero coefficients in matrix 702*k* so as to form edges 722b, 722c, 722c, 722e and 722f. Edges may not be formed for elements (not marked with an "x") in matrix 702k that are representative of zero coefficients. In this way, a graph representative of the flow of data (e.g. the potential flow of non-zero data) between layers *(k-1)* and *k* - which, in this example, are fully-connected layers - can be formed.

Vertex subset 721*(k+1)* is representative of layer *(k+1)* shown in Figure 7a. Vertex subset 721*(k+1)* comprises three vertices, $v_1^{k+1}$ to $v_3^{k+1}$, each vertex representative of a respective one of the three output channels of layer *(k+1)*. That is, vertex $v_1^{k+1}$ is representative of the first output channel of layer *(k+1)*, vertex $v_2^{k+1}$ is representative of the second output channel of layer *(k+1)*, and vertex $v_3^{k+1}$ is representative of the third output channel of layer *(k+1)*. Analogous "identifying" and "edge forming" processes - not described in detail herein for conciseness - can be performed for each of the elements (marked with an "x") representative of non-zero coefficients in matrix 702*(k+1)* so as to form edges (shown in Figure 7b, but not assigned reference numbers) between vertices of vertex subsets 720k and 721*(k+1)*. Edges may not be formed for elements (not marked with an "x") in matrix 702*(k+1)* that are representative of zero coefficients. In this way, a graph representative of the flow of data (e.g. the potential flow of non-zero data) between layers *k* and *(k+1)* - which, in this example, are fully-connected layers - can be formed.

The plurality of layers of the received neural network may comprise a convolution layer. A vertex subset of the plurality of vertex subsets comprised by the graph may be representative of that convolution layer of the plurality of layers of the neural network. Each vertex of the one or more vertices comprised by that vertex subset may be representative of a respective output channel of that convolution layer. As described herein, in a convolution layer, a convolution operation can be performed using a set of input activation values received by that convolution layer and a set of coefficients of that convolution layer. For example, as described herein with reference to Figures 2a and 2b, the $N^{th}$ input channel of the input activation data 202, having spatial dimensions $H_a \times W_a$, may be convolved with the $N^{th}$ input channel of each filter in the set of coefficients 204, having spatial dimensions $H_w \times W_w$.

To represent a convolution layer in the graph, a matrix representative of a set of coefficients of that convolution layer may be determined. The matrix may comprise one or more elements representative of non-zero values and one or more elements representative of zero values. Determining a matrix representative of a set of coefficients of a convolution layer may comprise, for each input channel of each filter (e.g. referring to Figure 2b, for input channel 1 of filter A, for input channel 2 of filter A, and so on to for input channel 3 of filter D) determining whether that input channel of that filter comprises a non-zero coefficient. In response to determining that an input channel of a filter comprises at least one non-zero coefficient, that input channel of that filter can be represented with an element representative of a non-zero value in the matrix. In response to determining that an input channel of a filter comprises exclusively zero coefficients (i.e. does not comprise any non-zero coefficients within its subset of the set of coefficients of the convolution layer), that input channel of that filter can be represented with an element representative of a zero value in the matrix. For completeness, a binary "1" could be used to represent a non-zero value in the matrix, whilst a binary "0" could be used to represent a zero value within the matrix - although this need not be the case. For example, a binary "0" could be used to represent a non-zero value in the matrix, whilst a binary "1" could be used to represent a zero value within the matrix. It is also to be understood that any other arbitrarily selected value could be used to represent a non-zero value or a zero value within the matrix. As an illustrative example, one or more bits indicative of an even number could be used to represent a non-zero value in the matrix, whilst one or more bits indicative of an odd number could be used to represent a zero value within the matrix. This step can be understood further with reference to Figure 6b.

Figure 6b shows an example matrix 606 representative of a set of coefficients of a convolution layer. In Figure 6b, the matrix 606 is representative of the $C_{out} \times C_{in}$ plane of a set of coefficients of a convolution layer having dimensions $C_{out} \times C_{in} \times H_w \times W_w$. In order to visualise the four-dimensional set of coefficients of a convolution layer, having dimensions $C_{out} \times C_{in} \times H_w \times W_w$, the $H_w \times W_w$ dimensions can be "flattened" - for example, by representing the coefficients of each two-dimensional input channel of each filter, having dimensions $H_w \times W_w$, as a respective one-dimensional sequence of coefficients. These one-dimensional sequences of coefficients are shown in Figure 6b, spanning one-dimension, labelled as $H_w W_w$, of a three-dimensional cuboid that represents the set of coefficients of a convolution layer. The $C_{out} \times C_{in}$ plane is shown in Figure 6b as the other two dimensions of that three-dimensional cuboid. As such, each one-dimensional sequence of coefficients, $H_w W_w$, can be said to have a $(C_{out}, C_{in})$ co-ordinate in the $C_{out} \times C_{in}$ plane. As described herein, each element of the matrix 606 represents one input channel of one filter of a convolution layer. An element representative of a non-zero value marked with an "x" in matrix 606 in Figure 6b represents that at least one of the coefficients in the one-dimensional sequence of coefficients $H_w W_w$ having that $(C_{out}, C_{in})$ co-ordinate in the $C_{out} \times C_{in}$ plane is a non-zero coefficient. An element representative of a zero value that is not marked in matrix 606 in Figure 6b represents that none of the coefficients in the one-dimensional sequence of coefficients $H_w W_w$ having that $(C_{out}, C_{in})$ co-ordinate in the $C_{out} \times C_{in}$ plane is a non-zero coefficient.

The matrix 606 comprises a plurality of elements representative of non-zero values marked with an "x", and a plurality of elements representative of zero values that are not marked. Matrix 606 shown in Figure 6b with 5 rows and 4 columns has been determined for a convolution layer having a set of coefficients arranged in 5 filters (e.g. output channels) (e.g. represented by the 5 rows of matrix 606), each of those 5 filters arranged in 4 input channels (e.g. represented by the 4 columns of matrix 606). For example, row 1 of matrix 606 may represent the first filter of the convolution layer, each column in row 1 representing one of the 4 input channels of that first filter. As such, the elements positioned in row 1, column 1 and row 1, column 2 of matrix 606 are representative of input channels of the first filter that comprise at least one non-zero coefficient, whilst the other elements positioned in row 1 of matrix 606 are representative of input channels of the first filter that comprise exclusively zero coefficients.

In Figure 6b, each row of matrix 606 is described as being representative of one respective output channel (e.g. filter) of the convolution layer, and each column of matrix 606 is representative of one respective input channel of the convolution layer. It is to be understood that, alternatively, a matrix (not shown in the Figures) can be determined such that each row of that matrix is representative of one respective input channel of a convolution layer, and each column of that matrix is representative of one respective output channel (e.g. filter) of that convolution layer. After defining the matrix to be populated in this way, the elements of that matrix can be populated accordingly by assessing whether the input channel of the filter represented by each element comprises a non-zero coefficient.

Having determined a matrix representative of the set of coefficients of a convolution layer as described herein, a graph representative of the flow of data through that convolution layer can be formed using that matrix in much the same way as a graph representative of the flow of data through a fully-connected layer can be formed using a matrix representative of the set of coefficients of that fully-connected layer as described herein.

That is, for each of the one or more elements of the determined matrix representative of a non-zero value the following can be identified: an output channel of the convolution layer; an input channel of the convolution layer; and an output channel of a preceding layer of the plurality of layers of the neural network corresponding to (e.g. being, or being responsible for forming, activation data that will be operated on by) the identified input channel of the convolution layer. It is to be understood that the preceding layer may be the same type of layer (e.g. a convolution layer, in this example) or a different type of layer (e.g. a fully-connected layer, an add layer, a flatten layer, a pooling layer, an activation layer, and/or any other suitable type of layer). For each of the one or more elements of the determined matrix representative of a non-zero value, an edge can then be used to connect a vertex in the vertex subset representative of the identified output channel of the convolution layer to a vertex in a different vertex subset of the plurality of vertex subsets representative of the identified output channel of the preceding layer. This step can be understood further with reference to Figures 7a and 7b.

Figure 7a can be representative of a sequence of convolution layers. In Figure 7a, three matrices 706 are shown that are representative of a sequence of three convolution layers - layers *(k-1), k* and *(k+1)*. In Figure 7a, layer *(k-1)* is a preceding layer of the neural network, relative to layer k. The activation data set output by layer *(k-1)* may be the activation data set input to layer *k*. In Figure 7a, layer *k* is a preceding layer of the neural network, relative to layer *(k+1)*. The activation data set output by layer *k* may be the activation data set input to layer *(k+1)*. It is to be understood that further layers may exist prior to layer *(k-1)* and/or subsequent to layer *(k+1)*, as shown by ellipses ("...") in Figure 7a. It is also to be understood that further layers that are not able to change the number of channels between the input activation data set they receive and the output activation data set they generate, such as pooling layers and/or activation layers, may exist between convolution layer *(k-1)* and convolution layer *k,* and/or convolution layer k and convolution layer *(k+1)* - as will be described in further detail herein.

Matrix 706*k* has the same properties as matrix 606 as described with reference to Figure 6b. In Figure 7a, matrix 706*k* is representative of the set of coefficients of a convolution layer *k* having four input channels and five output channels. Matrix 706*(k-1)* can be determined for a convolution layer *(k-1)* using the principles described herein with reference to Figure 6b. In Figure 7a, matrix 706*(k-1)* is representative of the set of coefficients of a convolution layer *(k-1)* having three input channels and four output channels (corresponding to the four input channels of layer *k)*. Matrix 706*(k+1)* can be determined for a convolution layer *(k+1)* using the principles described herein with reference to Figure 6b. In Figure 7a, matrix 706*(k+1)* is representative of the set of coefficients of a convolution layer *(k+1)* having five input channels (corresponding to the five output channels of layer *k)* and three output channels.

Figure 7b shows a graph representative of the flow of data through the plurality of layers represented in Figure 7a. The graph comprises three vertex subsets 719 *(k-1),* 720*k* and 721*(k+1),* representative of layers *(k-1), k* and *(k+1),* respectively.

For example, in further detail, vertex subset 720k is representative of layer *k* shown in Figure 7a. Vertex subset 720k comprises five vertices, $v_1^k$ to $v_5^k$, each vertex representative of a respective one of the five output channels of layer *k.* That is, vertex $v_1^k$ is representative of the first output channel of layer *k*, vertex $v_2^k$ is representative of the second output channel of layer *k*, vertex $v_3^k$ is representative of the third output channel of layer *k*, vertex $v_4^k$ is representative of the fourth output channel of layer *k*, and vertex $v_5^k$ is representative of the fifth output channel of layer *k.* Vertex subset 719*(k-1)* is representative of layer *(k-1)* shown in Figure 7a. Vertex subset 719*(k-1)* comprises four vertices, $v_1^{k-1}$ to $v_4^{k-1}$, each vertex representative of a respective one of the four output channels of layer *(k-1).* That is, vertex $v_1^{k-1}$ is representative of the first output channel of layer *(k-1),* vertex $v_2^{k-1}$ is representative of the second output channel of layer *(k-1),* vertex $v_3^{k-1}$ is representative of the third output channel of layer *(k-1),* and vertex $v_4^{k-1}$ is representative of the fourth output channel of layer *(k-1).*

As described herein, matrix 706*k* includes an element positioned in row 1, column 1 (marked with an "x") that is representative of a non-zero value. It can be identified that that non-zero value corresponds to the first output channel of layer *k* (e.g. because the element representative of that non-zero value is positioned in row 1 of matrix 706*k*). It can also be identified that that non-zero value corresponds to the first input channel of layer *k* (e.g. because the element representative of that non-zero value is positioned in column 1 of matrix 706*k*). The first output channel of the preceding layer *(k-1)* can be identified as corresponding to (e.g. being responsible for forming activation data that will be operated on by) that identified first input channel of layer *k.* Thus, as shown in Figure 7b, an edge 722a can be used to connect the vertex $v_1^k$ in the vertex subset 720*k* representative of the identified first output channel of layer *k* to the vertex $v_1^{k-1}$ in the vertex subset 719*(k-1)* representative of the identified first output channel of the preceding layer *(k-1).* In this way, edge 722a represents an input-output dependency between the first output channel of the preceding layer *(k-1)* and the first output channel of layer *k.* In particular, edge 722a represents the potential flow of non-zero data between the first output channel of the preceding layer *(k-1)* and the first output channel of layer *k.* An edge representative of the potential flow of non-zero data between two channels can subsequently be assessed (as is described in further detail herein) to determine whether non-zero data actually flows between those channels when the neural network is performed. Put another way, the absence of an edge between two vertices represents that there is no input-output dependency between the channels represented by those vertices - that is, that no non-zero data flows between those channels when the neural network is performed. Edge 722a may be referred to as an outgoing edge relative to vertex $v_1^{k-1}$, as it is representative of the potential flow of non-zero data from the output channel represented by that vertex $v_1^{k-1}$. Edge 722a may be referred to as an incoming edge relative to vertex $v_1^k$, as it is representative of the potential flow of non-zero data into the output channel represented by that vertex $v_1^k$.

Analogous "identifying" and "edge forming" processes - not described in detail herein for conciseness - can be performed for each of the other five elements (marked with an "x") representative of non-zero values in matrix 706*k* so as to form edges 722b, 722c, 722c, 722e and 722f. Edges may not be formed for elements (not marked with an "x") in matrix 706*k* that are representative of zero values. In this way, a graph representative of the flow of data (e.g. the potential flow of non-zero data) between layers *(k-1)* and *k* - which, in this example, are convolution layers - can be formed.

Vertex subset 721*(k+1)* is representative of layer *(k+1)* shown in Figure 7a. Vertex subset 721*(k+1)* comprises three vertices, $v_1^{k+1}$ to $v_3^{k+1}$, each vertex representative of a respective one of the three output channels of layer *(k+1)*. That is, vertex $v_1^{k+1}$ is representative of the first output channel (e.g. filter) of layer *(k+1)*, vertex $v_2^{k+1}$ is representative of the second output channel (e.g. filter) of layer *(k+1)*, and vertex $v_3^{k+1}$ is representative of the third output channel (e.g. filter) of layer *(k+1)*. Analogous "identifying" and "edge forming" processes - not described in detail herein for conciseness - can be performed for each of the elements (marked with an "x") representative of non-zero values in matrix 706*(k+1)* so as to form edges (shown in Figure 7b, but not assigned reference numbers) between vertices of vertex subsets 720*k* and 721*(k+1)*. Edges may not be formed for elements (not marked with an "x") in matrix 706*(k+1)* that are representative of zero values. In this way, a graph representative of the flow of data (e.g. the potential flow of non-zero data) between layers *k* and *(k+1)* - which, in this example, are convolution layers - can be formed.

It is to be understood that the incoming edge(s) of the one or more vertices of the vertex subset representative of the sequentially first layer of the plurality of layers of the neural network can be connected to respective vertices of an input vertex subset representative of an input to the plurality of layers of the neural network. The input vertex subset may comprise one or more input vertices, each input vertex of the one or more input vertices being representative of a channel of the input to the plurality of layers of the neural network. The input to the plurality of layers of the neural network may be an activation data set originally input into the neural network consisting of the plurality of layers, or an activation data set output by a preceding layer of the neural network not included within the plurality of layers of the received neural network to be compressed. In an example, the input to the plurality of layers of the neural network may be an activation data set originally input into a neural network, and the sequentially first layer of the plurality of layers of the neural network may be a fully-connected or convolution layer. Having determined a matrix representative of the set of coefficients of that fully-connected or convolution layer as described herein, for each of the one or more elements of the determined matrix representative of a non-zero value the following can be identified: an output channel of that fully-connected or convolution layer; an input channel of that fully-connected or convolution layer; and a channel of the activation data set originally input into the neural network corresponding to (e.g. being activation data that will be operated on by) the identified input channel of the fully-connected or convolution layer. For each of the one or more elements of the determined matrix representative of a non-zero value, an edge can then be used to connect a vertex in the vertex subset representative of the identified output channel of the fully-connected or convolution layer to a vertex in the input vertex subset representative of the identified channel of the activation data set.

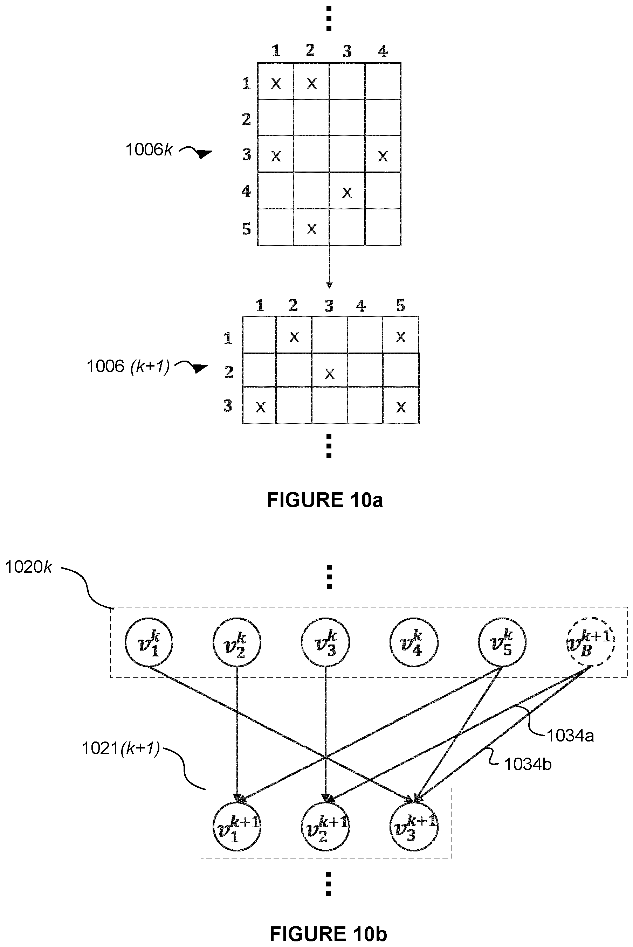

As described herein with reference to Figure 2b, a convolution layer may be configured to use biases - such that each of the filters (e.g. output channels) of the set of coefficients of that convolution layer are associated with a respective bias. Figure 7b shows a graph that can be representative of the flow of data through a plurality of convolution layers that are not configured to use biases. In an example where the plurality of layers of the received neural network comprises a convolution layer that is configured to use biases, a vertex subset of the plurality of vertex subsets may further comprise a bias vertex representative of the one or more biases of that convolution layer, that convolution layer being subsequent to the layer of the plurality of layers of the neural network that that vertex subset is representative of. Said bias vertex can be connected, by one or more edges, to one or more vertices of the vertex subset representative of that convolution layer, each of said edges representing a non-zero bias of the one or more biases represented by the bias vertex being associated with a respective output channel of the one or more output channels represented by the vertex subset representative of that convolution layer. The representation of biases in the graph can be understood further with reference to Figures 10a and 10b.

Figure 10a is representative of a plurality of layers including a convolution layer that is configured to use biases. In Figure 10a, two matrices are shown that are representative of a sequence of two convolution layers - layers *k* and *(k+1)*. In Figure 10, layer *(k+1)* is a subsequent layer of the neural network, relative to layer *k*. The activation data set output by layer k may be the activation data set input to layer *(k+1)*. It is to be understood that further layers may exist prior to layer k and/or subsequent to layer *(k+1)*, as shown by ellipses ("...") in Figure 10a. It is also to be understood that further layers that are not able to change the number of channels between the input activation data set they receive and the output activation data set they generate, such as pooling layers and/or activation layers, may exist between convolution layer k and convolution layer *(k+1)* - as will be described in further detail herein.

In Figure 10a, layer *k* is a convolution layer. Matrix 1006k is representative of the set of coefficients of layer *k*. Matrix 1006*k* has the same properties as matrix 606 as described with reference to Figure 6b. Matrix 1006*k* has the same properties as matrix 706*k* as described with reference to Figure 7a. In Figure 10a, layer *(k+1)* is a convolution layer that is configured to use biases. A convolution layer being configured to use biases does not affect the determination of a matrix representative of the set of coefficients of that convolution layer. As such, matrix 1006*(k+1)* can be determined for convolution layer *(k+1)* using the principles described herein with reference to Figure 6b. Matrix 1006*(k+1)* has the same properties as matrix 706*(k+1)* as described with reference to Figure 7a.

Figure 10b shows how biases of a layer can be represented in a graph representative of the flow of data through a plurality of layers. The graph comprises two vertex subsets 1020*k* and 1021*(k+1),* representative of layers *k* and *(k+1),* respectively.

Vertex subset 1020k is representative of layer *k* shown in Figure 10a. Vertex subset 1020*k* comprises five vertices, $v_1^k$ to $v_5^k$, each vertex representative of a respective one of the five output channels of layer *k* shown in Figure 10a. Vertex subset 1021*(k+1)* is representative of layer *(k+1)* shown in Figure 10a. Vertex subset 1021*(k+1)* comprises three vertices, $v_1^{k+1}$ to $v_3^{k+1}$, each vertex representative of a respective one of three output channels of layer *(k+1)* shown in Figure 10a. Edges (shown in Figure 10b, but not assigned reference numbers) between vertices of vertex subsets 1020k and 1021*(k+1)* can be formed in dependence on the determined matrix 1006*(k+1)* in the same manner as the edges between vertices of vertex subsets 720k and 721*(k+1)* are formed in dependence on the determined matrix 706*(k+1)* as described herein with reference to Figures 7a and 7b.

In this example, layer *(k+1)* is a convolution layer that is configured to use biases. As such, vertex subset 1020*k* that is representative of layer *k* further comprises a bias vertex $v_B^{k+1}$ representative of the biases of layer *(k+1).* In this example, the biases of layer *(k+1)* include a zero bias associated with the first output channel (e.g. filter) of layer *(k+1),* and non-zero biases associated with the second and third output channels (e.g. filters) of layer *(k+1).* A zero bias is a bias that has a value that is equal to zero. A non-zero bias is a bias that has a value that is not equal to zero. As such, bias vertex $v_B^{k+1}$ is not connected by an edge to vertex $v_1^{k+1}$ that is representative of the first output channel of layer *(k+1)*; bias vertex $v_B^{k+1}$ is connected by a first edge 1034a to vertex $v_2^{k+1}$ that is representative of the second output channel of layer *(k+1)*; and bias vertex $v_B^{k+1}$ is connected by a second edge 1034b to vertex $v_3^{k+1}$ that is representative of the third output channel of layer *(k+1).* In this way, a graph representative of the flow of data (e.g. the potential flow of non-zero data) between layers *k* and *(k+1)* - that, in this example, are convolution layers in which layer *(k+1)* is configured to use biases - can be formed.

The skilled person would also understand that a fully-connected layer can be configured to use biases in a similar manner to the way in which a convolution layer can be configured to use biases. It is to be understood that the biases of a fully-connected layer can be represented in the graph formed in step S504 according to the same principles as described herein with reference to the example shown in Figures 10a and 10b. That is, in an example where the plurality of layers of the received neural network comprises a fully-connected layer that is configured to use biases, a vertex subset of the plurality of vertex subsets may further comprise a bias vertex representative of the one or more biases of that fully-connected layer, that fully-connected layer being subsequent to the layer of the plurality of layers of the neural network that that vertex subset is representative of. Said bias vertex can be connected, by one or more edges, to one or more vertices of the vertex subset representative of that fully-connected layer, each of said edges representing a non-zero bias of the one or more biases represented by the bias vertex being associated with a respective output channel of the one or more output channels represented by the vertex subset representative of that fully-connected layer.

It is also to be understood that, were the sequentially first layer of the plurality of layers of the neural network to be configured to use biases, the input vertex subset may further comprise a bias vertex according to the principles described herein that is representative of the one or more biases of that sequentially first layer of the plurality of layers of the neural network.

The plurality of layers of the received neural network may comprise a flatten layer. A flatten layer is a type of neural network layer that is configured to operate on a received activation data set having a number of dimensions so as to generate a flattened activation data set having a number of dimensions less than the number of dimensions of the received activation data set. A flatten layer is typically positioned in a sequence of neural network layers between a convolution layer and a fully-connected layer. For completeness, in some rare examples, a flatten layer can be positioned in a sequence of neural network layers between two convolution layers, or between two fully-connected layers.

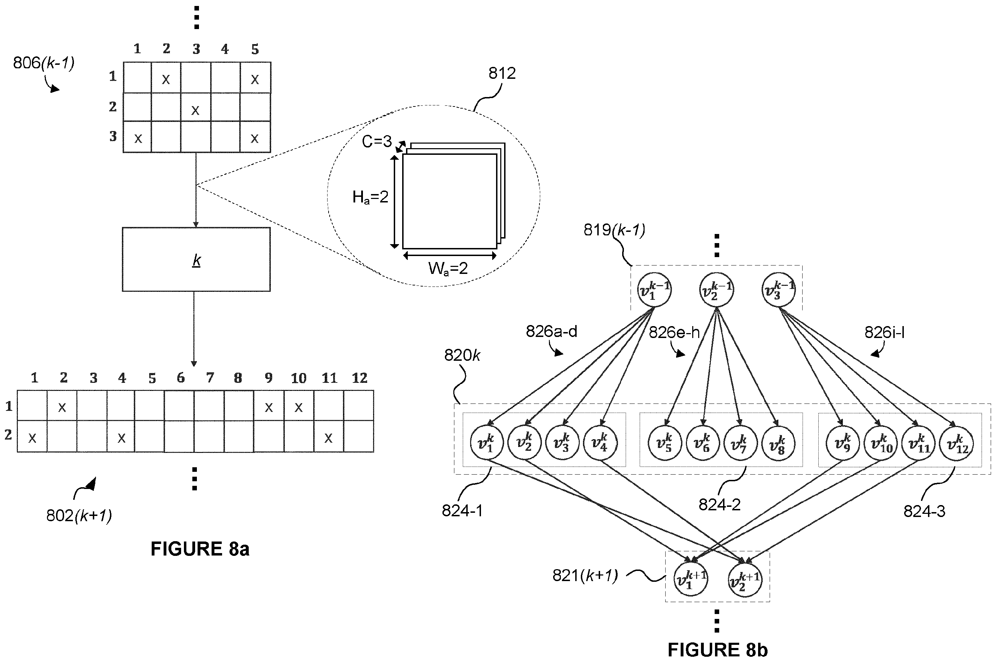

A vertex subset of the plurality of vertex subsets comprised by the graph may be representative of a flatten layer of the plurality of layers of the neural network. That vertex subset may comprise *n* groups of vertices, *n* being equal to the number of channels of data of the activation data set on which the flatten layer is configured to perform a flatten operation. Each group of vertices may comprise *m* vertices, *m* being equal to the number of values in each channel of data of said activation data set. Each vertex comprised by a vertex subset representative of a flatten layer may be representative of a respective output channel of that flatten layer. Each vertex comprised by each group of vertices in a vertex subset representative of a flatten layer may be connected, by a respective edge, to a vertex in a different vertex subset, said vertex representative of an output channel of a preceding layer of the plurality of layers of the neural network, said output channel corresponding to the channel of the activation data set on which the part of the flatten operation represented by that group of vertices is performed. The representation of a flatten layer in the graph can be understood further with reference to the example shown in Figures 8a and 8b.

Figure 8a is representative of a plurality of layers including a flatten layer. In particular, Figure 8a is representative of an example sequence of layers including a convolution layer, a flatten layer and a fully-connected layer. In Figure 8a, layer *(k-1)* is convolution layer. Layer *(k-1)* is a preceding layer of the neural network, relative to layer *k*. The activation data set 812 output by layer *(k-1)* may be the activation data set input to layer *k*. In Figure 8a, layer *k* is a flatten layer. Layer *k* is a preceding layer of the neural network, relative to layer *(k+1)*. The activation data set output by layer k may be the activation data set input to layer *(k+1)*. In Figure 8a, layer *(k+1)* is a fully-connected layer. It is to be understood that further layers may exist prior to layer *(k-1)* and/or subsequent to layer *(k +1)*, as shown by ellipses ("...") in Figure 8a. It is also to be understood that further layers that are not able to change the number of channels between the input activation data set they receive and the output activation data set they generate, such as pooling layers and/or activation layers, may exist between convolution layer *(k-1)* and flatten layer *k,* and/or flatten layer *k* and fully-connected layer *(k+1)* - as will be described in further detail herein.

Matrix 806*(k-1)* can be determined for convolution layer *(k-1)* using the principles described herein with reference to Figure 6b. In Figure 8a, matrix 806*(k-1)* is representative of the set of coefficients of a convolution layer *(k-1)* having three output channels and five input channels. In Figure 8a, that convolution layer outputs an activation data set 812 having three channels, each channel having a spatial dimension $H_a \times W_a$. In Figure 8a, $H_a$ = 2 and $W_a$ = 2. That is, each channel of output activation data 812 comprises four values (i.e., as $2 \times 2 = 4$). In Figure 8a, layer *k* is a flatten layer having twelve output channels. That is, in Figure 8a, layer k outputs a one-dimensional sequence of values (not shown in Figure 8a) comprising the values of the output activation data set 812 - e.g. 12 values (i.e. as $3 \times 2 \times 2 = 12$). Matrix 802*(k+1)* can be determined for fully-connected layer *(k+1)* using the principles described herein with reference to Figure 6a. In Figure 8a, matrix 802*(k+1)* is representative of the set of coefficients of a fully-connected layer *(k+1)* having twelve input channels (corresponding to the twelve output channels of layer *k*) and two output channels.

Figure 8b shows a graph representative of the flow of data through the plurality of layers represented in Figure 8a. The graph comprises three vertex subsets 819 *(k-1)*, 820k and 821*(k+1),* representative of layers *(k-1), k* and *(k+1),* respectively.

Vertex subset 819*(k-1)* is representative of convolution layer *(k-1)* shown in Figure 8a. Vertex subset 819 *(k-1)* comprises three vertices, $v_1^{k-1}$ to $v_3^{k-1}$, each vertex representative of a respective one of the three output channels of layer *(k-1)*. That is, vertex $v_1^{k-1}$ is representative of the first output channel of layer *(k-1),* vertex $v_2^{k-1}$ is representative of the second output channel of layer *(k-1),* and vertex $v_3^{k-1}$ is representative of the third output channel of layer *(k-1)*.

Vertex subset 820*k* is representative of flatten layer *k* shown in Figure 8a. Vertex subset 820k comprises three groups of vertices 824-1, 824-2 and 824-3 (i.e. *n* = 3). This is because the activation data set 812 output by convolution layer *(k-1)* shown in Figure 8a comprises three channels. Each group of vertices 824-1, 824-2 and 824-3 comprises four vertices (i.e. *m* = 4). This is because each channel of activation data set 812 shown in Figure 8a comprises four values (i.e., as $2 \times 2 = 4$). That is: group of vertices 824-1 comprises four vertices, $v_1^k$ to $v_4^k$; group of vertices 824-2 comprises four vertices, $v_5^k$ to $v_8^k$; and group of vertices 824-3 comprises four vertices, $v_9^k$ to $v_{12}^k$. Each vertex $v_1^k$ to $v_4^k$ comprised by group of vertices 824-1 is connected, by respective edges 826a-d, to vertex $v_1^{k-1}$ representative of the first output channel of layer *(k-1)*. Group of vertices 824-1 may represent flattening the first channel of activation data set 812 into a one-dimensional sequence of four values - which is part of the flatten operation performed by flatten layer *k* shown in Figure 8a. Each vertex $v_5^k$ to $v_8^k$ comprised by group of vertices 824-2 is connected, by respective edges 826e-h, to vertex $v_2^{k-1}$ representative of the second output channel of layer *(k-1)*. Group of vertices 824-2 may represent flattening the second channel of activation data set 812 into a one-dimensional sequence of four values - which is part of the flatten operation performed by flatten layer *k* shown in Figure 8a. Each vertex $v_9^k$ to $v_{12}^k$ comprised by group of vertices 824-3 is connected, by respective edges 826i-l, to vertex $v_3^{k-1}$ representative of the third output channel of layer *(k-1)*. Group of vertices 824-3 may represent flattening the third channel of activation data set 812 into a one-dimensional sequence of four values - which is part of the flatten operation performed by flatten layer k shown in Figure 8a. In this way, a graph representative of the flow of data (e.g. the potential flow of non-zero data) between layers *(k-1)* and *k* - which, in this example, include a convolution layer *(k-1)* and a flatten layer *k* - can be formed.

Vertex subset 821*(k+1)* is representative of fully-connected layer *(k+1)* shown in Figure 8a. Vertex subset 821*(k+1)* comprises two vertices, $v_1^{k+1}$ and

$v_2^{k+1}$ , each vertex representative of a respective one of the two output channels of layer *(k+1)*. The vertices comprised by vertex subset 821*(k+1)* can be connected, by edges (shown in Figure 8b, but not assigned reference numbers), to vertices comprised by vertex subset 820k in dependence on the determined matrix 802*(k+1)* according to the principles described herein with reference to Figures 7a and 7b. In this way, a graph representative of the flow of data (e.g. the potential flow of non-zero data) between layers *k* and *(k+1)* - which, in this example, include a flatten layer *k* and a fully-connected layer *(k+1)* - can be formed.

As described herein, in some rare examples, a flatten layer can be positioned in a sequence of neural network layers between two convolution layers, or between two fully-connected layers. It is to be understood that such a flatten layer can be represented in the graph formed in step S504 according to the same principles as described herein with reference to the example flatten layer shown in Figures 8a and 8b.

The plurality of layers of the received neural network may comprise an add layer. An add layer is a type of neural network layer that is configured to perform a summation operation between sets of respective channels of a plurality of activation data sets, each of said plurality of data sets having the same number of channels. In an example, an add layer can be used to sum activation data sets output by a plurality of convolution layers, so as to output an activation data set to a subsequent convolution layer. In another example, an add layer can be used to sum activation data sets output by a plurality of fully-connected layers, so as to output an activation data set to a subsequent fully-connected layer.

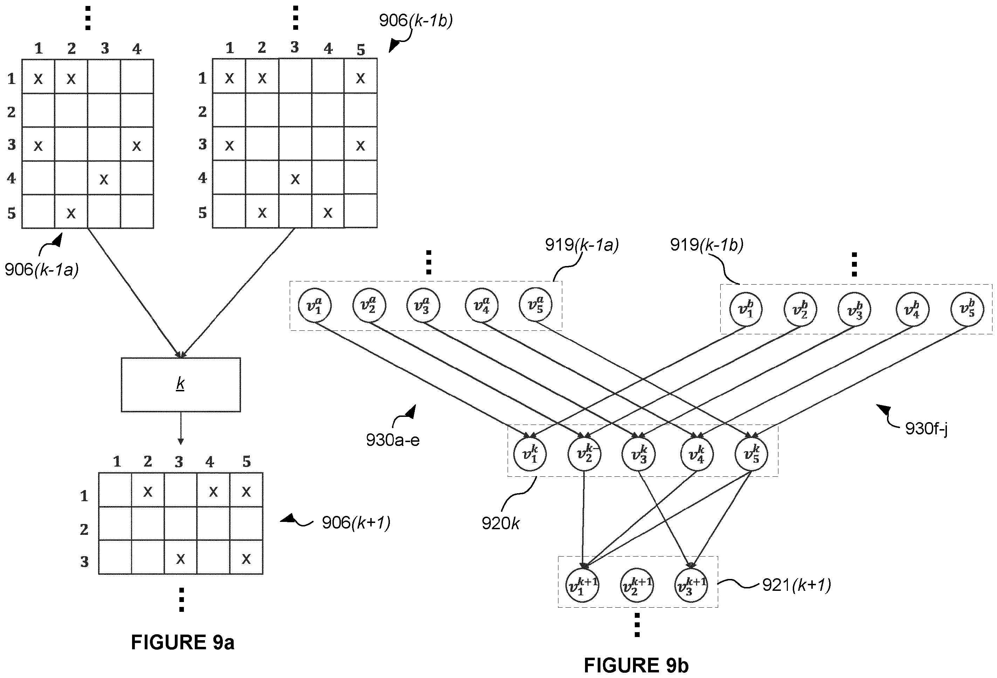

A vertex subset of the plurality of vertex subsets comprised by the graph may be representative of an add layer of the plurality of layers of the neural network. That vertex subset may comprise a number of vertices equal to the number of channels in each of the plurality of activation data sets that that add layer is configured to sum, each of said plurality of activation data sets having the same number of channels. Each vertex comprised by that vertex subset may be representative of a respective summation operation performed between a set of respective channels of the plurality of activation data sets, such that each vertex comprised by that vertex subset is representative of a respective output channel of the add layer. Each vertex comprised by a vertex subset representative of an add layer may be connected, by respective edges, to vertices in different vertex subsets, said vertices being representative of output channels of preceding layers of the plurality of layers of the neural network, said output channels corresponding to the channels of the set of respective channels of the plurality of activation data sets between which the summation operation represented by that vertex is performed. The representation of an add layer in the graph can be understood further with reference to the example shown in Figures 9a and 9b.

Figure 9a is representative of a plurality of layers including an add layer. In particular, Figure 9a is representative of an example sequence of layers including a pair of convolution layers, an add layer and a further convolution layer. In Figure 9a, layer *(k-1a)* is a convolution layer. Layer *(k-1a)* is a preceding layer of the neural network, relative to layer *k*. The activation data set output by the layer *(k-1a)* is the activation data set input to layer *k*. In Figure 9a, layer *(k-1b)* is a convolution layer. Layer *(k-1b)* is a preceding layer of the neural network, relative to layer *k*. The activation data set output by layer *(k-1b)* is the activation data set input to layer *k*. The activation data set output by layer *(k-1b)* has the same number of channels as the activation data set output by layer *(k-1a)*. In Figure 9a, layer *k is* an add layer. Layer *k* is a preceding layer of the neural network, relative to layer *(k+1)*. The activation data set output by layer *k* may be the activation data set input to layer *(k+1)*. In Figure 8a, layer *(k+1)* is a convolution layer.

It is to be understood that further layers may exist prior to layer *(k-1a),* prior to layer *(k-1b)* and/or subsequent to layer *(k+1),* as shown by ellipses ("...") in Figure 9a. It is also to be understood that further layers that are not able to change the number of channels between the input activation data set they receive and the output activation data set they generate, such as pooling and/or activation layers, may exist between add layer *k* and convolution layer *(k+1)* - as will be described in further detail herein.

Matrix 906*(k-1a)* can be determined for convolution layer *(k-1a)* using the principles described herein with reference to Figure 6b. Matrix 906*(k-1a)* is representative of the set of coefficients of convolution layer *(k-1a)* having four input channels and five output channels. Matrix 906*(k-1b)* can be determined for convolution layer *(k-1b)* using the principles described herein with reference to Figure 6b. Matrix 906*(k-1b)* is representative of the set of coefficients of convolution layer *(k-1b)* having five input channels and five output channels (equalling the number of output channels of layer *(k-1a))*. Matrix 906 *(k+1)* can be determined for convolution layer *(k+1)* using the principles described herein with reference to Figure 6b. Matrix 906*(k+1)* is representative of the set of coefficients of convolution layer *(k+1)* having five input channels (corresponding to the five output channels of layer *k*) and three output channels.

In Figure 9a, layer *k* is an add layer having five output channels (equalling the number of output channels of layers *(k-1a)* and *(k-1b))*. That is, in Figure 9a, layer *k* is configured to perform a summation operation between sets of respective channels of the activation data sets output by layers *(k-1a)* and *(k-1b),* so as to output an activation data set having five channels. That is, layer *k* is configured to perform a summation operation between: the first channel of a first activation data set corresponding to the first output channel of layer *(k-1a)* and the first channel of a second activation data set corresponding to the first output channel of layer *(k-1b),* so as to generate a first channel of an output activation data set; the second channel of the first activation data set corresponding to the second output channel of layer *(k-1a)* and the second channel of the second activation data set corresponding to the second output channel of layer *(k-1b),* so as to generate a second channel of the output activation data set; the third channel of the first activation data set corresponding to the third output channel of layer *(k-1a)* and the third channel of the second activation data set corresponding to the third output channel of layer *(k-1b),* so as to generate a third channel of the output activation data set; the fourth channel of the first activation data set corresponding to the fourth output channel of layer *(k-1a)* and the fourth channel of the second activation data set corresponding to the fourth output channel of layer *(k-1b),* so as to generate a fourth channel of the output activation data set; and the fifth channel of the first activation data set corresponding to the fifth output channel of layer *(k-1a)* and the fifth channel of the second activation data set corresponding to the fifth output channel of layer *(k-1b),* so as to generate a fifth channel of the output activation data set.

Figure 9b shows a graph representative of the flow of data through the plurality of layers represented in Figure 9a. The graph comprises four vertex subsets 919*(k-1a)*, 919*(k-1b)*, 920*k* and 921*(k+1),* representative of layers *(k-1a), (k-1b), k* and *(k+1),* respectively.

Vertex subset 919*(k-1a)* comprises five vertices, $v_1^a$ to $v_5^a$, each vertex representative of a respective one of the five output channels of layer *(k-1a).* (The superscript "a" is used in place of "*k-1a*" for ease of illustration in Figure 9b). That is, vertex $v_1^a$ is representative of the first output channel of layer *(k-1a),* vertex $v_2^a$ is representative of the second output channel of layer *(k-1a),* vertex $v_3^a$ is representative of the third output channel of layer *(k-1a),* vertex $v_4^a$ is representative of the fourth output channel of layer *(k-1a),* and vertex $v_5^a$ is representative of the fifth output channel of layer *(k-1a).*

Vertex subset 919*(k-1b)* comprises five vertices, $v_1^b$ to $v_5^b$, each vertex representative of a respective one of the five output channels of layer *(k-1b).* (The superscript "*b*" is used in place of "*k-1b*" for ease of illustration in Figure 9b). That is, vertex $v_1^b$ is representative of the first output channel of layer *(k-1b),* vertex $v_2^b$ is representative of the second output channel of layer *(k-1b),* vertex $v_3^b$ is representative of the third output channel of layer *(k-1b),* vertex $v_4^b$ is representative of the fourth output channel of layer *(k-1b),* and vertex $v_5^b$ is representative of the fifth output channel of layer *(k-1b).*

Vertex subset 920k is representative of add layer *k* shown in Figure 9a. The activation data sets output by layers *(k-1a)* and *(k-1b)* shown in Figure 9a, that add layer *k* is configured to sum, both comprise five channels. As such, vertex subset 920k comprises five vertices, $v_1^k$ to $v_5^k$, each being representative of a respective summation operation performed between a set of respective channels of the activation data sets output by layers *(k-1a)* and *(k-1b)* such that each vertex, $v_1^k$ to $v_5^k$, is representative of a respective output channel of the add layer *k*. That is: vertex $v_1^k$ is representative of a summation operation between the first channel of the activation data set output by layer *(k-1a)* and the first channel of the activation data set output by layer *(k-1b)* such that vertex $v_1^k$ is representative of the first output channel of add layer *k;* vertex $v_2^k$ is representative of a summation operation between the second channel of the activation data set output by layer *(k-1a)* and the second channel of the activation data set output by layer *(k-1b)* such that vertex $v_2^k$ is representative of the second output channel of add layer *k;* vertex $v_3^k$ is representative of a summation operation between the third channel of the activation data set output by layer *(k-1a)* and the third channel of the activation data set output by layer *(k-1b)* such that vertex $v_3^k$ is representative of the third output channel of add layer *k;* vertex $v_4^k$ is representative of a summation operation between the fourth channel of the activation data set output by layer *(k-1a)* and the fourth channel of the activation data set output by layer *(k-1b)* such that vertex $v_4^k$ is representative of the fourth output channel of add layer *k;* and vertex $v_5^k$ is representative of a summation operation between the fifth channel of the activation data set output by layer *(k-1a)* and the fifth channel of the activation data set output by layer *(k-1b)* such that vertex $v_5^k$ is representative of the fifth output channel of add layer *k*.

Vertex $v_1^k$ is connected, by a respective edge, to each of vertices $v_1^a$ and $v_1^b$ - which represent the first output channels of layers *(k-1a)* and *(k-1b)* that correspond to the first channels of the activation data sets output by layers *(k-1a)* and *(k-1b)* that are summed in the summation operation represented by vertex $v_1^k$. Vertex $v_2^k$ is connected, by a respective edge, to each of vertices $v_2^a$ and $v_2^b$ - which represent the second output channels of layers *(k-1a)* and *(k-1b)* that correspond to the second channels of the activation data sets output by layers *(k-1a)* and *(k-1b)* that are summed in the summation operation represented by vertex $v_2^k$. Vertex $v_3^k$ is connected, by a respective edge, to each of vertices $v_3^a$ and $v_3^b$ - which represent the third output channels of layers *(k-1a)* and *(k-1b)* that correspond to the third channels of the activation data sets output by layers *(k-1a)* and *(k-1b)* that are summed in the summation operation represented by vertex $v_3^k$. Vertex $v_4^k$ is connected, by a respective edge, to each of vertices $v_4^a$ and $v_4^b$ - which represent the fourth output channels of layers *(k-1a)* and *(k-1b)* that correspond to the fourth channels of the activation data sets output by layers *(k-1a)* and *(k-1b)* that are summed in the summation operation represented by vertex $v_4^k$. Vertex $v_5^k$ is connected, by a respective edge, to each of vertices $v_5^a$ and $v_5^b$ - which represent the fifth output channels of layers *(k-1a)* and *(k-1b)* that correspond to the fifth channels of the activation data sets output by layers *(k-1a)* and *(k-1b)* that are summed in the summation operation represented by vertex $v_5^k$. The edges referred to in this paragraph are assigned reference number 930a-j in Figure 9b. In this way, a graph representative of the flow of data (e.g. the potential flow of non-zero data) between layers *(k-1a), (k-1b)* and k - which, in this example, include two convolution layers *(k-1a)* and *(k-1b)* and an add layer *k* - can be formed.

Vertex subset 921*(k+1)* is representative of layer *(k+1)* shown in Figure 9a. Vertex subset 921*(k+1)* comprises three vertices, $v_1^{k+1}$ to $v_3^{k+1}$, each vertex representative of a respective one of the three output channels of layer *(k+1)*. The vertices comprised by vertex subset 921*(k+1)* are connected, by edges (shown in Figure 9b, but not assigned reference numbers), to vertices comprised by vertex subset 920k in dependence on the determined matrix 902/906*(k+1)* according to the principles described herein with reference to Figures 7a and 7b. In this way, a graph representative of the flow of data (e.g. the potential flow of non-zero data) between layers *k* and *(k+1)* - which, in this example, include an add layer *k* and a convolution layer *(k+1)* - can be formed.

As described herein, an add layer can alternatively be used to sum activation data sets output by a plurality of fully-connected layers, so as to output an activation data set to a subsequent fully-connected layer. It is to be understood that such an add layer can be represented in the graph formed in step S504 according to the same principles as described herein with reference to the example add layer shown in Figures 9a and 9b.

The plurality of layers of the received neural network may comprise a pooling layer. A pooling layer is a type of neural network layer that is configured to perform an operation such as max-pooling or average-pooling on an activation data set. For example, a pooling operation comprises dividing each channel of an activation data set into multiple groups of activation values, each group comprising a plurality of activation values, and representing each group of activation values by a respective single value. In a max-pooling operation, the single value representing a group is the maximum (e.g. the

greatest magnitude) activation value within that group. In an average-pooling operation, the single value representing a group is the average (e.g. mean, medium or mode) of the plurality of activation values within that group. A pooling layer can be used to reduce the $H_a$ and $W_a$ dimensions of a channel of an activation data set having dimensions $C_{in} \times H_a \times W_a$. That is, a pooling layer does not change the $C_{in}$ dimension of a channel of an activation data set having dimensions $C_{in} \times H_a \times W_a$. As such, because a pooling layer is not able to change the number of channels between the input activation data set it receives and the output activation data set it generates, it need not be represented in the graph formed in step S504. That is, the neural network received in step S502 may comprise a pooling layer, and the plurality of vertex subsets comprised by the graph formed in step S504 need not include a vertex subset representative of that pooling layer of the neural network.

The plurality of layers of the received neural network may comprise an activation layer. An activation layer is a type of neural network layer that is configured to apply an activation function such as a sigmoid function or step function to each of the activation values comprised by an activation data set. An activation layer does not change the $C_{in}$ dimension of a channel of an activation data set having dimensions $C_{in} \times H_a \times W_a$. As such, because an activation layer is not able to change the number of channels between the input activation data set it receives and the output activation data set it generates, it need not be represented in the graph formed in step S504. That is, the neural network received in step S502 may comprise an activation layer, and the plurality of vertex subsets comprised by the graph formed in step S504 need not include a vertex subset representative of that activation layer of the neural network.

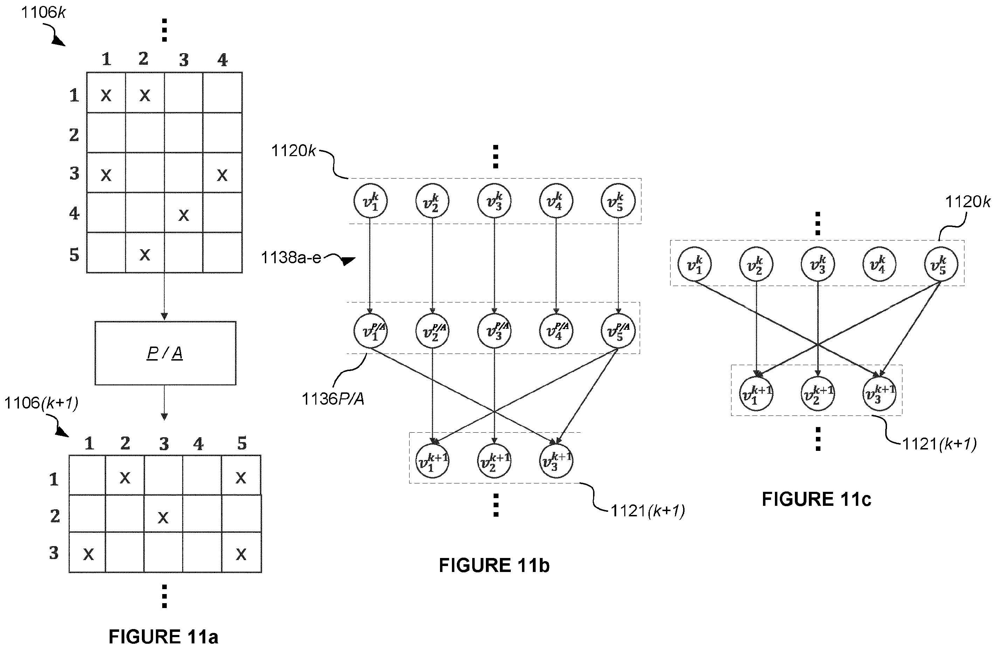

The reason that a pooling layer and/or an activation layer need not be represented in the graph formed in step S504 can be understood further with reference to the example shown in Figures 11a to 11c.

Figure 11a is representative of a plurality of layers including a pooling layer or an activation layer. In particular, Figure 11a is representative of a sequence of layers including a first convolution layer, a pooling or activation layer and a second convolution layer.

In Figure 11a, two matrices are shown that are representative of convolution layers - layers *k* and *(k+1)*. In Figure 11a, convolution layer *k* can be considered to be a preceding layer of the neural network, relative to pooling or activation layer *P/A*. The activation data set output by convolution layer *k* may be the activation data set input to pooling or activation layer *P/A*. In Figure 11a, pooling or activation layer *P/A* can be considered to be a preceding layer of the neural network, relative to convolution layer *(k+1)*. The activation data set output by pooling or activation layer *P/A* may be the activation data set input to convolution layer *(k+1)*. It is to be understood that further layers may exist prior to layer *k* and/or subsequent to layer *(k+1)*, as shown by ellipses ("...") in Figure 11a.

Matrix 1106k is representative of the set of coefficients of convolution layer *k*. Matrix 1106k has the same properties as matrix 706k as described with reference to Figure 7a. Matrix 1106*(k+1)* is representative of the set of coefficients of convolution layer *(k+1)*. Matrix 1106*(k+1)* has the same properties as matrix 706 *(k+1)* as described with reference to Figure 7a.

Figure 11b shows a first graph representative of the flow of data through the plurality of layers represented in Figure 11a. The first graph comprises three vertex subsets 1120*k,* 1136P/*A* and 1121*(k+1),* representative of convolution layer k, pooling or activation layer *P/A* and convolution layer *(k+1)*, respectively.

Vertex subset 1120k is representative of convolution layer *k* shown in Figure 11a. Vertex subset 1120k comprises five vertices, $v_1^k$ to $v_5^k$, each vertex representative of a respective one of the five output channels of convolution layer *k* shown in Figure 11a. Vertex subset 1136P/A is representative of pooling or activation layer *P/A* shown in Figure 11a. As described herein, pooling and activation layers are not able to change the number of channels between the input activation data set they receive and the output activation data set they generate. Thus, vertex subset 1136P/A comprises the same number of vertices as vertex subset 1120k. That is, vertex subset 1136P/A comprises five vertices, $v_1^{P/A}$ to $v_5^{P/A}$, each vertex representative of a respective one of the five output channels of pooling or activation layer *P/A* shown in Figure 11a. Each vertex in vertex subset 1136P/A is connected, by a respective edge 1138a-e, to a respective vertex in vertex subset 1120k. That is: vertex $v_1^{P/A}$ representative of the first output channel of pooling or activation layer *P/A* is connected by an edge 1138a to vertex $v_1^k$ representative of the first output channel of convolution layer k; vertex $v_2^{P/A}$ representative of the second output channel of pooling or activation layer *P/A* is connected by an edge 1138b to vertex $v_2^k$ representative of the second output channel of convolution layer *k*; vertex $v_3^{P/A}$ representative of the third output channel of pooling or activation layer *P/A* is connected by an edge 1138c to vertex $v_3^k$ representative of the third output channel of convolution layer *k*; vertex $v_4^{P/A}$ representative of the fourth output channel of pooling or activation layer *P/A* is connected by an edge 1138d to vertex $v_4^k$ representative of the fourth output channel of convolution layer *k*; and vertex $v_5^{P/A}$ representative of the fifth output channel of pooling or activation layer *P/A* is connected by an edge 1138e to vertex $v_5^k$ representative of the fifth output channel of convolution layer *k*. In this way, a graph representative of the flow of data (e.g. the potential flow of non-zero data) between layers *k* and *P/A* - that, in this example, include a convolution layer k and pooling or activation layer *P/A* - can be formed.

Vertex subset 1121*(k+1)* is representative of convolution layer *(k+1)* shown in Figure 11a. Vertex subset 1121*(k+1)* comprises three vertices, $v_1^{k+1}$ to $v_3^{k+1}$, each vertex representative of a respective one of three output channels of layer *(k+1)* shown in Figure 11a. Edges (shown in Figure 11b, but not assigned reference numbers) between vertices of vertex subsets 1136P/A and 1121*(k+1)* can be formed in dependence on the determined matrix 1106*(k+1)*, by considering pooling or activation layer *P/A* as the preceding layer, in an analogous way as the edges between vertices of vertex subsets 720k and 721*(k+1)* are formed in dependence on the determined matrix 706*(k+1)* as described herein with reference to Figures 7a and 7b. In this way, a graph representative of the flow of data (e.g. the potential flow of non-zero data) between layers *P/A* and *(k+1)* - that, in this example, include a pooling or activation layer *P/A* and a convolution layer *(k+1)* - can be formed.

Figure 11c shows a second, alternative, graph representative of the flow of data through the plurality of layers represented in Figure 11a. The second graph comprises two vertex subsets 1120*k* and 1121*(k+1),* representative of convolution layer *k* and convolution layer *(k+1)*, respectively. As described herein, because pooling and activation layers are not able to change the number of channels between the input activation data set they receive and the output activation data set they generate, they need not be represented in the graph formed in step S504. Thus, pooling or activation layer *P/A* shown in Figure 11a is not represented in the second graph shown in Figure 11c. Not representing pooling or activation layers in the graph formed in step S504 can be advantageous, as this can reduce the time and/or processing power required to traverse that graph in step S506, as will be described further herein.

In further detail, vertex subset 1120*k* is representative of convolution layer *k* shown in Figure 11a. Vertex subset 1120*k* comprises five vertices, $v_1^k$ to $v_5^k$, each vertex representative of a respective one of the five output channels of convolution layer *k* shown in Figure 11a. Vertex subset *1121(k+1)* is representative of convolution layer *(k+1)* shown in Figure 11a. Vertex subset 1121*(k+1)* comprises three vertices, $v_1^{k+1}$ to $v_3^{k+1}$, each vertex representative of a respective one of three output channels of layer *(k+1)* shown in Figure 11a.

In examples where a pooling or activation layer is interspersed between a first convolution layer and a second convolution layer, the first convolution layer can be considered to be the preceding layer of the neural network relative to the second convolution layer. This is because, as described herein, pooling and activation layers are not able to change the number of channels between the input activation data set they receive and the output activation data set they generate. This means that the $N^{th}$ output channel of the pooling or activation layer necessarily corresponds to the $N^{th}$ output channel of the convolution layer preceding that pooling or activation layer. It follows that the $N^{th}$ output channel of the convolution layer preceding the pooling or activation layer also necessarily corresponds to the $N^{th}$ input channel of the convolution layer subsequent to that pooling or activation layer. As such, in Figure 11a, convolution layer $k$ can also be considered to be the preceding layer of the neural network, relative to convolution layer $(k+1)$.

As such, edges (shown in Figure 11c, but not assigned reference numbers) between vertices of vertex subsets 1120k and 1121$(k+1)$ can be formed in dependence on the determined matrix 1106$(k+1)$, by considering convolution layer $k$ as the preceding layer, in an analogous way as the edges between vertices of vertex subsets 720k and 721$(k+1)$ are formed in dependence on the determined matrix 706$(k+1)$ as described herein with reference to Figures 7a and 7b.

It is to be understood that a pooling or activation layer could alternatively exist adjacent to (e.g. prior to, or subsequent to) any other type of layer (e.g. a fully-connected layer), or between two of any other type of layer (e.g. two fully-connected layers). It is also to be understood that, for analogous reasons as described herein with reference to Figures 11a to 11c, pooling and/or activation layers that exist adjacent to (e.g. prior to, or subsequent to) any other type of layer (e.g. a fully-connected layer), or between two of any other type of layer (e.g. two fully-connected layers), need not be represented in the graph formed in step S504. As would be understood by the skilled person in light of the description of Figures 11a to 11c, in examples where a pooling or activation layer is interspersed between a first layer (e.g. of any suitable layer type, such as a fully-connected or convolution layer) and a second layer (e.g. of any suitable layer type, such as a fully-connected or convolution layer), for the purposes of forming the graph in step S504, the first layer can be considered to be the preceding layer of the neural network relative to the second layer.

Using the principles described herein with reference to Figures 6a to 11c, a graph can be formed in step S504 that is representative of the flow of data (e.g. the potential flow of non-zero data) through the plurality of layers of a neural network comprising at least one of any one or more of: a fully-connected layer, a convolution layer, an add layer, a flatten layer, a pooling layer, and/or an activation layer.

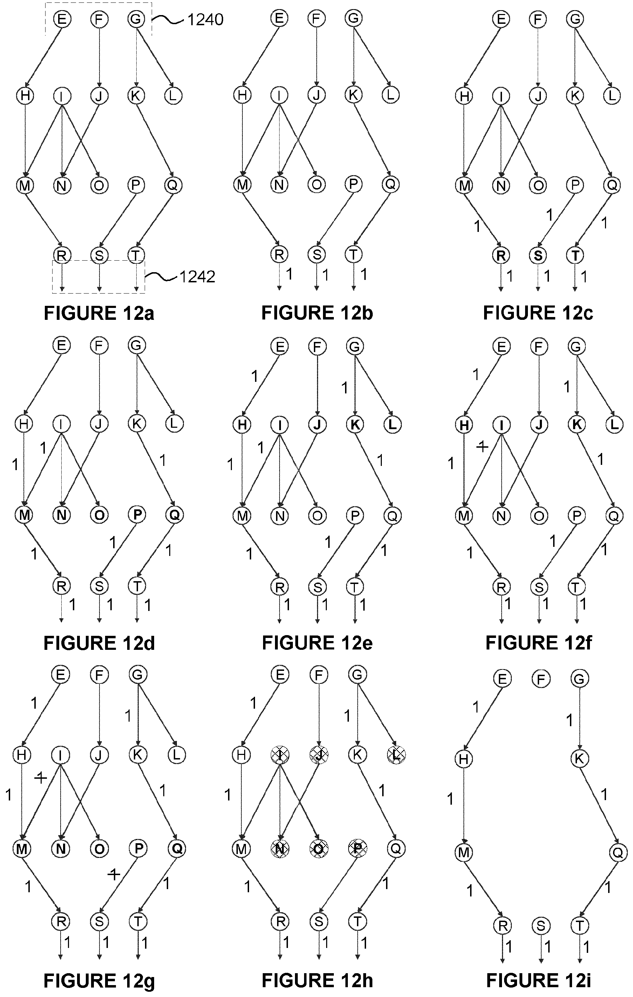

Returning to Figure 5, in step S506, one or more redundant channels comprised by the plurality of layers of the neural network are identified by traversing the graph formed in step S504. A redundant channel is a channel, comprised by a layer of the plurality of layers of the neural network, that can be removed from the neural network without changing the output of the neural network. In other words, a redundant channel is a channel, comprised by a layer of the plurality of layers of the neural network, that does not affect the output of the neural network - e.g. as described herein with reference to Figure 2c. One or more redundant channels comprised by the plurality of layers of the neural network is identified by traversing the graph so as to assess each edge representative of the potential flow of non-zero data between two channels so as to determine whether non-zero data actually flows between those channels when the neural network is performed - and identifying one or more redundant channels comprised by the plurality of layers of the neural network in dependence on those determinations. Put another way, traversing the graph comprises assessing each vertex of the plurality of vertices in sequence, in dependence on any incoming and/or outgoing edges of that vertex, to determine whether the output channel represented by that vertex can be removed from the neural network without changing the output of the neural network. The at least one processor 404 shown in Figure 4 can be configured to perform step S506. A number of example implementations of step S506 are described herein with reference to Figures 12a-i, 13a-f and 14a-f.

Figures 12a-i show, in a preferred approach, how a graph representative of the flow of data through a plurality of layers of a neural network can be traversed so as to identify one or more redundant channels comprised by the plurality of layers.

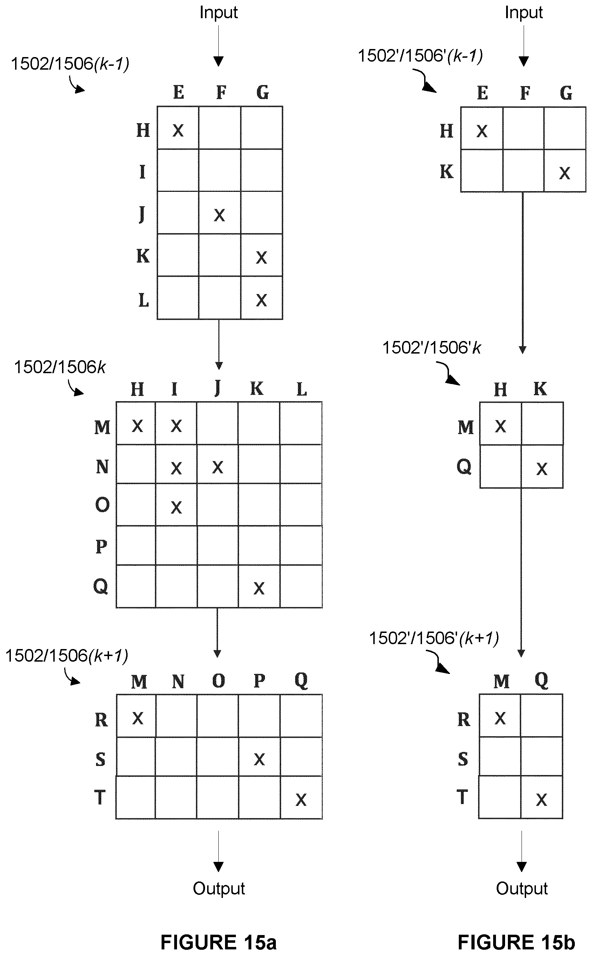

Figure 15a is representative of a neural network comprising a sequence of fully-connected or convolution layers. Figure 12a shows a graph representative of the flow of data through the plurality of layers represented in Figure 15a. Vertex subsets comprising (i) vertices H, I, J, K and L, (ii) vertices M, N, O, P and Q, and (iii) vertices R, S and T shown in Figure 12a are representative of fully-connected or convolution layers $(k-1)$, $k$ and $(k+1)$, respectively, shown in Figure 15a. The plurality of vertex subsets are arranged in a sequence representative of the sequence in which the plurality of layers of the neural network are arranged. Said vertex subsets, and the edges connecting them as shown in Figure 12a, can be formed in dependence on determined matrices 1502/1506$(k-1)$, 1502/1506$k$ and 1502/1506$(k+1)$ shown in Figure 15a according to the principles described herein with reference to Figures 7a and 7b - which will not be repeated here for conciseness.

The graph shown in Figure 12a further comprises an input vertex subset 1240 representative of an input to the plurality of layers of the neural network. An input vertex subset may comprise one or more input vertices, each input vertex of the one or more input vertices being representative of a channel of the input to the plurality of layers of the neural network. The input to the plurality of layers of the neural network may be an activation data set originally input into a neural network consisting of the plurality of layers, or an activation data set output by a preceding layer of the neural network not included within the plurality of layers of the received neural network to be compressed. In Figure 12a, the input vertex subset 1240 comprises three vertices E, F and G - which correspond to the three input channels of the first fully-connected or convolution layer in the plurality of layers represented in Figure 15a. It is to be understood that presence of an input vertex subset (e.g. input vertex subset 1240) to the graph is optional - as explained in further detail herein.

The graph shown in Figure 12a further comprises one or more output edges representative of an output from the plurality of layers of the neural network. The output from the plurality of layers of the neural network may be an activation data set finally output from a neural network consisting of the plurality of layers, or an input to a subsequent layer of the neural network not included within the plurality of layers of the received neural network to be compressed. The one or more output edges extend from the respective one or more vertices of the vertex subset representative of the sequentially last layer of the plurality of layers of the neural network. In Figure 12a, the output edges 1242 extend from vertices R, S and T - which are representative of the three output channels of the sequentially last fully-connected or convolution layer in the plurality of layers represented in Figure 15a. It is to be understood that presence of one or more output edges (e.g. output edges 1242) to the graph is optional - as explained in further detail herein.

In a preferred approach, to identify one or more redundant channels, each of the output edges can be assigned a first state. Assigning each of the output edges the first state may comprise labelling each of the output edges with a first value. For example, this is shown in Figure 12b, in which each of the output edges are labelled with a "1". The first value could be a "1" - although this need not be the case. For example, the first value could alternatively be a "0". It is to be understood that any other arbitrarily selected value could be used as the first value. It is also to be understood that a numerical label need not be used to assign an edge the first state. For example, a flag may be associated with an edge to record that it has been assigned the first state; and/or a mask corresponding to all of the edges in the graph may be maintained that can be used to record the current state of each edge. The state assigned to an edge may be stored in memory - e.g. memory 406 shown in Figure 4.

Next, the sequence of vertex subsets can be traversed. The sequence of vertex subsets can be traversed, from the vertex subset representative of the sequentially last layer of the plurality of layers of the neural network (e.g. the vertex subset comprising vertices R, S, T in Figure 12), to the vertex subset representative of the sequentially first layer of the plurality of layers of the neural network (e.g. the vertex subset comprising vertices H, I, J, K and L in Figure 12), assessing each of the one or more vertices in each vertex subset to determine whether that vertex has at least one outgoing edge assigned the first state. If yes, each of the incoming edges of that vertex are assigned the first state. If not, each of the incoming edges of that vertex are not assigned the first state. For example, if a vertex does not have at least one outgoing edge assigned the first state, each of the incoming edges of that vertex can be assigned a different state (e.g. a second state, such as by not labelling those incoming edges at all or by labelling those incoming edges with a different value (e.g. "0")). This step may be described as traversing the graph in reverse topologically sorted order.

For completeness, an edge can be an outgoing edge of a first vertex and/or an incoming edge of a second vertex. An incoming edge of a vertex is representative of the potential flow of non-zero data into the output channel represented by that vertex. An outgoing edge of a vertex is representative of the potential flow of non-zero data from the output channel represented by that vertex. For example, the edge between vertex M and vertex R is an incoming edge of vertex R and an outgoing edge of vertex M.

For example, in Figure 12c, the vertex subset comprising vertices R, S, T is assessed. Each of vertices R, S and T has an outgoing edge labelled with a "1". So, each of the incoming edges of vertices R, S and T is labelled with a "1". Next, in Figure 12d, the vertex subset comprising vertices M, N, O, P and Q is assessed. Each of vertices M, P and Q has an outgoing edge labelled with a "1". So, each of the incoming edges of vertices M, P and Q is labelled with a "1" - although vertex P does not have any incoming edges to label. Each of vertices N and O does not have an outgoing edge labelled with a "1" (in fact, these vertices do not have any outgoing edges). So, each of the incoming edges of vertices N and O are not labelled with a "1". Next, in Figure 12e, the vertex subset comprising vertices H, I, J, K and L is assessed. Each of vertices H, I and K has an outgoing edge labelled with a "1". So, each of the incoming edges of vertices H, I and K is labelled with a "1" - although vertex I does not have any incoming edges to label. Each of vertices J and L does not have an outgoing edge labelled with a "1" (in fact, vertex L does not have any outgoing edges). So, each of the incoming edges of vertices J and L are not labelled with a "1".

The skilled person would appreciate that the same outcome of this reverse topologically sorted order traversal step could be achieved if step S506 began by assigning each of the incoming edges of the vertices of the vertex subset representative of the sequentially last layer of the plurality of layers of the neural network (e.g. the vertex subset comprising vertices R, S, T in Figure 12) the first state. This is because it is inevitable when performing the described method that, having assigned the one or more output edges 1242 the first state (e.g. as shown in Figure 12b), each of the incoming edges of the vertices of the vertex subset representative of the sequentially last layer of the plurality of layers of the neural network will subsequently be assigned the first state (e.g.

as shown in Figure 12c). In this example, traversing the graph in reverse topologically sorted order may comprise traversing the sequence of vertex subsets, from the vertex subset representative of the sequentially penultimate layer of the plurality of layers of the neural network (e.g. the vertex subset comprising vertices M, N, O, P, Q in Figure 12), to the vertex subset representative of the sequentially first layer of the plurality of layers of the neural network (e.g. the vertex subset comprising vertices H, I, J, K and L in Figure 12), assessing each of the one or more vertices in each vertex subset to determine whether that vertex has at least one outgoing edge assigned the first state. If yes, each of the incoming edges of that vertex are assigned the first state. If not, each of the incoming edges of that vertex are not assigned the first state.

Next (e.g. subsequently), the sequence of vertex subsets can be traversed again. In a preferred example, the sequence of vertex subsets can be traversed, from the vertex subset representative of the sequentially first layer of the plurality of layers of the neural network (e.g. the vertex subset comprising vertices H, I, J, K and L in Figure 12), to the vertex subset representative of the sequentially penultimate layer of the plurality of layers of the neural network (e.g. the vertex subset comprising vertices M, N, O, P, Q in Figure 12), assessing each of the one or more vertices in each vertex subset to determine whether that vertex has at least one incoming edge assigned the first state. If yes, each of the outgoing edges of that vertex are assigned the first state. If those outgoing edges were previously assigned the first state, assigning those outgoing edges the first state may comprise maintaining the previously assigned first state. If a vertex does not have at least one incoming edge assigned the first state, each of the outgoing edges of that vertex are caused to not be assigned the first state. For example, if those outgoing edges were previously assigned the first state, that first state may be unassigned (e.g. the first value that that edge was previously labelled with may be deleted). Alternatively, or additionally, those outgoing edges may be assigned a different state (e.g. a second state, such as by being labelled with a different value (e.g. a "0")). This step may be described as traversing the graph in topologically sorted order.

For example, in Figure 12f, the vertex subset comprising vertices H, I, J, K and L is assessed. Each of vertices H and K has an incoming edge labelled with a "1". So, each of the outgoing edges of vertices H and K are labelled with a "1". Each of vertices I, J and L does not have an incoming edge labelled with a "1" (in fact, vertex I does not have any incoming edges). So, each of the outgoing edges of vertices I, J and L are caused to not be labelled with a "1" - although vertex L does not have any outgoing edges to label. In particular, the previous label "1" on the edge between vertices I and M is deleted. Next, in Figure 12g, the vertex subset comprising vertices M, N, O, P and Q is assessed. Each of vertices M and Q has an incoming edge labelled with a "1". So, each of the outgoing edges of vertices M and Q are labelled with a "1". Each of vertices N, O and P does not have an incoming edge labelled with a "1" (in fact, vertex P does not have any incoming edges). So, each of the outgoing edges of vertices N, O and P are caused to not be labelled with a "1" - although vertices N and O do not have any outgoing edges to label. In particular, the previous label "1" on the edge between vertices P and S is deleted.

Next (e.g. subsequently), one or more vertices that do not have any outgoing edges assigned the first state can be identified. Said one or more identified vertices represent the one or more redundant channels comprised by the plurality of layers of the neural network. For example, in Figure 12h, vertices I, J, L, N, O and P can be identified as not have any outgoing edges labelled with the first value. As such, vertices I, J, L, N, O and P can be identified as being representative of redundant channels. Optionally, the one or more vertices representative of redundant channels can be removed from the graph. For example, Figure 12i shows the graph with vertices I, J, L, N, O and P removed.

It is to be understood that the one or more vertices in the input vertex subset (e.g. vertices E, F and G in Figure 12) cannot be identified as representing redundant channels - e.g. even if those vertices do not have any outgoing edges assigned the first state. This is so that the input to the plurality of layers of the compressed neural network retains the same number of channels as the input to the plurality of layers of the received neural network. It is also to be understood that the one or more output channels of the sequentially last layer of the plurality of layers of the neural network (e.g. as represented by vertices R, S, T in Figure 12) may not be identified as being redundant channels - e.g. even if the vertices representative of those channels do not have any outgoing edges assigned the first state. This is so that the output of the plurality of layers of the compressed neural network retains the same number of channels as the output of the plurality of layers of the received neural network.

Alternatively, in another preferred approach (not shown in the Figures), the graph can be traversed in topologically sorted order, followed by reverse topologically sorted order. That is, each of the one or more vertices of the input vertex subset can be provided with a respective incoming edge, and each of the incoming edges of the one or more input vertices comprised by the input vertex subset can be assigned the first state. In this approach, the outgoing edges of any bias vertices can also be assigned the first state. Next, the sequence of vertex subsets can be traversed, from the input vertex subset, to the vertex subset representative of the sequentially penultimate layer of the plurality of layers of the neural network, assessing each of the one or more vertices in each vertex subset to determine whether that vertex has at least one incoming edge assigned the first state. If yes, each of the outgoing edges of that vertex are assigned the first state. If not, each of the outgoing edges of that vertex are not assigned the first state. The skilled person would appreciate that the same outcome of this topologically sorted order traversal step could be achieved if step S506 began by assigning each of the incoming edges of the one or more vertices comprised by the vertex subset representative of the sequentially first layer of the plurality of layers of the neural network the first state. This is because it is inevitable when performing the described method that, having assigned each of the incoming edges of the input vertex subset and the outgoing edges of any bias vertices the first state, each of the incoming edges of the one or more vertices comprised by the vertex subset representative of the sequentially first layer of the plurality of layers of the neural network will subsequently be assigned the first state. In this example, traversing the graph in topologically sorted order may comprise traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state. If yes, each of the outgoing edges of that vertex are assigned the first state. If not, each of the outgoing edges of that vertex are not assigned the first state. Next (e.g. subsequently), the sequence of vertex subsets can be traversed in reverse topologically sorted order, by traversing the sequence of vertex subsets from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state. If yes, each of the incoming edges of that vertex are assigned the first state. If not, each of the incoming edges of that vertex are caused to not be assigned the first state. Next, one or more vertices that do not have any outgoing edges assigned the first state can be identified. Said one or more identified vertices represent the one or more redundant channels comprised by the plurality of layers of the neural network. It is to be understood that the one or more vertices in the input vertex subset cannot be identified as representing redundant channels - e.g. even if those vertices do not have any outgoing edges assigned the first state. It is also to be understood that the one or more output channels of the sequentially last layer of the plurality of layers of the neural network may not be identified as being redundant channels - e.g. even if the vertices representative of those channels do not have any outgoing edges assigned the first state.

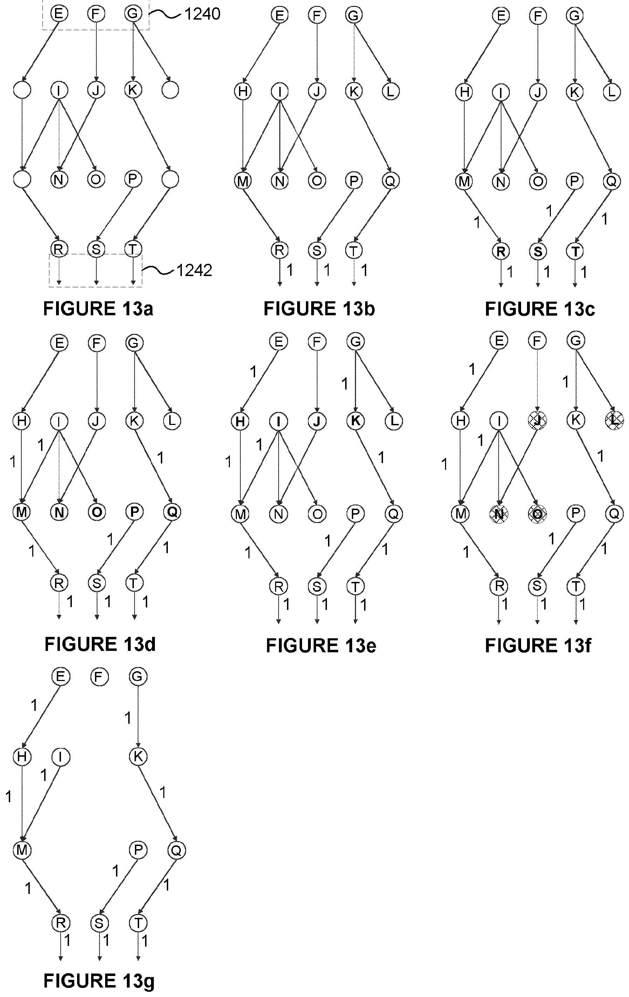

Figures 13a-g show, in a first less preferred approach, how a graph representative of the flow of data through a plurality of layers of a neural network can be traversed so as to identify one or more redundant channels comprised by the plurality of layers. Figure 13a shows a graph representative of the flow of data through the plurality of layers represented in Figure 15a. Figure 13a has the same properties as the graph shown in Figure 12a as described herein. In the first less preferred approach, the graph can be traversed in reverse topologically sorted order only.

First, to identify one or more redundant channels, each of the output edges can be assigned the first state. For example, this is shown in Figure 13b, which has the same properties as the graph shown in Figure 12b as described herein.

Next, the sequence of vertex subsets can be traversed, from the vertex subset representative of the sequentially last layer of the plurality of layers of the neural network (e.g. the vertex subset comprising vertices R, S, T in Figure 13), to the vertex subset representative of the sequentially first layer of the plurality of layers of the neural network (e.g. the vertex subset comprising vertices H, I, J, K and L in Figure 13), assessing each of the one or more vertices in each vertex subset to determine whether that vertex has at least one outgoing edge assigned the first state. If yes, each of the incoming edges of that vertex are assigned the first state. If not, each of the incoming edges of that vertex are not assigned the first state. For example, see the steps of the traversal of the graph shown in Figures 13c to 13e, which have the same properties as the steps of the traversal of the graph shown in Figures 12c to 12e as described herein.

The skilled person would appreciate that the same outcome of this reverse topologically sorted order traversal step could be achieved if step S506 began by assigning each of the incoming edges of the vertices of the vertex subset representative of the sequentially last layer of the plurality of layers of the neural network (e.g. the vertex subset comprising vertices R, S, T in Figure 13) the first state. This is because it is inevitable when performing the described method that, having assigned the one or more output edges 1242 the first state (e.g. as shown in Figure 13b), each of the incoming edges of the vertices of the vertex subset representative of the sequentially last layer of the plurality of layers of the neural network will subsequently be assigned the first state (e.g. as shown in Figure 13c). In this example, traversing the graph in reverse topologically sorted order may comprise traversing the sequence of vertex subsets, from the vertex subset representative of the sequentially penultimate layer of the plurality of layers of the neural network (e.g. the vertex subset comprising vertices M, N, O, P, Q in Figure 13), to the vertex subset representative of the sequentially first layer of the plurality of layers of the neural network (e.g. the vertex subset comprising vertices H, I, J, K and L in Figure 13), assessing each of the one or more vertices in each vertex subset to determine whether that vertex has at least one outgoing edge assigned the first state. If yes, each of the incoming edges of that vertex are assigned the first state. If not, each of the incoming edges of that vertex are not assigned the first state.

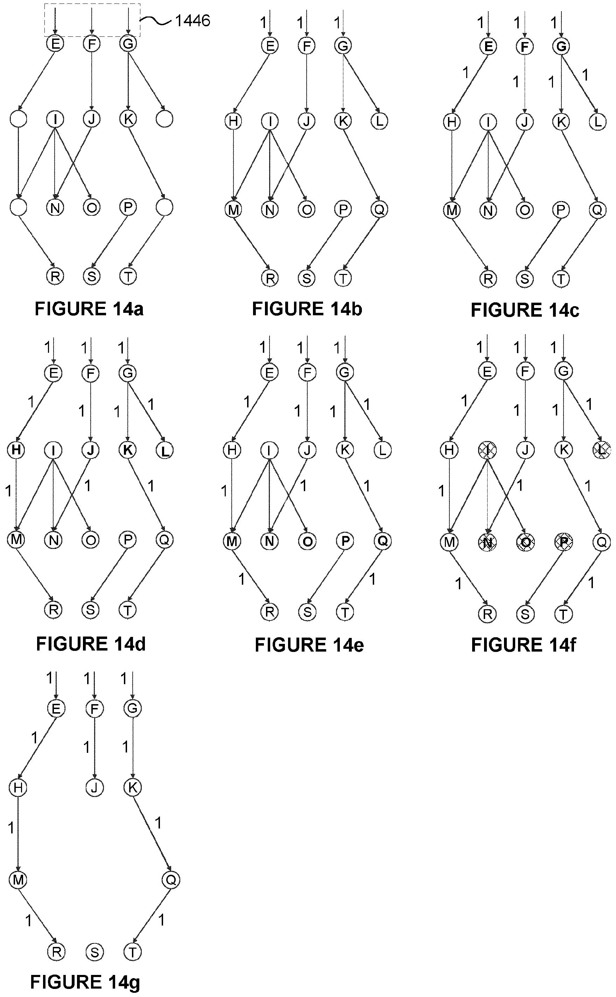

Next (e.g. subsequently), one or more vertices that do not have any outgoing edges assigned the first state can be identified. Said one or more identified vertices represent the one or more redundant channels comprised by the plurality of layers of the neural network. It is to be understood that the one or more vertices in the input vertex subset (e.g. vertices E, F and G in Figure 13) cannot be identified as representing redundant channels - e.g. even if those vertices do not have any outgoing edges assigned the first state. It is also to be understood that the one or more output channels of the sequentially last layer of the plurality of layers of the neural network (e.g. as represented by vertices R, S, T in Figure 13) may not be identified as being redundant channels - e.g. even if the vertices representative of those channels do not have any outgoing edges assigned the first state. For example, in Figure 13f, vertices J, L, N and O can be identified as not have any outgoing edges labelled with the first value. As such, vertices J, L, N and O can be identified as being representative of redundant channels by performing the first less preferred approach. Optionally, the one or more vertices representative of redundant channels can be removed from the graph. For example, Figure 14g shows the graph with vertices J, L, N and O removed.

It can be appreciated that the first less preferred approach may identify fewer redundant channels than the preferred approach. For example, the first less preferred approach shown in Figure 13 does not identify vertices I and P as being representative of redundant channels, which are identified as being representative of redundant channels in the preferred approach shown in Figure 12. For this reason, the steps of the first less preferred approach can be repeated with the intention of identifying further vertices representative of redundant channels (e.g. starting from the graph shown in Figure 13g). That is, the first less preferred approach can be performed iteratively - e.g. for a plurality of iterations until no further vertices representative of redundant channels are identified.

Figures 14a-g show, in a second less preferred approach, how a graph representative of the flow of data through a plurality of layers of a neural network can be traversed so as to identify one or more redundant channels comprised by the plurality of layers.

Figure 14a shows a graph representative of the flow of data through the plurality of layers represented in Figure 15a. Figure 14a has much the same properties as the graph shown in Figure 12a as described herein. That said, relative to the graph shown in Figure 12a, the graph shown in Figure 14a additionally comprises a respective incoming edge to each of the vertices E, F and G in the input vertex subset (e.g. 1446 in Figure 14a), and does not comprise output edges (e.g. 1242 in Figure 12a) representative of an output from the plurality of layers. In the second less preferred approach, the graph can be traversed in topologically sorted order only.

First, to identify one or more redundant channels, each of the incoming edges of the input vertex subset can be assigned the first state. For example, this is shown in Figure 14b, in which each of the incoming edges of vertices E, F and G are labelled with a "1". In this second less preferred approach, the outgoing edges of any bias vertices (none shown in Figure 14) can also be assigned the first state.

Next, the sequence of vertex subsets can be traversed, from the input vertex subset (e.g. the vertex subset comprising vertices E, F and G in Figure 14), to the vertex subset representative of the sequentially penultimate layer of the plurality of layers of the neural network (e.g. the vertex subset comprising vertices M, N, O, P, Q in Figure 14), assessing each of the one or more vertices in each vertex subset to determine whether that vertex has at least one incoming edge assigned the first state. If yes, each of the outgoing edges of that vertex are assigned the first state. If not, each of the outgoing edges of that vertex are not assigned the first state.

For example, in Figure 14c, the input vertex subset comprising vertices E, F and G is assessed. Each of vertices E, F and G has an incoming edge labelled with a "1". So, each of the outgoing edges of vertices E, F and G are labelled with a "1". Next, in Figure 14d, the vertex subset comprising vertices H, I, J, K and L is assessed. Each of vertices H, J, K and L has an incoming edge labelled with a "1". So, each of the outgoing edges of vertices H, J, K and L are labelled with a "1" - although vertex L does not have any outgoing edges to label. Vertex I does not have an incoming edge labelled with a "1" (in fact, vertex I does not have any incoming edges). So, each of the outgoing edges of vertex I are not labelled with a "1". Next, in Figure 14e, the vertex subset comprising vertices M, N, O, P and Q is assessed. Each of vertices M, N and Q has an incoming edge labelled with a "1". So, each of the outgoing edges of vertices M, N and Q are labelled with a "1" - although vertex N does not have any outgoing edges to label. Each of vertices O and P does not have an incoming edge labelled with a "1" (in fact, vertex P does not have any incoming edges). So, each of the outgoing edges of vertices O and P are not labelled with a "1" - although vertex O does not have any outgoing edges to label.

The skilled person would appreciate that the same outcome of this topologically sorted order traversal step could be achieved if step S506 began by assigning each of the incoming edges of the one or more vertices comprised by the vertex subset representative of the sequentially first layer of the plurality of layers of the neural network (e.g. the vertex subset comprising vertices H, I, J, K and L in Figure 14) the first state. This is because it is inevitable when performing the described method that, having assigned each of the outgoing edges of any bias vertices and each of the incoming edges of the input vertex subset the first state (e.g. as shown in Figure 14b), each of the incoming edges of the one or more vertices comprised by the vertex subset representative of the sequentially first layer of the plurality of layers of the neural network will subsequently be assigned the first state (e.g. as shown in Figure 14c). In this example, traversing the graph in topologically sorted order may comprise traversing the sequence of vertex subsets, from the vertex subset representative of the sequentially first layer of the plurality of layers of the neural network (e.g. the vertex subset comprising vertices H, I, J, K and L in Figure 14), to the vertex subset representative of the sequentially penultimate layer of the plurality of layers of the neural network (e.g. the vertex subset comprising vertices M, N, O, P and Q in Figure 14), assessing each of the one or more vertices in each vertex subset to determine whether that vertex has at least one incoming edge assigned the first state. If yes, each of the outgoing edges of that vertex are assigned the first state. If not, each of the outgoing edges of that vertex are not assigned the first state.

Next (e.g. subsequently), one or more vertices that do not have any outgoing edges assigned the first state can be identified. Said one or more identified vertices represent the one or more redundant channels comprised by the plurality of layers of the neural network. It is to be understood that the one or more vertices in the input vertex subset (e.g. vertices E, F and G in Figure 14) cannot be identified as representing redundant channels - e.g. even if those vertices do not have any outgoing edges assigned the first state. It is also to be understood that the one or more output channels of the sequentially last layer of the plurality of layers of the neural network (e.g. as represented by vertices R, S, T in Figure 14) may not be identified as being redundant channels - e.g. even if the vertices representative of those channels do not have any outgoing edges assigned the first state. For example, in Figure 14f, vertices I, L, N, O and P can be identified as not have any outgoing edges assigned the first state. As such, vertices I, L, N, O and P can be identified as being representative of redundant channels. Optionally, the one or more vertices representative of redundant channels can be removed from the graph. For example, Figure 14g shows the graph with vertices I, L, N, O and P removed.

It can be appreciated that the second less preferred approach may identify fewer redundant channels than the preferred approach. For example, the first less preferred approach shown in Figure 14 does not identify vertex J as being representative of a redundant channel, which is identified as being representative of redundant channels in the preferred approach shown in Figure 12. For this reason, the steps of the second less preferred approach can be repeated with the intention of identifying further vertices representative of redundant channels (e.g. starting from the graph shown in Figure 14g). That is, the second less preferred approach can be performed iteratively - e.g. for a plurality of iterations until no further vertices representative of redundant channels are identified.

The plurality of layers of the neural network represented in Figures 12 to 15 do not include any convolution or fully-connected layers that are configured to use biases for ease of illustration. The skilled person would have no difficulty applying the principles described herein to neural networks comprising a convolution or fully-connected layer that is configured to use biases. That said, it is to be understood that "bias vertices" are distinguished from "vertices" herein - because they are representative of biases, and not output channels. When traversing the graph, although the outgoing edges of bias vertices can be assigned a state as a result of assessing other vertices, bias vertices themselves are not assessed. Nor can bias vertices be identified as being representative of a redundant channel - e.g. even if those bias vertices do not have any outgoing edges assigned the first state.

The plurality of layers of the neural network represented in Figures 12 to 15 do not include any flatten layers for ease of illustration. The skilled person would have no difficulty applying the principles described herein to neural networks comprising a flatten layer. That said, it is to be understood that an output channel of a flatten layer of the plurality of layers of the neural network can only be identified as a redundant channel when all of the m vertices comprised by the group of vertices comprising the vertex representative of that output channel do not have any outgoing edges assigned the first state. This is to prevent the inappropriate removal of a subset of these channels causing a dimensional mismatch in subsequent layers of the neural network. For example, referring back to Figure 8b, after traversing the graph, vertex $v_1^k$ could only be identified as being representative of a redundant channel if none of vertices $v_1^k$, $v_2^k$, $v_3^k$ and $v_4^k$ within group of vertices 824-1 have any outgoing edges assigned the first state.

The plurality of layers of the neural network represented in Figures 12 to 15 do not include any add layers for ease of illustration. The skilled person would have no difficulty applying the principles described herein to neural networks comprising an add layer. That said, it is to be understood that an output channel of an add layer of the plurality of layers of the neural network can only be identified as a redundant channel when the vertex representative of that output channel does not have any outgoing edges assigned the first state and all of the vertices representative of output channels from preceding layers that are connected to that vertex by edges also do not have any outgoing edges assigned the first state. This is to prevent the inappropriate removal of an output channel of an add layer causing a dimensional mismatch in subsequent layers of the neural network. For example, referring back to Figure 9b, after traversing the graph, vertex $v_1^k$ could only be identified as being representative of a redundant channel if vertex $v_1^k$ does not have any outgoing edges assigned the first state, and vertices $v_1^a$ and $v_1^b$ are connected to vertex $v_1^k$ by edges that are also not assigned the first state. Further, vertices representative of output channels from preceding layers that are connected, by edges, to a vertex representative of an output channel of an add layer can only be identified as being representative of redundant channels when all of those vertices do not have any outgoing edges assigned the first state. This is to prevent the inappropriate removal of a subset of these channels causing a dimensional mismatch in the subsequent add layer. For example, referring back to Figure 9b, after traversing the graph, either of vertices $v_1^a$ and $v_1^b$ can only be identified as being representative of a redundant channel if vertex $v_1^k$ does not have any outgoing edges assigned the first state, and vertices $v_1^a$ and $v_1^b$ are connected to vertex $v_1^k$ by edges that are also not assigned the first state.

Returning to Figure 5, in step S508, a compressed neural network is output in which the identified one or more redundant channels are not present in the compressed neural network. In other words, the compressed neural network does not perform the operations associated with the removed redundant channels. For example, for a redundant channel in a convolution layer (e.g. for redundant channels 220 and 228 shown in Figure 2b), the convolution operation associated with that redundant channel need not be performed when implementing the compressed neural network. This also means that the coefficients comprised by that redundant channel also need not be stored in memory (or transferred to the accelerator) when implementing the compressed neural network. In another example, for a redundant channel in an add layer, the summation operation associated with that redundant channel need not be performed when implementing the compressed neural network. This also means that the activation values summed by that redundant channel also need not be transferred to the accelerator when implementing the compressed neural network. As described herein, a redundant channel is a channel, comprised by a layer of the plurality of layers of the neural network, that can be removed from the neural network without changing the output of the neural network. Thus, the output of the compressed neural network for a given input is the same as the output of the received neural network for that given input. The at least one processor 404 shown in Figure 4 can be configured to perform step S508.

Step S508 can be further understood with reference to Figures 15a and 15b. Figure 15a is representative of a received neural network comprising a sequence of fully-connected or convolution layers. As described herein, the preferred approach can identify vertices I, J, L, N, O and P shown in Figure 12 as being representative of redundant channels. Figure 15b is representative of a compressed neural network comprising a sequence of fully-connected or convolution layers in which one or more redundant channels are not present. That is, in Figure 15b, rows I, J, L, N, O and P representative of the output channels represented by vertices I, J, L, N, O and P, and the columns representing the corresponding input channels in preceding layers, have been removed from the matrices representative of fully-connected or convolution layers (k-1), k and (k+1). Fully-connected or convolution layer (k-1) still comprises three input channels E, F and G. Fully-connected or convolution layer (k+1) still comprises three output channels R, S and T. Thus, the input to, and the output from, the plurality of layers are not changed.

That said, compressing the received neural network in accordance with the method described herein with reference to Figure 5 is advantageous because the weight bandwidth, activation bandwidth, inference time (e.g. latency) and computational demand drawbacks associated with performing operations using redundant coefficient channels are not incurred when the compressed neural network is implemented. This enables the compressed neural network to require fewer multiple-accumulate operations to be performed, thus reducing its weight bandwidth, activation bandwidth, inference time (e.g. latency) and computational demand requirements relative to performing (e.g. implementing) the received neural network. In a similar way to "pure" data compression techniques (e.g. in which a received set of data is compressed according to a compression scheme so as to output a compressed set of data that requires fewer bits to store), compressing the received neural network in accordance with the method described herein with reference to Figure 5 is also advantageous because fewer bits can be required to store the compressed neural network than the received neural network. This is because the bits associated with (e.g. defining) the identified redundant channels need not be stored. This means that the compressed neural network has a smaller memory footprint (e.g. consumes less space in memory) when stored.

Step S508 may comprise storing the compressed neural network for subsequent implementation. For example, referring to Figure 4, the at least one processor 404 may write the compressed neural network into memory 406 for subsequent implementation. Step S508 may comprise outputting a computer readable description of the compressed neural network that, when implemented at a system for implementing a neural network (e.g. system 300 shown in Figure 3), causes the compressed neural network to be executed. Step S508 may comprise configuring a system for implementing a neural network to implement the compressed neural network.

Step S508 may comprise configuring hardware logic to implement the compressed neural network. The hardware logic may comprise a neural network accelerator. For example, referring to Figure 4, the at least one processor 404 may be configured to configure hardware logic comprised by the system 300 for implementing a neural network to implement the compressed neural network.

The compressed neural network output in step S508 may be used. The compressed neural network output in step S508 may be used to perform image processing. The compressed neural network output in step S508 may receive image data representing one or more images, and perform image processing on that received image data. By way of non-limiting example, the compressed neural network may be used to perform one or more of image super-resolution processing, semantic image segmentation processing, object detection and image classification. For example, in image super-resolution processing applications, image data representing one or more lower-resolution images may be input to the neural network, and the output of that neural network may be image data representing one or more higher-resolution images. In another example, in image classification applications, image data representing one or more images may be input to the neural network, and the output of that neural network may be data indicative of a probability (or set of probabilities) that each of those images belongs to a particular classification (or set of classifications).

There is a synergy between the method of compressing a neural network described herein and the implementation of the compressed neural network in hardware - i.e. by configuring hardware logic comprising a neural network accelerator (NNA) to implement that compressed neural network. This is because the method of compressing the neural network is intended to improve the implementation of the compressed neural network at a system in which the set of coefficients will be stored in an off-chip memory and the layers of the compressed neural network will be executed by reading, at run-time, those sets of coefficients in from that off-chip memory into hardware logic comprising a neural network accelerator (NNA). That is, the method described herein is particularly advantageous when used to compress a neural network for implementation in hardware.

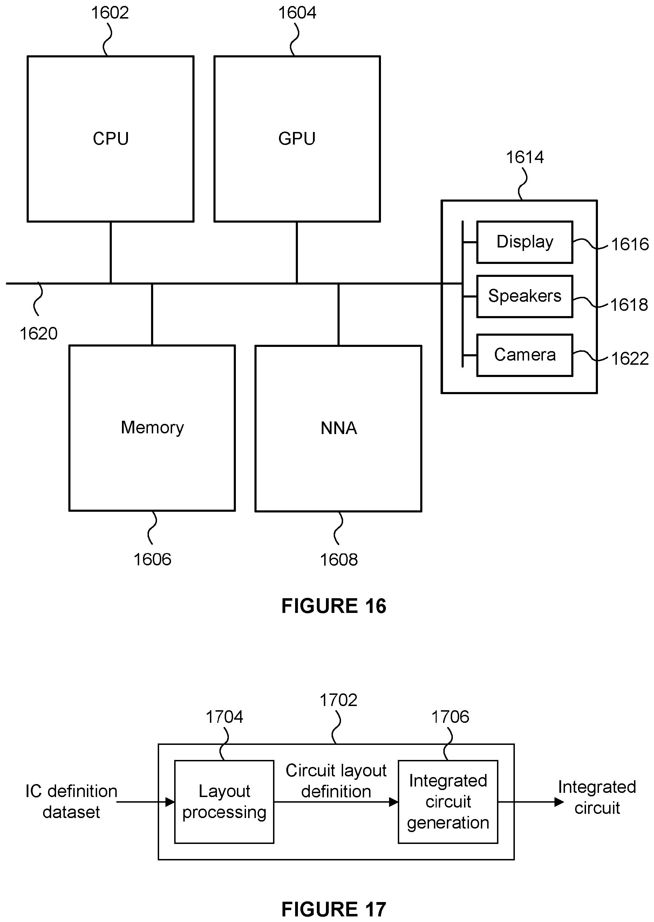

Figure 16 shows a computer system in which the neural network systems described herein may be implemented. The computer system comprises a CPU 1602, a GPU 1604, a memory 1606 (e.g. equivalent to memory 304 shown in Figure 3), a neural network accelerator (NNA) 1608 (e.g. equivalent to neural network accelerator (NNA) 302 shown in Figure 3), and other devices 1614, such as a display 1616, speakers 1618 and a camera 1622 (e.g. equivalent to input 301 shown in Figure 3). In some examples, the camera 1622 may input activation data directly into the neural network accelerator (NNA) 1608. In some examples, the NNA may be a GPU with one or more hardware accelerators for accelerating one or more neural network operations. It is to be understood that one or more of the depicted components may be omitted from the system. The components of the computer system can communicate with each other via a communications bus 1620.

The systems of Figures 3, 4 and 16 are shown as comprising a number of functional blocks. This is schematic only and is not intended to define a strict division between different logic elements of such entities. Each functional block may be provided in any suitable manner. It is to be understood that intermediate values described herein as being formed by a system need not be physically generated by the system at any point and may merely represent logical values which conveniently describe the processing performed by the system between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module", "functionality", "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), readonly memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system will now be described with respect to Figure 17.

Figure 17 shows an example of an integrated circuit (IC) manufacturing system 1702 which is configured to manufacture a processing system as described in any of the examples herein. In particular, the IC manufacturing system 1702 comprises a layout processing system 1704 and an integrated circuit generation system 1706. The IC manufacturing system 1702 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1702 to manufacture an integrated circuit embodying a processing system as described in any of the examples herein.

The layout processing system 1704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1704 has determined the circuit layout it may output a circuit layout definition to the IC generation system 1706. A circuit layout definition may be, for example, a circuit layout description.

The IC generation system 1706 generates an IC according to the circuit layout definition, as is known in the art. For example, the IC generation system 1706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1706 may be in the form of computer-readable code which the IC generation system 1706 can use to form a suitable mask for use in generating an IC.

The different processes performed by the IC manufacturing system 1702 may be implemented all in one location, e.g. by one party. Alternatively, the IC manufacturing system 1702 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 17 by an integrated circuit manufacturing definition dataset may cause a processing system as described herein to be manufactured.

In some examples, an integrated circuit definition dataset could include software which runs on hardware defined at the dataset or in combination with hardware defined at the dataset. In the example shown in Figure 17, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

## Claims

1. A computer implemented method of compressing a neural network, the method comprising:

   receiving (S502) a neural network comprising a plurality of layers;
   forming (S504) a graph that represents the flow of data through the plurality layers of the neural network, the graph comprising:

   a plurality of vertices, each vertex of the plurality of vertices being representative of an output channel of a layer of the plurality of layers of the neural network; and
   one or more edges, each edge of the one or more edges representing the potential flow of non-zero data between respective output channels represented by a respective pair of vertices;

   wherein the method further comprises:

   identifying (S506), by traversing the graph, one or more redundant channels comprised by the plurality of layers of the neural network, wherein a redundant channel is a channel, comprised by a layer of the plurality of layers of the neural network, that can be removed from the neural network without changing the output of the neural network;
   outputting (S508) a compressed neural network in which the identified one or more redundant channels are not present in the compressed neural network; and
   storing the compressed neural network for subsequent implementation;
   wherein:

   each edge of the one or more edges can be an outgoing edge of a first vertex and/or an incoming edge of a second vertex;
   an incoming edge of a vertex is representative of the potential flow of non-zero data into the output channel represented by that vertex;
   an outgoing edge of a vertex is representative of the potential flow of non-zero data from the output channel represented by that vertex; and
   said traversing the graph comprises assessing each vertex of the plurality of vertices in sequence, in dependence on any incoming and/or outgoing edges of that vertex, to determine whether the output channel represented by that vertex can be removed from the neural network without changing the output of the neural network.

2. The method of claim 1, the method comprising traversing the graph in reverse topologically sorted order and/or topologically sorted order.

3. The method of claim 1 or 2, the graph comprising:

a plurality of vertex subsets, each vertex subset of the plurality of vertex subsets being representative of a respective layer of the plurality of layers of the neural network, each vertex subset of the plurality of vertex subsets comprising one or more vertices, each vertex of the one or more vertices being representative of an output channel of the respective layer of the neural network; and
the one or more edges, each edge of the one or more edges:

connecting two vertices, said two vertices being comprised by different vertex subsets of the graph; and
being representative of the potential flow of non-zero data between the respective channels of the respective layers of the neural network represented by those vertices.

4. The method of claim 3, wherein:

a vertex subset ($920k$) of the plurality of vertex subsets is representative of an add layer of the plurality of layers of the neural network, said vertex subset ($920k$) comprising a number of vertices equal to the number of channels in each of a plurality of activation data sets that that add layer is configured to sum, each of said plurality of activation data sets having the same number of channels, each vertex comprised by that vertex subset ($920k$) being representative of a respective summation operation performed between a set of respective channels of the plurality of activation data sets such that each vertex comprised by that vertex subset ($920k$) is representative of a respective output channel of the add layer; and
each vertex comprised by that vertex subset ($920k$) being connected, by respective edges, to vertices in different vertex subsets ($919(k\text{-}1a)$, $919(k\text{-}1b)$), said vertices being representative of output channels of preceding layers of the plurality of layers of the neural network, said output channels corresponding to the channels of the set of respective channels of the plurality of activation data sets between which the summation operation represented by that vertex is performed.

5. The method of claims 3 or 4, wherein:

a vertex subset ($820k$) of the plurality of vertex subsets is representative of a flatten layer of the plurality of layers of the neural network, said vertex subset ($920k$) comprising $n$ groups of vertices ($824\text{-}1$, $824\text{-}2$, $824\text{-}3$), $n$ being equal to the number of channels of data of an activation data set on which the flatten layer is configured to perform a flatten operation, each group of vertices ($824\text{-}1$, $824\text{-}2$, $824\text{-}3$) comprising $m$ vertices, $m$ being equal to the number of values in each channel of data of said activation data set, each vertex comprised by said vertex subset ($820k$) being representative of a respective output channel of the flatten layer; and
each vertex comprised by each group of vertices in that vertex subset ($820k$) being connected, by a respective edge, to a vertex in a different vertex subset ($819(k\text{-}1)$), said vertex representative of an output channel of a preceding layer of the plurality of layers of the neural network, said output channel corresponding to the channel of the activation data set on which the part of the flatten operation represented by that group of vertices ($824\text{-}1$, $824\text{-}2$, $824\text{-}3$) is performed.

6. The method of any of claims 3 to 5, wherein the plurality of vertex subsets are arranged in a sequence representative of the sequence in which the plurality of layers of the neural network are arranged, and wherein identifying the one or more redundant channels comprises:

assigning each of the incoming edges of the vertices of the vertex subset representative of the sequentially last layer of the plurality of layers of the neural network a first state;
traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and:

if yes, assigning each of the incoming edges of that vertex the first state; and

if not, not assigning each of the incoming edges of that vertex the first state;

subsequently, traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and:

> if yes, assigning each of the outgoing edges of that vertex the first state; and
> if not, causing each of the outgoing edges of that vertex to not be assigned the first state; and

subsequently, identifying one or more vertices that do not have any outgoing edges assigned the first state, said one or more identified vertices representing the one or more redundant channels comprised by the plurality of layers of the neural network.

7. The method of any of claims 3 to 5, wherein the plurality of vertex subsets are arranged in a sequence representative of the sequence in which the plurality of layers of the neural network are arranged, and wherein identifying the one or more redundant channels comprises:

> assigning each of the incoming edges of the one or more vertices comprised by the vertex subset representative of the sequentially first layer of the plurality of layers of the neural network a first state;
> traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and:
>
>> if yes, assigning each of the outgoing edges of that vertex the first state; and
>> if not, not assigning each of the outgoing edges of that vertex the first state;
>
> subsequently, traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and:

> if yes, assigning each of the incoming edges of that vertex with first state; and
> if not, causing each of the incoming edges of that vertex to not be assigned the first state; and

subsequently, identifying one or more vertices that do not have any outgoing edges assigned with first state, said one or more identified vertices representing the one or more redundant channels comprised by the plurality of layers of the neural network.

8. The method of claims 5 or 6, wherein the plurality of vertex subsets are arranged in a sequence representative of the sequence in which the plurality of layers of the neural network are arranged, and wherein identifying the one or more redundant channels comprises:

> assigning each of the incoming edges of the vertices of the vertex subset representative of the sequentially last layer of the plurality of layers of the neural network a first state;
> traversing the sequence of vertex subsets, from the vertex subset representative of the sequentially penultimate layer of the plurality of layers of the neural network, to the vertex subset representative of the sequentially first layer of the plurality of layers of the neural network, assessing each of the one or more vertices in each vertex subset to determine whether that vertex has at least one outgoing edge assigned the first state, and:
>
>> if yes, assigning each of the incoming edges of that vertex the first state; and
>> if not, not assigning each of the incoming edges of that vertex the first state; and
>
> subsequently, identifying one or more vertices that do not have any outgoing edges assigned the first state, said one or more identified vertices representing the one or more redundant channels comprised by the plurality of layers of the neural network.

9. The method of claim 5 or 7, wherein the plurality of vertex subsets are arranged in a sequence representative of the sequence in which the plurality of layers of the neural network are arranged, and wherein identifying the one or more redundant channels comprises:

assigning each of the incoming edges of the one or more vertices comprised by the vertex subset representative of the sequentially first layer of the plurality of layers of the neural network a first state;

traversing the sequence of vertex subsets, from the vertex subset representative of the sequentially first layer of the plurality of layers of the neural network, to the vertex subset representative of the sequentially penultimate layer of the plurality of layers of the neural network, assessing each of the one or more vertices in each vertex subset to determine whether that vertex has at least one incoming edge assigned the first state, and:

if yes, assigning each of the outgoing edges of that vertex the first state; and

if not, not assigning each of the outgoing edges of that vertex the first state; and

subsequently, identifying one or more vertices that do not have any outgoing edges assigned the first state, said one or more identified vertices representing the one or more redundant channels comprised by the plurality of layers of the neural network.

10. The method of any preceding claim, further comprising outputting a computer readable description of the compressed neural network that, when implemented at a system for implementing a neural network, causes the compressed neural network to be executed.

11. The method of any preceding claim, further comprising configuring hardware logic to implement the compressed neural network, wherein the hardware logic comprises a neural network accelerator.

12. A processing system (400) for compressing a neural network, the processing system (400) comprising at least one processor (404) configured to:

receive a neural network comprising a plurality of layers;

form a graph that represents the flow of data through the plurality layers of the neural network, the graph comprising:

a plurality of vertices, each vertex of the plurality of vertices being representative of an output channel of a layer of the plurality of layers of the neural network; and

one or more edges, each edge of the one or more edges representing the potential flow of non-zero data between respective output channels represented by a respective pair of vertices;

wherein the at least one processor (404) is further configured to

identify, by traversing the graph, one or more redundant channels comprised by the plurality of layers of the neural network, wherein a redundant channel is a channel, comprised by a layer of the plurality of layers of the neural network, that can be removed from the neural network without changing the output of the neural network;

output a compressed neural network in which the identified one or more redundant channels are not present in the compressed neural network; and

write the compressed neural network into memory (406) for subsequent implementation;

wherein:

each edge of the one or more edges can be an outgoing edge of a first vertex and/or an incoming edge of a second vertex;

an incoming edge of a vertex is representative of the potential flow of non-zero data into the output channel represented by that vertex;

an outgoing edge of a vertex is representative of the potential flow of non-zero data from the output channel represented by that vertex; and

said traversing the graph comprises assessing each vertex of the plurality of vertices in sequence, in dependence on any incoming and/or outgoing edges of that vertex, to determine whether the output channel represented by that vertex can be removed from the neural network without changing the output of the neural network.

13. Computer readable code which, when executed by one or more processors, causes the one or more processors to carry out the method of any of claims 1 to 11.

**Patentansprüche**

1. Computerimplementiertes Verfahren zum Komprimieren eines neuronalen Netzwerks, wobei das Verfahren Folgendes umfasst:

Empfangen (S502) eines neuronalen Netzwerks, das eine Vielzahl von Schichten umfasst; Bilden (S504) eines Graphen, der den Datenfluss durch die Vielzahl von Schichten des neuronalen Netzwerks darstellt, wobei der Graph Folgendes umfasst:

eine Vielzahl von Knoten, wobei jeder Knoten der Vielzahl von Knoten für einen Ausgangskanal einer Schicht der Vielzahl von Schichten des neuronalen Netzwerks repräsentativ ist; und
eine oder mehrere Kanten, wobei jede Kante der einen oder mehreren Kanten den potenziellen Fluss von Nicht-Null-Daten zwischen jeweiligen Ausgangskanälen darstellt, die durch ein jeweiliges Paar von Knoten dargestellt werden;

wobei das Verfahren ferner Folgendes umfasst:

Identifizieren (S506), durch Durchlaufen des Graphen, eines oder mehrerer redundanter Kanäle, die von der Vielzahl von Schichten des neuronalen Netzwerks umfasst sind, wobei ein redundanter Kanal ein Kanal ist, der von einer Schicht der Vielzahl von Schichten des neuronalen Netzwerks umfasst ist, der aus dem neuronalen Netzwerk entfernt werden kann, ohne die Ausgabe des neuronalen Netzwerks zu ändern;
Ausgeben (S508) eines komprimierten neuronalen Netzwerks, wobei der eine oder die mehreren identifizierten redundanten Kanäle nicht in dem komprimierten neuronalen Netzwerk vorhanden sind; und
Speichern des komprimierten neuronalen Netzwerks zur anschließenden Implementierung;
wobei:

jede Kante der einen oder mehreren Kanten eine abgehende Kante eines ersten Knotens und/oder eine eingehende Kante eines zweiten Knotens sein kann;
eine eingehende Kante eines Knotens repräsentativ für den potenziellen Fluss von Nicht-Null-Daten in den Ausgangskanal, der durch diesen Knoten dargestellt ist, ist;
eine abgehende Kante eines Knotens repräsentativ für den potenziellen Fluss von Nicht-Null-Daten von dem Ausgangskanal ist, der durch diesen Knoten dargestellt wird; und

das Durchlaufen des Graphen ein Bewerten jedes Knotens der Vielzahl von Knoten in Folge in Abhängigkeit von jeglichen eingehenden und/oder abgehenden Kanten dieses Knotens umfasst, um zu bestimmen, ob der Ausgangskanal, der durch diesen Knoten dargestellt wird, aus dem neuronalen Netzwerk entfernt werden kann, ohne die Ausgabe des neuronalen Netzwerks zu ändern.

2.  Verfahren nach Anspruch 1, wobei das Verfahren ein Durchlaufen des Graphen in umgekehrter topologisch sortierter Reihenfolge und/oder in topologisch sortierter Reihenfolge umfasst.

3.  Verfahren nach Anspruch 1 oder 2, wobei der Graph Folgendes umfasst:
eine Vielzahl von Knoten-Teilmengen, wobei jede Knoten-Teilmenge der Vielzahl von Knoten-Teilmengen für eine jeweilige Schicht der Vielzahl von Schichten des neuronalen Netzwerks repräsentativ ist, wobei jede Knoten-Teilmenge der Vielzahl von Knoten-Teilmengen einen oder mehrere Knoten umfasst, wobei jeder Knoten des einen oder der mehreren Knoten für einen Ausgangskanal der jeweiligen Schicht des neuronalen Netzwerks repräsentativ ist; und
die eine oder die mehreren Kanten, wobei jede Kante der einen oder der mehreren Kanten:

zwei Knoten verbindet, wobei die zwei Knoten von unterschiedlichen Knoten-Teilmengen des Graphen umfasst sind; und
repräsentativ für den potenziellen Fluss von Nicht-Null-Daten zwischen den jeweiligen Kanälen der jeweiligen Schichten des neuronalen Netzwerks, die durch diese Knoten dargestellt werden, ist.

4.  Verfahren nach Anspruch 3, wobei:

eine Knoten-Teilmenge (920*k*) der Vielzahl von Knoten-Teilmengen repräsentativ für eine Additionsschicht der Vielzahl von Schichten des neuronalen Netzwerks ist, wobei die Knoten-Teilmenge (920*k*) eine Anzahl von Knoten umfasst, die gleich der Anzahl von Kanälen in jedem einer Vielzahl von Aktivierungsdatensätzen ist, die diese Additionsschicht addieren soll, wobei jeder der Vielzahl von Aktivierungsdatensätzen die gleiche Anzahl von Kanälen aufweist, jeder Knoten, der von dieser Knoten-Teilmenge (920*k*) umfasst ist, repräsentativ für eine jeweilige Summierungsoperation ist, die zwischen einer Menge von jeweiligen Kanälen der Vielzahl von Aktivierungsdatensätzen durchgeführt wird, sodass jeder Knoten, der von dieser Knoten-Teilmenge (920*k*) umfasst ist, für einen jeweiligen Ausgangskanal der Additionsschicht repräsentativ ist; und

jeder Knoten, der von dieser Knoten-Teilmenge (920*k*) umfasst ist, durch jeweilige Kanten mit Knoten in anderen Knoten-Teilmengen (919(*k-1a*), 919(*k-1b*)) verbunden ist, wobei die Knoten repräsentativ für Ausgangskanäle vorhergehender Schichten der Vielzahl von Schichten des neuronalen Netzwerks sind, wobei die Ausgangskanäle den Kanälen der Menge von jeweiligen Kanälen der Vielzahl von Aktivierungsdatensätzen entsprechen, zwischen denen die Summierungsoperation durchgeführt wird, die durch diesen Knoten dargestellt wird.

5.  Verfahren nach Anspruch 3 oder 4, wobei:

    eine Knoten-Teilmenge (820k) der Vielzahl von Knoten-Teilmengen repräsentativ für eine Glättungsschicht der Vielzahl von Schichten des neuronalen Netzwerks ist, wobei die Knoten-Teilmenge (920k) *n* Gruppen von Knoten (824-1, 824-2, 824-3) umfasst, wobei *n* gleich der Anzahl von Datenkanälen eines Aktivierungsdatensatzes, an denen die Glättungsschicht eine Glättungsoperation durchführen soll, ist, wobei jede Gruppe von Knoten (824-1, 824-2, 824-3) *m* Knoten umfasst, wobei *m* gleich der Anzahl von Werten in jedem Datenkanal des Aktivierungsdatensatzes ist, wobei jeder Knoten, der von der Knoten-Teilmenge (820k) umfasst ist, für einen jeweiligen Ausgangskanal der Glättungsschicht repräsentativ ist; und

    jeder Knoten, der von jeder Gruppe von Knoten in dieser Knoten-Teilmenge (820k) umfasst ist, durch eine jeweilige Kante mit einem Knoten in einer anderen Knoten-Teilmenge (819(*k-1*)) verbunden ist, wobei der Knoten repräsentativ für einen Ausgangskanal einer vorhergehenden Schicht der Vielzahl von Schichten des neuronalen Netzwerks ist, wobei der Ausgangskanal dem Kanal des Aktivierungsdatensatzes entspricht, an dem der Teil der Glättungsoperation, der durch diese Gruppe von Knoten (824-1, 824-2, 824-3) dargestellt wird, durchgeführt wird.

6.  Verfahren nach einem der Ansprüche 3 bis 5, wobei die Vielzahl von Knoten-Teilmengen in einer Sequenz angeordnet sind, die repräsentativ für die Sequenz ist, in der die Vielzahl von Schichten des neuronalen Netzwerks angeordnet sind, und wobei das Identifizieren des einen oder der mehreren redundanten Kanäle Folgendes umfasst:

Zuweisen eines ersten Zustands zu jeder der eingehenden Kanten der Knoten der Knoten-Teilmenge, die für die sequenziell letzte Schicht der Vielzahl von Schichten des neuronalen Netzwerks repräsentativ ist;

Durchlaufen der Sequenz von Knoten-Teilmengen von der Knoten-Teilmenge, die repräsentativ für die sequenziell vorletzte Schicht der Vielzahl von Schichten des neuronalen Netzwerks ist, zu der Knoten-Teilmenge, die repräsentativ für die sequenziell erste Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine abgehende Kante aufweist, der der erste Zustand zugewiesen ist, und:

wenn ja, Zuweisen des ersten Zustands zu jeder der eingehenden Kanten dieses Knotens; und

wenn nein, Nichtzuweisen des ersten Zustands zu jeder der eingehenden Kanten dieses Knotens;

anschließendes Durchlaufen der Sequenz von Knoten-Teilmengen von der Knoten-Teilmenge, die repräsentativ für die sequenziell erste Schicht der Vielzahl von Schichten des neuronalen Netzwerks ist, zu der Knoten-Teilmenge, die repräsentativ für die sequenziell vorletzte Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine eingehende Kante aufweist, der der erste Zustand zugewiesen ist, und:

wenn ja, Zuweisen des ersten Zustands zu jeder der abgehenden Kanten dieses Knotens; und

wenn nein, Veranlassen, dass jeder der abgehenden Kanten dieses Knotens der erste Zustand nicht zugewiesen wird; und

anschließendes Identifizieren eines oder mehrerer Knoten, die keine abgehenden Kanten aufweisen, denen der erste Zustand zugewiesen ist, wobei der eine oder die mehreren identifizierten Knoten den einen oder die mehreren redundanten Kanäle darstellen, die von der Vielzahl von Schichten des neuronalen Netzwerks umfasst sind.

7.  Verfahren nach einem der Ansprüche 3 bis 5, wobei die Vielzahl von Knoten-Teilmengen in einer Sequenz angeordnet sind, die repräsentativ für die Sequenz ist, in der die Vielzahl von Schichten des neuronalen Netzwerks angeordnet sind, und wobei das Identifizieren des einen oder der mehreren redundanten Kanäle Folgendes umfasst:

> Zuweisen eines ersten Zustands zu jeder der eingehenden Kanten des einen oder der mehreren Knoten, die von der Knoten-Teilmenge umfasst sind, die für die sequenziell erste Schicht der Vielzahl von Schichten des neuronalen Netzwerks repräsentativ ist;
> Durchlaufen der Sequenz von Knoten-Teilmengen von der Knoten-Teilmenge, die repräsentativ für die sequenziell erste Schicht der Vielzahl von Schichten des neuronalen Netzwerks ist, zu der Knoten-Teilmenge, die repräsentativ für die sequenziell vorletzte Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine eingehende Kante aufweist, der der erste Zustand zugewiesen ist, und:
>
>> wenn ja, Zuweisen des ersten Zustands zu jeder der abgehenden Kanten dieses Knotens; und
>> wenn nein, Nichtzuweisen des ersten Zustands zu jeder der abgehenden Kanten dieses Knotens;
>
> anschließendes Durchlaufen der Sequenz von Knoten-Teilmengen von der Knoten-Teilmenge, die repräsentativ für die sequenziell vorletzte Schicht der Vielzahl von Schichten des neuronalen Netzwerks ist, zu der Knoten-Teilmenge, die repräsentativ für die sequenziell erste Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine abgehende Kante aufweist, der der erste Zustand zugewiesen ist, und:
>
>> wenn ja, Zuweisen des ersten Zustands zu jeder der eingehenden Kanten dieses Knotens; und
>> wenn nein, Veranlassen, dass jeder der eingehenden Kanten dieses Knotens der erste Zustand nicht zugewiesen wird; und
>
> anschließendes Identifizieren eines oder mehrerer Knoten, die keine abgehenden Kanten aufweisen, denen der erste Zustand zugewiesen ist, wobei der eine oder die mehreren

redundanten Kanäle darstellen, die von der Vielzahl von Schichten des neuronalen Netzwerks umfasst sind.

8. Verfahren nach Anspruch 5 oder 6, wobei die Vielzahl von Knoten-Teilmengen in einer Sequenz angeordnet sind, die repräsentativ für die Sequenz ist, in der die Vielzahl von Schichten des neuronalen Netzwerks angeordnet sind, und wobei das Identifizieren des einen oder der mehreren redundanten Kanäle Folgendes umfasst:

> Zuweisen eines ersten Zustands zu jeder der eingehenden Kanten der Knoten der Knoten-Teilmenge, die für die sequenziell letzte Schicht der Vielzahl von Schichten des neuronalen Netzwerks repräsentativ ist;
> Durchlaufen der Sequenz von Knoten-Teilmengen von der Knoten-Teilmenge, die repräsentativ für die sequenziell vorletzte Schicht der Vielzahl von Schichten des neuronalen Netzwerks ist, zu der Knoten-Teilmenge, die repräsentativ für die sequenziell erste Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine abgehende Kante aufweist, der der erste Zustand zugewiesen ist, und:
>
>> wenn ja, Zuweisen des ersten Zustands zu jeder der eingehenden Kanten dieses Knotens; und
>> wenn nein, Nichtzuweisen des ersten Zustands zu jeder der eingehenden Kanten dieses Knotens; und
>
> anschließendes Identifizieren eines oder mehrerer Knoten, die keine abgehenden Kanten aufweisen, denen der erste Zustand zugewiesen ist, wobei der eine oder die mehreren identifizierten Knoten den einen oder die mehreren redundanten Kanäle darstellen, die von der Vielzahl von Schichten des neuronalen Netzwerks umfasst sind.

9. Verfahren nach Anspruch 5 oder 7, wobei die Vielzahl von Knoten-Teilmengen in einer Sequenz angeordnet sind, die repräsentativ für die Sequenz ist, in der die Vielzahl von Schichten des neuronalen Netzwerks angeordnet sind, und wobei das Identifizieren des einen oder der mehreren redundanten Kanäle Folgendes umfasst:

> Zuweisen eines ersten Zustands zu jeder der eingehenden Kanten des einen oder der mehreren Knoten, die von der Knoten-Teilmenge umfasst sind, die für die sequenziell erste Schicht der Vielzahl von Schichten des neuronalen Netzwerks repräsentativ ist;

Durchlaufen der Sequenz von Knoten-Teilmengen von der Knoten-Teilmenge, die repräsentativ für die sequenziell erste Schicht der Vielzahl von Schichten des neuronalen Netzwerks ist, zu der Knoten-Teilmenge, die repräsentativ für die sequenziell vorletzte Schicht der Vielzahl von Schichten des neuronalen Netzwerks ist, mit Bewerten jedes von dem einen oder den mehreren Knoten in jeder Knoten-Teilmenge, um zu bestimmen, ob dieser Knoten mindestens eine eingehende Kante aufweist, der der erste Zustand zugewiesen ist, und:

wenn ja, Zuweisen des ersten Zustands zu jeder der abgehenden Kanten dieses Knotens; und

wenn nein, Nichtzuweisen des ersten Zustands zu jeder der abgehenden Kanten dieses Knotens; und

anschließendes Identifizieren eines oder mehrerer Knoten, die keine abgehenden Kanten aufweisen, denen der erste Zustand zugewiesen ist, wobei der eine oder die mehreren identifizierten Knoten den einen oder die mehreren redundanten Kanäle darstellen, die von der Vielzahl von Schichten des neuronalen Netzwerks umfasst sind.

10. Verfahren nach einem der vorhergehenden Ansprüche, das ferner ein Ausgeben einer computerlesbaren Beschreibung des komprimierten neuronalen Netzwerks umfasst, die, wenn sie in einem System zur Implementierung eines neuronalen Netzwerks implementiert ist, bewirkt, dass das komprimierte neuronale Netzwerk ausgeführt wird.

11. Verfahren nach einem der vorhergehenden Ansprüche, das ferner ein Konfigurieren von Hardwarelogik zur Implementierung des komprimierten neuronalen Netzwerks umfasst, wobei die Hardwarelogik einen Beschleuniger für neuronale Netzwerke umfasst.

12. Verarbeitungssystem (400) zum Komprimieren eines neuronalen Netzwerks, wobei das Verarbeitungssystem (400) mindestens einen Prozessor (404) umfasst, der konfiguriert ist zum:

Empfangen eines neuronalen Netzwerks, das eine Vielzahl von Schichten umfasst;

Bilden eines Graphen, der den Datenfluss durch die Vielzahl von Schichten des neuronalen Netzwerks darstellt, wobei der Graph Folgendes umfasst:

eine Vielzahl von Knoten, wobei jeder Knoten der Vielzahl von Knoten für einen Ausgangskanal einer Schicht der Vielzahl von Schichten des neuronalen Netzwerks repräsentativ ist; und

eine oder mehrere Kanten, wobei jede Kante der einen oder mehreren Kanten den potenziellen Fluss von Nicht-Null-Daten zwischen jeweiligen Ausgangskanälen darstellt, die durch ein jeweiliges Paar von Knoten dargestellt werden;

wobei der mindestens eine Prozessor (404) ferner konfiguriert ist zum:

Identifizieren, durch Durchlaufen des Graphen, eines oder mehrerer redundanter Kanäle, die von der Vielzahl von Schichten des neuronalen Netzwerks umfasst sind, wobei ein redundanter Kanal ein Kanal ist, der von einer Schicht der Vielzahl von Schichten des neuronalen Netzwerks umfasst ist, der aus dem neuronalen Netzwerk entfernt werden kann, ohne die Ausgabe des neuronalen Netzwerks zu ändern;

Ausgeben eines komprimierten neuronalen Netzwerks, wobei der eine oder die mehreren identifizierten redundanten Kanäle nicht in dem komprimierten neuronalen Netzwerk vorhanden sind; und

Schreiben des komprimierten neuronalen Netzwerks in einen Speicher (406) zur anschließenden Implementierung;

wobei:

jede Kante der einen oder mehreren Kanten eine abgehende Kante eines ersten Knotens und/oder eine eingehende Kante eines zweiten Knotens sein kann;

eine eingehende Kante eines Knotens repräsentativ für den potenziellen Fluss von Nicht-Null-Daten in den Ausgangskanal, der durch diesen Knoten dargestellt ist, ist;

eine abgehende Kante eines Knotens repräsentativ für den potenziellen Fluss von Nicht-Null-Daten von dem Ausgangskanal, der durch diesen Knoten dargestellt ist, ist; und

das Durchlaufen des Graphen ein Bewerten jedes Knotens der Vielzahl von Knoten in Folge in Abhängigkeit von jeglichen eingehenden und/oder abgehenden Kanten dieses Knotens umfasst, um zu bestimmen, ob der Ausgangskanal, der durch diesen Knoten dargestellt wird, aus dem neuronalen Netzwerk entfernt werden kann, ohne die Ausgabe des neuronalen Netzwerks zu ändern.

13. Computerlesbarer Programmcode, der, wenn er von einem oder mehreren Prozessoren ausgeführt wird, den einen oder die mehreren Prozessoren veranlasst, das Verfahren nach einem der Ansprüche 1 bis 11 durchzuführen.

**Revendications**

1. Procédé mis en œuvre par ordinateur de compression d'un réseau neuronal, le procédé comprenant :

la réception (S502) d'un réseau neuronal comprenant une pluralité de couches ;
la formation (S504) d'un graphe qui représente le flux de données à travers la pluralité de couches du réseau neuronal, le graphe comprenant :

une pluralité de sommets, chaque sommet de la pluralité de sommets étant représentatif d'un canal de sortie d'une couche de la pluralité de couches du réseau neuronal ; et
un ou plusieurs bords, chaque bord des un ou plusieurs bords représentant le flux potentiel de données non nulles entre des canaux de sortie respectifs représentés par une paire de sommets respectifs ;

dans lequel le procédé comprend en outre :

l'identification (S506), en traversant le graphe, d'un ou plusieurs canaux redondants compris par la pluralité de couches du réseau neuronal, dans lequel un canal redondant est un canal, compris par une couche de la pluralité de couches du réseau neuronal, qui peut être retiré du réseau neuronal sans changer la sortie du réseau neuronal ;
la sortie (S508) d'un réseau neuronal compressé dans lequel le ou les canaux redondants identifiés ne sont pas présents dans le réseau neuronal compressé ; et
le stockage du réseau neuronal compressé pour une mise en œuvre ultérieure ;
dans lequel :

chaque bord des un ou plusieurs bords peut être un bord sortant d'un premier sommet et/ou un bord entrant d'un deuxième sommet ;
un bord entrant d'un sommet est représentatif du flux potentiel de données non nulles dans le canal de sortie représenté par ce sommet ;
un bord sortant d'un sommet est représentatif du flux potentiel de données non nulles provenant du canal de sortie représenté par ce sommet ; et

ladite traversée du graphe comprend l'évaluation de chaque sommet de la pluralité de sommets en séquence, en fonction de tout bord entrant et/ou sortant de ce sommet, pour déterminer si le canal de sortie représenté par ce sommet peut être retiré du réseau neuronal sans changer la sortie du réseau neuronal.

2. Procédé selon la revendication 1, le procédé comprenant l'étape consistant à parcourir le graphe dans un ordre de tri topologique inverse et/ou un ordre de tri topologique.

3. Procédé selon la revendication 1 ou 2, comprenant ;

une pluralité de sous-ensembles de sommets, chaque sous-ensemble de sommets de la pluralité de sous-ensembles de sommets étant représentatif d'une couche respective de la pluralité de couches du réseau neuronal, chaque sous-ensemble de sommets de la pluralité de sous-ensembles de sommets comprenant un ou plusieurs sommets, chaque sommet du un ou plusieurs sommets étant représentatif d'un canal de sortie de la couche respective du réseau neuronal ; et
le ou les bords, chaque bord du ou des bords :

connectant deux sommets, lesdits deux sommets étant constitués par des sous-ensembles de sommets différents du graphe ; et
étant représentatif du flux potentiel de données non nulles entre les canaux respectifs des couches respectives du réseau de neurones représentés par ces sommets.

4. Procédé selon la revendication 3, dans lequel :

un sous-ensemble de sommets (920k) de la pluralité de sous-ensembles de sommets est représentatif d'une couche d'ajout de la pluralité de couches du réseau neuronal, ledit sous-ensemble de sommets (920k) comprenant un nombre de sommets égal au nombre de canaux dans chacun d'une pluralité d'ensembles de données d'activation que la couche d'ajout est configurée pour sommer, chacun de ladite pluralité d'ensembles de données d'activation ayant le même nombre de canaux, chaque sommet compris dans ce sous-ensemble de sommets (920k) étant représentatif d'une opération de sommation respective effectuée entre un ensemble de canaux respectifs de la pluralité d'ensembles de données d'activation de sorte que chaque sommet compris dans ce sous-ensemble de sommets (920*k*) est représentatif d'un canal de sortie respectif de la couche d'ajout ; et

chaque sommet compris dans ce sous-ensemble de sommets (920*k*) étant relié, par des arêtes respectives, à des sommets dans des sous-ensembles de sommets différents (919(*k-1a*), 919(*k-1b*), lesdits sommets étant représentatifs de canaux de sortie de couches précédentes de la pluralité de couches du réseau neuronal, lesdits canaux de sortie correspondant aux canaux de l'ensemble de canaux respectifs de la pluralité d'ensembles de données d'activation entre lesquels l'opération de somme est effectuée.

5. Procédé selon les revendications 3 ou 4, dans lequel :

un sous-ensemble de sommets (820*k*) de la pluralité de sous-ensembles de sommets est représentatif d'une couche aplatie de la pluralité de couches du réseau neuronal, ledit sous-ensemble de sommets (920*k*) comprenant *n* groupes de sommets (824-1, 824-2, 824-*3*), *n* étant égal au nombre de canaux de données d'un ensemble de données d'activation sur lequel la couche aplatie est configurée pour effectuer une opération d'aplatissement, chaque groupe de sommets (824-1, 824-2, 824-3) comprenant *m* sommets, *m* étant égal au nombre de valeurs dans chaque canal de données dudit ensemble de données d'activation, chaque sommet compris dans ledit sous-ensemble de sommets (820k) étant représentatif d'un canal de sortie respectif de la couche aplatie ; et
chaque sommet compris par chaque groupe de sommets dans ce sous-ensemble de sommets (820*k*) étant relié, par un bord respectif, à un sommet dans un sous-ensemble de sommets différent (819(*k-1*)), ledit sommet étant représentatif d'un canal de sortie d'une couche précédente de la pluralité de couches du réseau neuronal, ledit canal de sortie correspondant au canal de l'ensemble de données d'activation sur lequel est effectuée la partie de l'opération aplatie représentée par ce groupe de sommets (824-1, 824-2, 824-3) .

6. Procédé selon l'une quelconque des revendications 3 à 5, dans lequel la pluralité de sous-ensembles de sommets sont agencés dans une séquence représentative de la séquence dans laquelle la pluralité de couches du réseau neuronal sont agencées, et dans lequel l'identification du ou des canaux redondants comprend :

l'assignation à chacun des bords entrants des sommets du sous-ensemble de sommets représentatif de la dernière couche séquentiellement de la pluralité de couches du réseau neuronal d'un premier état ;
la traversée de la séquence de sous-ensembles de sommets, à partir du sous-ensemble de sommets représentatif de l'avantdernière couche séquentielle de la pluralité de couches du réseau neuronal, au sous-ensemble de sommets représentatif de la première couche séquentielle de la pluralité de couches du réseau neuronal, l'évaluation de chacun du ou des sommets dans chaque sous-ensemble de sommets pour déterminer si ce sommet a l'au moins un bord sortant affecté au premier état, et :

si oui, l'attribution de chacun des bords entrants de ce sommet du premier état ; et
dans le cas contraire, la non-attribution de chacun des bords entrants de ce sommet au premier état ;
ultérieurement, la traversée de la séquence de sous-ensembles de sommets, à partir du sous-ensemble de sommets représentatif de la première couche séquentielle de la pluralité de couches du réseau neuronal, au sous-ensemble de sommets représentatif de l'avant-dernière couche séquentielle de la pluralité de couches du réseau neuronal, l'évaluation de chacun du ou des sommets dans chaque sous-ensemble de sommets pour déterminer si ce sommet a l'au moins un bord entrant affecté au premier état, et :

si oui, l'attribution de chacun des bords sortants de ce sommet au premier état ; et
dans le cas contraire, le fait de provoquer la non-attribution du premier état à chacun des bords sortants de ce sommet ; et

ultérieurement, l'identification d'un ou plusieurs sommets qui n'ont pas de bords sortants affectés au premier état, ledit un ou lesdits plusieurs sommets identifiés représentant le ou les canaux redondants compris par la pluralité de couches du réseau neuronal.

7. Procédé selon l'une quelconque des revendications 3 à 5, dans lequel la pluralité de sous-ensembles de sommets sont agencés dans une séquence représentative de la séquence dans laquelle la pluralité de couches du réseau neuronal sont agencées, et dans lequel l'identification du ou des canaux redondants comprend :

l'attribution à chacun des bords entrants du ou des sommets compris par le sous-ensemble de sommets représentatif de la première couche séquentielle de la pluralité de couches du réseau neuronal d'un premier état ;
la traversée de la séquence de sous-ensembles de sommets, à partir du sous-ensemble de sommets représentatif de la première couche séquentielle de la pluralité de couches du réseau neuronal, au sous-ensemble de sommets représentatif de l'avant-dernière couche séquentielle de la pluralité de couches du réseau neuronal, l'évaluation de chacun du ou des sommets dans chaque sous-ensemble de sommets pour déterminer si ce sommet a l'au moins un bord entrant affecté au premier état, et :

  si oui, l'attribution de chacun des bords sortants de ce sommet au premier état ; et
  dans le cas contraire, la non-attribution de chacun des bords sortants de ce sommet au premier état ;

ultérieurement, la traversée de la séquence de sous-ensembles de sommets, à partir du sous-ensemble de sommets représentatif de l'avant-dernière couche séquentielle de la pluralité de couches du réseau neuronal, au sous-ensemble de sommets représentatif de la première couche séquentielle de la pluralité de couches du réseau neuronal, l'évaluation de chacun du ou des sommets dans chaque sous-ensemble de sommets pour déterminer si ce sommet a l'au moins un bord sortant affecté au premier état, et :

  si oui, l'attribution de chacun des bords entrants de ce sommet avec le premier état ; et
  dans le cas contraire, le fait de provoquer la non-attribution du premier état à chacun des bords entrants de ce sommet ; et

ultérieurement, l'identification d'un ou de plusieurs sommets qui n'ont pas de bords sortants affectés au premier état, ledit un ou lesdits plusieurs sommets identifiés représentant le ou les canaux redondants compris par la pluralité de couches du réseau neuronal.

**8.** Procédé selon la revendication 5 ou 6, dans lequel la pluralité de sous-ensembles de sommets sont agencés dans une séquence représentative de la séquence dans laquelle la pluralité de couches du réseau neuronal sont agencées, et dans lequel l'identification du ou des canaux redondants comprend :

  l'assignation à chacun des bords entrants des sommets du sous-ensemble de sommets représentatif de la dernière couche séquentiellement de la pluralité de couches du réseau neuronal d'un premier état ;
la traversée de la séquence de sous-ensembles de sommets, à partir du sous-ensemble de sommets représentatif de l'avantdernière couche séquentielle de la pluralité de couches du réseau neuronal, au sous-ensemble de sommets représentatif de la première couche séquentielle de la pluralité de couches du réseau neuronal, l'évaluation de chacun du ou des sommets dans chaque sous-ensemble de sommets pour déterminer si ce sommet a l'au moins un bord sortant affecté au premier état, et :

  si oui, l'attribution de chacun des bords entrants de ce sommet du premier état ; et
  dans le cas contraire, la non-attribution de chacun des bords entrants de ce sommet au premier état ; et

ultérieurement, l'identification d'un ou plusieurs sommets qui n'ont pas de bords sortants affectés au premier état, ledit un ou lesdits plusieurs sommets identifiés représentant le ou les canaux redondants compris par la pluralité de couches du réseau neuronal.

**9.** Procédé selon la revendication 5 ou 7, dans lequel la pluralité de sous-ensembles de sommets sont agencés dans une séquence représentative de la séquence dans laquelle la pluralité de couches du réseau neuronal sont agencées, et dans lequel l'identification du ou des canaux redondants comprend :

  l'attribution à chacun des bords entrants du ou des sommets compris par le sous-ensemble de sommets représentatif de la première couche séquentielle de la pluralité de couches du réseau neuronal d'un premier état ;
la traversée de la séquence de sous-ensembles de sommets, à partir du sous-ensemble de sommets représentatif de la première couche séquentielle de la pluralité de couches du réseau neuronal, au sous-ensemble de sommets représentatif de l'avant-dernière couche séquentielle de la pluralité de couches du réseau neuronal, l'évaluation de chacun du ou des sommets dans chaque sous-ensemble de sommets pour déterminer si ce sommet a l'au moins un bord entrant affecté au premier état, et :

  si oui, l'attribution de chacun des bords sortants de ce sommet au premier état ; et
  dans le cas contraire, la non-attribution de chacun des bords sortants de ce sommet au premier état ; et

ultérieurement, l'identification d'un ou plusieurs sommets qui n'ont pas de bords sortants affectés au premier état, ledit un ou lesdits plusieurs sommets identifiés représentant le ou les canaux redondants compris par la pluralité de couches du réseau neuronal.

10. Procédé selon l'une quelconque des revendications précédentes, comprenant en outre la sortie d'une description lisible par ordinateur du réseau neuronal compressé qui, lorsqu'elle est mise en œuvre au niveau d'un système pour mettre en œuvre un réseau neuronal, provoque l'exécution du réseau neuronal compressé.

11. Procédé selon l'une quelconque des revendications précédentes, comprenant en outre la configuration d'une logique matérielle pour mettre en œuvre le réseau neuronal compressé, dans lequel la logique matérielle comprend un accélérateur de réseau neuronal.

12. L'invention concerne un système de traitement (400) destiné à comprimer un réseau neuronal, le système de traitement (400) comprenant l'au moins un processeur (404) configuré pour :

recevoir un réseau neuronal comprenant une pluralité de couches ;
former un graphe qui représente le flux de données à travers la pluralité de couches du réseau neuronal, le graphe comprenant :

une pluralité de sommets, chaque sommet de la pluralité de sommets étant représentatif d'un canal de sortie d'une couche de la pluralité de couches du réseau neuronal ; et
un ou plusieurs bords, chaque bord des un ou plusieurs bords représentant le flux potentiel de données non nulles entre des canaux de sortie respectifs représentés par une paire de sommets respectifs ;
dans lequel l'au moins un processeur (404) est en outre configuré pour :

identifier, en traversant le graphe, d'un ou plusieurs canaux redondants compris par la pluralité de couches du réseau neuronal, dans lequel un canal redondant est un canal, compris par une couche de la pluralité de couches du réseau neuronal, qui peut être retiré du réseau neuronal sans changer la sortie du réseau neuronal ;
sortir un réseau neuronal comprimé dans lequel le ou les canaux redondants identifiés ne sont pas présents dans le réseau neuronal comprimé ; et
écrire le réseau neuronal compressé dans la mémoire (406) pour une mise en œuvre ultérieure ;
dans lequel :

chaque bord des un ou plusieurs bords peut être un bord sortant d'un premier sommet et/ou un bord entrant d'un deuxième sommet ;
un bord entrant d'un sommet est représentatif du flux potentiel de données non nulles dans le canal de sortie représenté par ce sommet ;
un bord sortant d'un sommet est représentatif du flux potentiel de données non nulles à partir du canal de sortie représenté par ce sommet ; et
ladite traversée du graphe comprend l'évaluation de chaque sommet de la pluralité de sommets en séquence, en fonction de tout bord entrant et/ou sortant de ce sommet, pour déterminer si le canal de sortie représenté par ce sommet peut être retiré du réseau neuronal sans changer la sortie du réseau neuronal.

13. Code lisible par ordinateur qui, lorsqu'il est exécuté par un ou plusieurs processeurs, amène les un ou plusieurs processeurs à effectuer le procédé selon l'une quelconque des revendications 1 à 11.

**FIGURE 1**

**FIGURE 2a**

**FIGURE 2b**

**FIGURE 2c**

FIGURE 3

**FIGURE 4**

**FIGURE 5**

FIGURE 6a

FIGURE 6b

FIGURE 7b

FIGURE 7a

FIGURE 8a

FIGURE 8b

FIGURE 9b

FIGURE 9a

**FIGURE 10a**

**FIGURE 10b**

EP 4 471 671 B1

**1106k**

|   | 1 | 2 | 3 | 4 |
|---|---|---|---|---|
| 1 | X | X |   |   |
| 2 |   |   |   |   |
| 3 | X |   |   | X |
| 4 |   |   | X |   |
| 5 |   | X |   |   |

$\underline{P}\,/\,\underline{A}$

**1106(k+1)**

|   | 1 | 2 | 3 | 4 | 5 |
|---|---|---|---|---|---|
| 1 |   | X |   |   | X |
| 2 |   |   | X |   |   |
| 3 | X |   |   |   | X |

**FIGURE 11a**

1120k $v_1^k$ $v_2^k$ $v_3^k$ $v_4^k$ $v_5^k$

1138a-e

1136P/A $v_1^{P/A}$ $v_2^{P/A}$ $v_3^{P/A}$ $v_4^{P/A}$ $v_5^{P/A}$

$v_1^{k+1}$ $v_2^{k+1}$ $v_3^{k+1}$ 1121(k+1)

**FIGURE 11b**

1120k $v_1^k$ $v_2^k$ $v_3^k$ $v_4^k$ $v_5^k$

$v_1^{k+1}$ $v_2^{k+1}$ $v_3^{k+1}$ 1121(k+1)

**FIGURE 11c**

FIGURE 12a

FIGURE 12b

FIGURE 12c

FIGURE 12d

FIGURE 12e

FIGURE 12f

FIGURE 12g

FIGURE 12h

FIGURE 12i

**FIGURE 13a**

**FIGURE 13b**

**FIGURE 13c**

**FIGURE 13d**

**FIGURE 13e**

**FIGURE 13f**

**FIGURE 13g**

**FIGURE 14a**

**FIGURE 14b**

**FIGURE 14c**

**FIGURE 14d**

**FIGURE 14e**

**FIGURE 14f**

**FIGURE 14g**

Input

Input

1502/1506*(k-1)*

1502'/1506'*(k-1)*

|  | E | F | G |
|---|---|---|---|
| H | X |  |  |
| I |  |  |  |
| J |  | X |  |
| K |  |  | X |
| L |  |  | X |

|  | E | F | G |
|---|---|---|---|
| H | X |  |  |
| K |  |  | X |

1502/1506*k*

1502'/1506'*k*

|  | H | I | J | K | L |
|---|---|---|---|---|---|
| M | X | X |  |  |  |
| N |  | X | X |  |  |
| O |  | X |  |  |  |
| P |  |  |  |  |  |
| Q |  |  |  | X |  |

|  | H | K |
|---|---|---|
| M | X |  |
| Q |  | X |

1502/1506*(k+1)*

1502'/1506'*(k+1)*

|  | M | N | O | P | Q |
|---|---|---|---|---|---|
| R | X |  |  |  |  |
| S |  |  |  | X |  |
| T |  |  |  |  | X |

|  | M | Q |
|---|---|---|
| R | X |  |
| S |  |  |
| T |  | X |

Output

Output

**FIGURE 15a**

**FIGURE 15b**

1602       1604

CPU

GPU

1614

Display ⎯ 1616

Speakers ⎯ 1618

Camera ⎯ 1622

1620

Memory

NNA

1606       1608

**FIGURE 16**

1704     1702     1706

IC definition dataset → Layout processing → Circuit layout definition → Integrated circuit generation → Integrated circuit

**FIGURE 17**

**EP 4 471 671 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2308120 A

### Non-patent literature cited in the description

- Graph-adaptive pruning for efficient inference of convolutional neural networks. **WANG**. ARXIV.ORG. CORNELL UNIVERSITY LIBRARY, 21 November 2018